# EUROPÄISCHE PATENTSCHRIFT

(11) **EP 0 020 494 B1**
(45) Veröffentlichungstag und Bekanntmachung des Hinweises auf die Patenterteilung: **18.04.1984**
(21) Anmeldenummer: 79901333.9
(22) Anmeldetag: 09.10.1979
(51) Int. Cl.: G03B 27/73, G03F 3/08

(54) **VERFAHREN ZUR REPRODUKTION VON ORIGINALVORLAGEN WELCHE BEZÜGLICH IHRES FARBGEHALTES NACH EINEM DREIBEREICHTSVERFAHREN ABGETASTET WERDEN**
REPRODUCTIVE PROCEDURE FOR ORIGINAL MODELS, WHICH ARE EXPLORED IN AS MUCH AS CONCERNS THEIR DEGREE OF COLORING, BY A THREE COMPONENT METHOD
PROCEDE DE REPRODUCTION DE MODELES ORIGINAUX QUI SONT EXPLORES, EN CE QUI CONCERNE LEUR TENEUR EN COULEUR, SELON UN PROCEDE A TROIS COMPOSANTES

(30) Priorität: 10.10.1978 DE 2844158
(43) Veröffentlichungstag der Anmeldung: 07.01.1981
(73) Patentinhaber: BURDA VERWALTUNGS KG, D-7600 Offenburg (DE)
(72) Erfinder: EICHLER, Helmut, D-7601 Durbach (DE); VORHAGEN, Friedrich, Wilhelm, D-5190 Stolberg-Atsch (DE); HÜTTEN, Hans-Michael, D-5102 Würselen-Broichweiden (DE)
(74) Vertreter: Diehl, Hermann O. Th., Dr.
(86) Internationale Anmeldenummer: DE7900121
(87) Internationale Veröffentlichungsnummer: WO8000753

## Beschreibung

Die Erfindung betrifft ein Verfahren zur Reproduktion von Originalvorlagen gemäss dem Oberbegriff des Hauptanspruchs.

Beim Ausgang technischer Reproduktionssysteme, insbesondere solcher, die im wesentlichen oder vollständig auf einer subtraktiven Farbmischung beruhen, entsteht das von der Originalvorlage reproduzierte Bild als Ergebnis einer Farbsynthese und wird als solches dem Gesichtssinn des Betrachters angeboten. Die Reproduktion wird dabei nach Umwandlung der meist elektrischen Signale beispielsweise in Farbstoffkonzentrationen als Farbdruck, fotografisches Papierbild oder Diapositiv erzeugt. Unter der Voraussetzung, dass die Übertragung bzw. Speicherung der elektrischen Signale nahezu ideal, d. h. störungs- und verzerrungsfrei erfolgt, sind die Farbwiedergabeeigenschaften der Reproduktion im wesentlichen von der Farbanalyse und der üblicher Weise als Farbmischung bezeichneten Farbsynthese bestimmt. Die Farbmischung kann als sogenannte substraktive Farbmischung, wie beispielsweise beim Farbfilm, oder als wesentlich subtraktive Mischform, wie beispielsweise bei verschiedenen Druckverfahren, erfolgen. Die für die Farbmischung erforderlichen Steuersignale werden durch eine Analyse der Originalvorlage gewonnen, wobei diese in der Regel punktweise abgetastet und bezüglich ihres Farbgehaltes analysiert wird. Da die Farbe einer Vorlage keine physikalische Eigenschaft derselben, sondern eine Sinnesempfindung ist, müssen bei der Analyse die sinnesphysiologischen Eigenschaften des menschlichen Gesichtssinnes berücksichtigt werden. Bei dieser Farbanalyse, bei der aus dem von jedem Bildpunkt ausgehenden Farbreiz elektrische Signale erzeugt werden, ist daher darauf zu achten, dass diese Signale, soll das Reproduktionssystem das Original wie ein Farbnormalsichtiger «sehen», durch eine lineare Beziehung mit den Grundfarbwerten verknüpft sind. Nur bei Erfüllung dieser Bedingung sind die Abtastsignale proportional zu Farbwerten in einem entsprechend gewählten Primärvalenzsystem, so dass sie als Farbwertsignale bezeichnet werden können. Bei den technischen Reproduktionssystemen erfolgt die Gewinnung der Farbwertsignale im allgemeinen nach dem sogenannten Dreibereichsverfahren. Das an sich genaueste Verfahren zur Bestimmung einer Farbvalenz, das Spektralverfahren, erfordert für die Durchführung der Messungen einen zu grossen Zeitbedarf, um bei technischen Reproduktionssystemen einsetzbar zu sein. Das dritte bekannte Verfahren zur Bestimmung einer Farbvalenz, das sogenannte Gleichheitsverfahren, ist zur Analyse bei technischen Reproduktionssystemen prinzipiell nicht geeignet, da bei diesem das Gleichheitsurteil einer farbnormalsichtigen Person notwendig ist, welche zu der zu bestimmenden Farbvalenz aus einem Farbatlas oder einer Farbskala eine genau gleichsehende Farbprobe heraussuchen muss. Dieses Verfahren wird jedoch im graphischen Gewerbe bei der sogenannten Abmusterung angewandt, bei der eine manuelle Retusche an den Farbauszügen vorgenommen wird.

Bei dem Dreibereichsverfahren werden ähnlich wie beim menschlichen Auge drei Signale nach drei spektral verschiedenen Wirkungsfunktionen aus dem Farbreiz mit drei diskreten Empfängern bestimmt, die im allgemeinen aus fotoelektrischen Wandlern und vor diesen angebrachten Korrekturfiltern bestehen. Die effektiven Spektralempfindlichkeiten der Empfänger, einschliesslich der Korrekturfilter, sollten dabei mit irgendwelchen Spektralwertfunktionen übereinstimmen, die sich aus den drei Grundspektralwertkurven des Normalbeobachters (DIN 5033) durch eine einfache lineare Beziehung errechnen lassen. Bei der Analyse werden des weiteren auch die Gesetzmässigkeiten des gewählten Farbmischungssystems der dabei verwendeten Primärfarben berücksichtigt. Auf eine Nichtbeachtung der Gesetzmässigkeiten des Farbensehens zurückführbare Fehler, d.h. Fehler, die auf einer Nichteinhaltung einer farbvalenzmetrischen Wiedergabe beruhen, sind nicht korrigierbar und führen zu einer allgemeinen Verschlechterung der Farbwiedergabeeigenschaften des Reproduktionssystems.

Der Erfindung liegt die Aufgabe zugrunde, die Voraussetzungen für eine farbvalenzmetrisch richtige Reproduktion zu schaffen, so dass einander entsprechende Bildpunkte des Originales und der Wiedergabe, abgesehen von beabsichtigten und gezielten Änderungen, gleiche Farbvalenzen besitzen und unter gleichen Betrachtungsbedingungen von einer farbnormalsichtigen Person als völlig gleichaussehend empfunden werden. Diese Aufgabenstellung beruht auf der Erkenntnis, dass lediglich bei Erreichung dieses Zieles vom gleichen Original nach unterschiedlichen Farbwiedergabeverfahren hergestellte Reproduktionen mit dem Original und untereinander sinnvoll vergleichbar sind. Eine derartige Vergleichbarkeit von Reproduktionen, die nach unterschiedlichen Wiedergabeverfahren hergestellt sind - sei es auf der Basis additiver, rein subtraktiver oder im wesentlichen subtraktiver Farbmischungen, wie z. B. von Fernsehmonitordarstellungen, Hardcopies, Dias oder Druckerzeugnissen -, ist jedoch immer dann von Bedeutung, wenn Aussagen über die Farbwiedergabe bei einer Art der Reproduktion repräsentativ für eine andere Art der Reproduktion sein sollen. Besonders wichtig ist dies im Zusammenhang mit der Herstellung von Druckerzeugnissen, wo Auftraggeber und Drucker aus Gründen der Arbeits-, Zeit- und Kostenersparnis bereits vor Erstellung von Farbauszügen bzw. von Andrucken die endgültige Farbwiedergabe beurteilen möchten. Auch dann, wenn hierbei eine bewusste Änderung der Gesamtfarbwiedergabe, die Erzielung eines Farbstiches oder die gezielte Änderung in der Farbwiedergabe von Details angestrebt wird, ist eine farbvalenzmetrisch richtige Reproduktion die wichtigste Voraussetzung, um die gleiche Wirkung dieser Eingriffe bei Reproduktionen nach verschiedenen Wiedergabeverfahren zu erhalten, beispielsweise auf einem Fernsehmonitor und in den Farbauszügen und damit in den endgültigen Farbdrucken.

Die Erfindung schafft diese Voraussetzungen für eine farbvalenzmetrisch richtige Reproduktion durch den Vorschlag eines Verfahrens zur Reproduktion von Originalvorlagen mit insbesondere nicht metamerer Farbzusammensetzung, bei dem die jeweilige Originalvorlage bezüglich ihres Farbgehalts nach einem Dreibereichsverfahren abgetastet und nach einer Verarbeitung der beim Abtastvorgang erhaltenen Abtastsignale durch eine Farbmischung mittels eines im wesentlichen oder vollständig einer subtraktiven Farbmischung unterliegenden Farbwiedergabesystems reproduziert wird, wobei die Verarbeitung der Abtastsignale deren Anpassung an das Farbwiedergabesystem und/oder der Änderung der Gradation und/oder der Veränderung der Farbwiedergabe einzelner Farben im Gesamtbild oder in diskreten Bildbereichen dient; dieses Verfahren ist dadurch gekennzeichnet, dass die Abtastsignale in drei farbvalenzmetrisch korrigierte Primärfarbsignale umgewandelt werden und dass diese farbvalenzmetrisch korrigierten Primärfarbsignale anstatt der ursprünglichen Abtastsignale verarbeitet werden.

Unter einer «nicht metameren Farbzusammensetzung» wird im Zuge dieser Anmeldung verstanden, dass in der Originalvorlage keine bedingt gleichen Farben vorliegen. Unter der Bezeichnung «Primärfarbsignale» werden Signale verstanden, welche farbvalenzmetrischen Anteilen in irgendeinem Primärvalenzsystem entsprechen. Unter der Bezeichnung «Farbwiedergabesysteme» werden beispielsweise elektrische Bildschirmsysteme, fotografische Aufsichtsbilder, fotoelektrische Hardkopien, Diapositive, nach dem Prinzip der additiven Farbmischung arbeitende Druckverfahren, wie der Offsetdruck, sowie nach der subtraktiven Farbmischung arbeitende Druckverfahren, wie der Tiefdruck, einschliesslich entsprechender Vorstufen für die Herstellung von Druckauszügen, beispielsweise mittels Scanner oder Gravurtechniken, verstanden.

Das erfindungsgemässe Verfahren ermöglicht es, von einer elektronischen Abtastvorrichtung oder Kamera, welche die Originalvorlage im Dreibereichsverfahren abtastet, gleichzeitig oder nacheinander mehrere unterschiedliche Reproduktionssysteme, von denen zumindest eines im wesentlichen oder vollständig der subtraktiven Farbmischung entspricht, derart anzusteuern, dass die von ihnen erzeugten Reproduktionen der Originalvorlage von einem farbnormalsichtigen Betrachter als dem Original entsprechend und gleichaussehend betrachtet werden. Dieser Vorteil kommt besonders deutlich zum Tragen, wenn das Verfahren bei für die Druckindustrie neuerdings angebotenen Systemen Verwendung findet, bei denen die farblichbildnerische Wirkung von Originalvorlagen im Druck vorab auf einem Fernsehbildschirm simuliert und gleichzeitig Möglichkeiten zur kontrollierten Korrektur gegeben werden sollen. Diese bekannten Vorrichtungen fassen den gesamten Übertragungskanal zusammen und enthalten eine Vielzahl von Eingriffsmöglichkeiten zur Verbiegung und Verschiebung von Kennlinien und Mischkanäle, mittels derer ohne Berücksichtigung der farbvalenzmetrischen Grundlagen und in Anlehnung an die bisher empirisch bzw. nach der Gleichheitsmethode vorgenommenen Farbkorrekturen, Mischungen von Primär- und Sekundärfarben vorgenommen werden. Das erstrebte Ziel dieser Vorrichtungen, eine Aussage über die farbliche Wirkung eines gedruckten Bildes machen zu können, ohne den kostenintensiven Druckprozess von der Ätzung bzw. der Gravur der Druckzylinder bis hin zur Inbetriebnahme der Druckmaschine durchführen zu müssen, wird hierdurch nicht oder nur bedingt erreicht. Das auf dem Bildschirm von einer geübten Bedienungsperson subjektiv optimal eingestellte Bild wird dieser zwar Anhaltspunkte geben, wie das endgültig gedruckte Bild aussieht und zu diesem auch in einer gewissen Korrelation stehen, aufgrund der die Bedienungsperson Aussagen über das endgültige Druckergebnis machen und unter Umständen auch gezielte Eingriffe vornehmen kann. Die gewünschte Objektivierung ist jedoch damit nicht gegeben, da die Ergebnisse und die Art der vorgenommenen Beeinflussung von einer Bedienungsperson zur anderen variieren.

Gemäss einer bevorzugten Ausgestaltung des Verfahrens werden farbvalenzmetrisch korrigierte Primärfarbsignale vor ihrer Weiterverarbeitung zwischengespeichert, so dass sie von dort beliebig abgerufen werden können.

Es hat sich als besonders günstig erwiesen, dass die farbvalenzmetrisch korrigierten Primärfarbsignale in dem Farbwiedergabesystem angepasste Farbstoffkonzentrationssignale oder Auszugsdichtesignale umgeformt und erst an diesen Signalen gezielte Eingriffe der Farbwiedergabe vorgenommen werden. Dies kommt der bisher üblichen Handhabung bei der sogenannten Abmusterung nahe, so dass sich die Bedienungspersonen bei der Einführung des Verfahrens nicht erheblich umgewöhnen müssen.

Bei der Weiterbildung dieses Verfahrens werden aus den durch gezielte Eingriffe variierten Farbstoffkonzentrations-Signalen oder Auszugsdichte-Signalen entsprechend variierte Primärfarbsignale gebildet, mittels derer und der restlichen unverändert gebliebenen abgespeicherten Primärfarbsignale durch additive Farbmischung ein Monitorbild erzeugt wird, welches dem Operator die durch die gezielten Eingriffe in die Farbstoffkonzentrationssignale oder die Auszugsdichte Signale bewirkten Änderungen in der zugehörigen, durch die im wesentlichen subtraktive Farbmischung des Farbwiedergabesystems erzeugten Reproduktion der Originalvorlage aufzeigt. Hierdurch lässt sich ein Scannen abgemusterter Auszugsplatten oder ein Gravieren von Druckplatten und die Herstellung von Probeabzügen vermeiden. Bei Verwendung eines durch eine Anpassungsmatrix angepassten Fernsehmonitors können gleichzeitig farbvalenzmetrisch richtige Bilder der nach dem Dreibereichsverfahren abgetasteten Originalvorlage erzielt werden, welche Basis für die Vornahme der gezielten Eingriffe in die Farbstoffkonzentrationssignale oder Auszugsdichte-Signale sind.

Zweckmässigerweise werden die der Originalvorlage farbgetreu entsprechenden, farbvalenzmässig korrigierten Primärfarbsignale dabei unverändert gespeichert, bis das Monitorbild dem gewünschten Reproduktionsergebnis entspricht. Anschliessend werden die neuen Werte abgespeichert, anhand derer die Druckplatten hergestellt werden.

Weitere Ausgestaltungen der Erfindung betreffen die Schaffung von wirksamen und einfach durchzuführenden Farbanalyse- bzw. Farbsyntheseverfahren, mittels derer von einem Original farbvalenzmetrisch richtige Primärfarbsignale und mit Hilfe dieser wiederum farbvalenzmetrisch richtige Reproduktionen auch bei subtraktiver oder im wesentlichen subtraktiver Farbmischung erhalten werden, sowie hierzu geeignete Vorrichtungen.

Bei der Reproduktion von Originalvorlagen mittels eines Dreibereichsverfahrens hinsichtlich ihres Farbgehaltes gibt es verschiedene Ursachen, welche die Farbwiedergabeeigenschaften verschlechternd beeinflussen können. Dies sind zum einen systembedingte, nicht korrigierbare Fehler, die bei der Farbsynthese entstehen, wie beispielsweise dann, wenn bei einem additiven Farbwiedergabesystem mit vorgegebenen Primärvalenzen Farben reproduziert werden sollen, zu deren Nachmischung mindestens ein negativer Farbwert erforderlich wäre. Ähnliches gilt für subtraktive Farbmischungen, wenn zur Reproduktion von Farben mindestens eine negative Farbstoffkonzentration erforderlich wäre. Diese Fehler sind unvermeidbar und durch keine irgendwie gearteten Massnahmen korrigierbar. Ihr Einfluss auf die Farbwiedergabeeigenschaften eines Systems ist jedoch meistens gering, da die Zahl der in der Natur vorkommenden stark gesättigten Farben begrenzt ist. Daneben entstehen vornehmlich bei der Farbanalyse bedingt korrigierbare Fehler, welche darauf zurückzuführen sind, dass die theoretisch erforderlichen spektralen Kanalempfindlichkeiten infolge unzulänglicher Eigenschaften der optischen und optoelektronischen Bauelemente mit vertretbarem Aufwand nicht exakt realisierbar sind. Wenn man sich anderseits in Anpassung an die Kanalempfindlichkeiten der verfügbaren Abtastsysteme auf virtuelle Primärvalenzsysteme mit nur positiven spektralen Empfindlichkeitskurven beschränkt, was an sich farbvalenzmetrisch exakte Farbwertsignale liefern würde, ist die Nachschaltung einer elektronischen Matrizierung notwendig, wie sie z.B. für das Farbfernsehen in «Farbmetrik und Farbfernsehen» von H. Lang, R. Oldenbourg Verlag, München, 1978, beschrieben ist und die dann die für die Empfänger-Primärfarben erforderlichen Farbwertsignale ermittelt. Zur korrekten Matrizierung, insbesondere des roten und des grünen Kanales, sind jedoch relativ grosse negative Matrixkoeffizienten erforderlich, die betragsmässig in der gleichen Grössenordnung wie die Koeffizienten der Hauptdiagonale liegen, was bedeutet, dass sich zwar die Farbwertsignale subtrahieren, ihre nicht korrelierten Rauschanteile jedoch addieren. Dies führt zu einer Verschlechterung des Störabstandes, die ebenfalls nicht hingenommen werden kann. Da von einer fehlerhaften Farbanalyse alle Farben verfälscht registriert werden, ergibt sich eine verschlechterte Farbwiedergabe des Gesamtsystems, die nicht erwünscht ist. Im Vergleich hierzu spielt eine dritte Gruppe von Fehlern, die auf nicht idealen Eigenschaften und Störeinflüssen der elektronischen Signalverarbeitung bzw. Übertragung zurückzuführen sind, keine erhebliche Rolle, da diese Fehler durch spezielle Schaltungsmassnahmen bei den gegenwärtig am Markt befindlichen kommerziellen Geräten sehr klein gehalten sind. Für die gewünschte farbvalenzmässig korrekte Reproduktion von Originalvorlagen ist es daher besonders wichtig, die bei einer Nichtbeachtung der Gesetzmässigkeiten des Farbsehens entstehenden und nicht korrigierbaren Fehler bei der Farbanalyse möglichst klein zu halten.

Hierzu wird ein Verfahren vorgeschlagen (vgl. Anspruch 6), bei dem zur Gewinnung der farbvalenzmetrisch korrigierten Primärfarbsignale jedes Abtastsignal zwecks Korrektur des Grauabgleichs einer Gradationsentzerrung unterzogen wird und bei dem mit den gradationsentzerrten Abtastsignalen zur Verbesserung der Farbwiedergabeeigenschaften bunter Objektfarben eine lineare Transformation durchgeführt wird.

Das Problem einer farbvalenzmässig exakten Wiedergabe, bei der die einzelnen Abtastsysteme bezüglich ihrer Spektralempfindlichkeit den Zapfen des menschlichen Auges entsprechen müssten, so dass auch bedingt gleiche Farben farbvalenzmetrisch richtig wie von einem farbennormalsichtigen Betrachter gesehen werden, vereinfacht sich bei den meisten technischen Reproduktionssystemen, bei denen als Originalvorlagen fast ausschliesslich Reproduktionen verwendet werden, die als solche keine metamere Farbzusammensetzung aufweisen. Dies gilt beispielsweise bei Film- und Diaabtastern, sowie beim Scannen von Farbfilmen und fotografischen Aufsichtsbildern, die jeweils aus drei Farbkomponenten durch subtraktive oder additive Farbmischung aufgebaut sind. Das erfindungsgemässe Verfahren eignet sich besonders für diese Fälle.

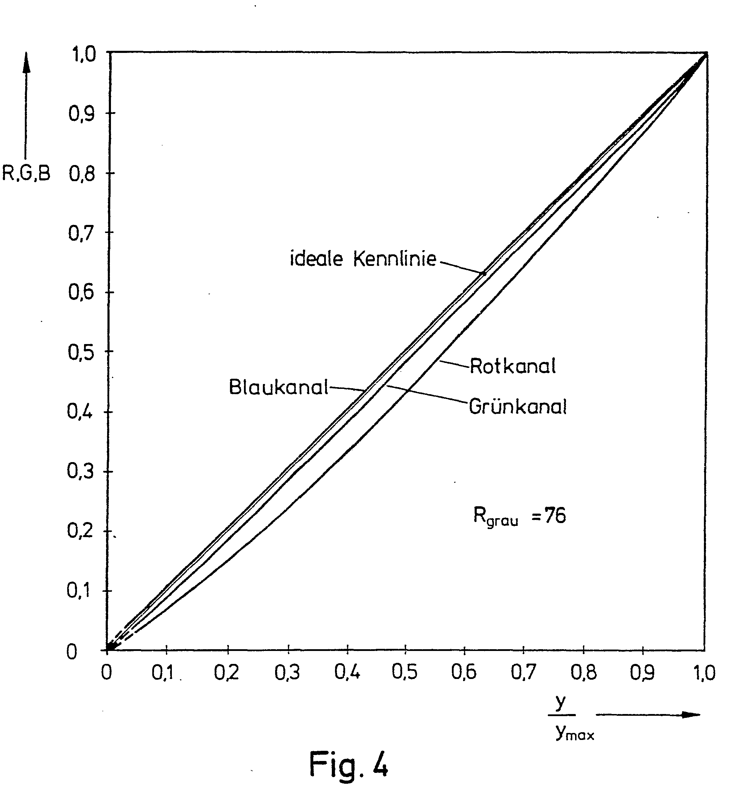

Die bei dem Verfahren nach Anspruch 6 zur Anwendung kommende Gradationsentzerrung ist nicht zu verwechseln mit der beim Fernsehen bekannten Gradationsvorentzerrung zur Kompensation der Nichtlinearität der Bildröhrenkennlinie auf der Wiedergabeseite. Die Gradationsentzerrung, im Rahmen dieser Anmeldung auch y-Korrektur genannt, soll die Nichtlinearitäten zwischen den Mess- und Farbwerten (Fig. 4) näherungsweise kompensieren, was beispielsweise dadurch erfolgen kann, dass man exakte Kennlinien mittels geeigneter Interpolationsverfahren, z. B. Spline-Interpolation, ersetzt. Die Gradationsentzerrung kann auch durch Funktionsgeneratoren vorgenommen werden, welche die Farbwertsignale gegenläufig vorverzerren, so dass Nichtlinearitäten kompensiert werden. Dieses Vorgehen ist jedoch nicht so zweckmässig, da derartige Schaltungen zu viele Einstellmöglichkeiten besitzen, welche die Wahrscheinlichkeiten von Bedienungsfehlern vergrössern. Die Gradationsentzerrung bewirkt eine helligkeitsrichtige, sowie farbstichfreie Wiedergabe von unbunten Bildpartien und erfüllt somit eine der wesentlichen Forderungen, die an Reproduktionssysteme zu stellen sind, da das menschliche Auge kleinere Fehler bei der Grauwiedergabe besser erkennt als vergleichbare Fehler an bunten Stellen.

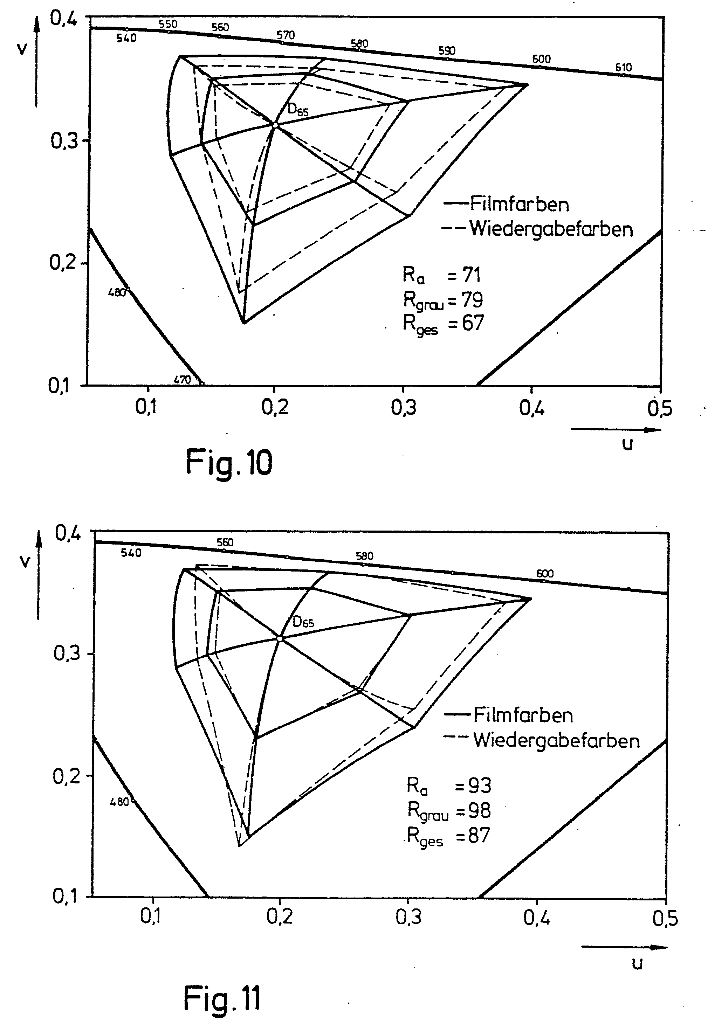

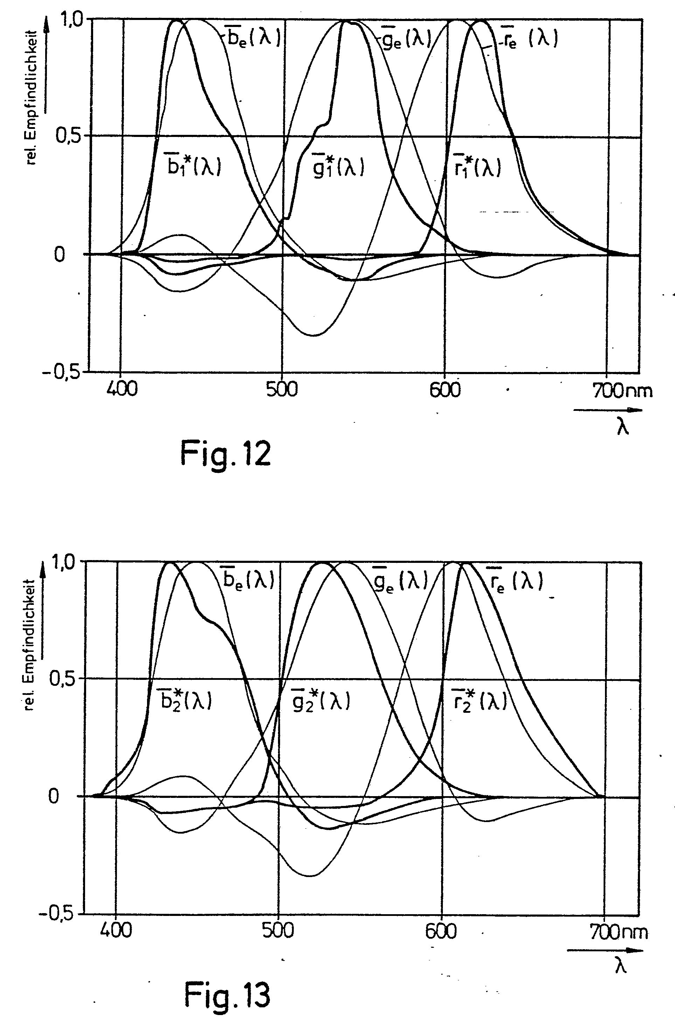

Die Verbesserung der Farbwiedergabeeigenschaften bunter Objektfarben über die Durchführung einer linearen Transformation der gradationsentzerrten Abtastsignale, d.h. eine lineare Matrizierung desselben, ist insofern besonders günstig, als diese schaltungstechnisch leicht zu realisieren ist und die realen spektralen Empfindlichkeitskurven der Abtaster effektiver an die EBU-Spektralwertkurven (Be (λ)..., re (λ) in Fig. 11 und Fig. 12) angepasst werden können. Zum anderen erhält man hierdurch eine erste lineare Nährung des nicht idealen Zusammenhanges zwischen den verfälschten Abtastsignalen und den entsprechenden farbvalenzmetrisch exakten Werten.

Das Verfahren zur Gewinnung farbvalenzmetrisch korrigierter Primärfarbsignale ist gemäss einer besonders vorteilhaften Weiterbildung dadurch gekennzeichnet, dass die Abtastsignale vor der Gradationsentzerrung einem Weissabgleich unterzogen werden und/oder dass die Gradationsentzerrung durch Potenzierung der Abtastsignale mit einem Exponent-y-Wert erfolgt, dessen Kehrwert gleich der Steigerung der Übertragungskennlinie des jeweiligen unkorrigierten Abtasters für unbunte Filmfarben der Originalvorlage ist, wenn die Übertragunskennlinie die Abhängigkeit des Logarithmus des Kehrwertes der Abtastsignale von den Dichten der zu reproduzierenden Graustufen wiedergibt.

Die Bezeichnung «Weissabgleich» bedeutet, dass jedes der drei Ausgangssignale eines Dreibereichsabtasters so verstärkt wird, dass beim Abtasten einer Vorlage minimaler Dichte (z.B. D = 0,35) alle drei Signale ein und denselben vorgegebenen Maximalwert haben.

Die Bezeichnung «Gamma-Korrektur» bedeutet, dass jedes dieser auf Weiss abgeglichenen Signale in Abhängigkeit von seiner Grösse so verstärkt wird (z. B. durch logarithmische Verstärker), dass für jeden beliebigen Grauwert alle drei Signale jeweils gleich gross sind.

Bei der Vornahme des Weissabgleiches werden die Verstärkungsfaktoren der einzelnen Kanäle so bestimmt, dass die Abtastsignale gleich gross und auf ihren maximal zulässigen Wert gebracht wurden. Die y-Werte hängen jeweils vom Abtaster und der Farbzusammensetzung der Originalvorlage ab, bei einer Filmabtastung von der Kombination Abtaster/Film. Durch die Vornahme der vorgenannten besonders einfachen Gradationsentzerrung werden die Farbwiedergabeeigenschaften von unbunten Farben nahezu ideal, ohne dass die Farbwiedergabeeigenschaften bunter Farben durch diese Massnahmen beeinflusst werden. Der Exponent, d. h. die y-Werte, können experimentell dadurch bestimmt werden, dass in der abzutastenden Vorlage ein Graukeil mit mindestens drei - schwarz, weiss und ein mittleres Grau - unbunten Stellen verwendet wird.

Bei Kenntnis der Daten des als Originalvorlage verwendeten Materials werden die Exponenten, d.h. die y-Werte, vorzugsweise aus den spektralen Daten des jeweiligen Abtasters und den Farbstoffen der Originalvorlage berechnet.

Um den Rauschabstand zur Verbesserung der Farbwiedergabeeigenschaften bunter Objektfarben in der die lineare Transformation bewirkenden Matrixschaltung zu verringern, wird bei Festlegung der Matrixkoeffizienten darauf geachtet, dass keine negativen Koeffizienten zugelassen werden, die grösser sind als etwa das 0,3fache des Wertes der Hauptdiagonale. Als besonders zweckmässig hat es sich erwiesen, wenn bei der die lineare Transformation bewirkenden Matrix Matrixkoeffizienten für bestimmte vorgegebene Farben optimiert werden. Es lässt sich zeigen, dass die optimalen Matrixkoeffizienten unabhängig von den Spektraleigenschaften der Originalvorlage sind. Sie sind jedoch in gewisser Weise durch die Auswahl der Testfarben beeinflusst, die man bevorzugt derart wählt, dass die bei der Reproduktion wichtigsten Farben richtig wiedergegeben werden. Die Auswahl dieser Farben hängt von dem jeweiligen Anwendungsfall ab. Zweckmässigerweise werden die Matrixkoeffizienten derart bestimmt, dass die spektralen Empfindlichkeitskurven der Abtaster bestmöglichst an farbvalenzmetrisch korrekte Spektralwertkurven für additive Primärvalenzen, beispielsweise an die EBU-Kurven oder entsprechende andere Kurven, angenähert werden, wobei man zweckmässigerweise dafür sorgt, dass die Summe der Differenzenquadrate zwischen Soll- und Istkurven Wellenlänge für Wellenlänge minimal wird. Eine derartige Bewertungsfunktion ist bei Dreibereichsfarbmessgeräten sowie elektronischen Farbfernsehkameras zweckmässig, da dort die spektralen Remissions- bzw. Transmissionseigenschaften der zu analysierenden Farben unbekannt sind.

Die Optimierung der Matrixkoeffizienten wird für Bezugsfarben durchgeführt. Gemäss einer anderen besonders vorteilhaften Ausführungsform des Verfahrens erfolgt die Optimierung für zumindest drei subtraktive Grundfarben, vorzugsweise gleicher visueller Helligkeit, z.B. Gelb, Cyan und Magenta, und drei aus ihnen gebildete Mischfarben erster Ordnung. Bereits hierdurch ergibt sich eine erhebliche Verbesserung der Farbwiedergabeeigenschaften. Wenn man die Anzahl der vorgegebenen Farben erhöht, verbessert sich auch die Qualität der Farbkorrektur, wobei mit zunehmender Anzahl die Abhängigkeit von den jeweils gewählten Farben abnimmt. Zweckmässigerweise sind Bestandteile eines jeden Filmtestfarbsatzes eine Reihe von Graustufen, sowie eine Reihe von Testfarben nach DIN 6169 und verschiedene Hautfarben. Besonders bewährt haben sich Filmtestfarbensätze mit je acht Graustufen mit dichten Di. = 0,35 und Dₘₐₓ = 2,1, 17 Testfarben nach DIN 6169 sowie sechs verschiedenen Hautfarben.

Es hat sich gezeigt, dass bei einer sorgfältigen Auswahl der Bezugsfarben bereits acht solche völlig ausreichend sind, um die Optimierung durchzuführen.

Mit Vorteil wird bei der Optimierung der Matrixkoeffizienten der mittlere Farbwiedergabeindex ermittelt und optimiert, wobei die Optimierung zweckmässigerweise mittels einer Evolutionsstrategie durchgeführt wird. Dies kann experimentell beispielsweise mittels der auf die vorstehend genannte Art sorgfältig ausgesuchten Bezugsfarben geschehen. Durch die Vielzahl der Versuche ist es jedoch einfacher, die Optimierung auf einem Grossrechner durchzuführen, falls die spektralen Empfindlichkeiten des Systems bekannt sind. Eine besonders geeignete Vorrichtung zur Durchführung des Verfahrens zur Gewinnung farbvalenzmetrisch korrigierter Primärfarbsignale besteht darin, dass in jeder Ausgangsleitung für die Abtastsignale einer Dreibereichsabtastvorrichtung eine y-Korrekturschaltung vorgesehen ist, und dass an die Ausgänge der y-Korrekturschaltungen eine Matrixschaltung angeschlossen ist. Der Vorteil dieser y-Korrekturschaltung gegenüber anderen Funktionsgeneratoren liegt darin, dass zu jedem Kanal nur eine Einstellmöglichkeit vorhanden ist, mit der der erforderliche Exponent, d.h. der y-Wert, eingestellt wird.

Die beschriebenen Korrekturmassnahmen lassen sich ausser bei der Farbanalyse von Reproduktionssystemen auch verwenden, um die absoluten Messgenauigkeiten von Farbmessgeräten nach dem Dreibereichsverfahren zu verbessern. Insbesondere Densitometer, die wegen der Nichteinhaltung der Luther-Bedingung nicht zu den Farbmessgeräten gerechnet werden dürfen, können mit diesen Korrekturmassnahmen zu einfachen Farbmessgeräten umfunktioniert werden.

Während die vorstehenden Ausführungen die Farbanalyse betrafen, soll im folgenden auf spezielle Farbsyntheseverfahren eingegangen werden, mit denen eine farbvalenzmetrisch richtige Reproduktion bei subtraktiver oder im wesentlichen subtraktiver Farbmischung erhalten wird. Wenn bei einer Abtastung nach dem Dreibereichsverfahren durch geeignete Abtasteinheiten oder durch eine Signalaufbereitung, beispielsweise gemäss dem vorstehend beschriebenen Verfahren, drei farbvalenzmässig korrigierte Primärfarbsignale erhalten sind, lassen sich hieraus ohne besondere Schwierigkeiten farbvalenzmässig richtige Reproduktionen mittels Farbwiedergabesystemen erhalten, die nach dem Prinzip der additiven Farbenmischung arbeiten. Hierzu ist normalerweise nur die Verwendung geeigneter Anpassungsschaltungen notwendig, mittels derer das bei der Analyse verwendete System der Primärvalenzen an das im Farbwiedergabesystem verwendete Syscem von Primärvalenzen angepasst ist.

Wenn dagegen ausgehend von den farbvalenzmetrisch korrigierten Primärfarbsignalen eine valenzmetrisch exakte Wiedergabe mit Hilfe von Farbwiedergabesystemen bewirkt werden soll, die nach dem Prinzip der subtraktiven Farbmischung arbeiten, müssen für die Farbvalenzen der Vorlagefarben bzw. für die entsprechenden farbvalenzmetrisch korrigierten Primärfarbsignale diejenigen Konzentrationen ermittelt werden, die in subtraktiver Mischung bei dem gegebenen Farbstoffsystem zu gleichen Farbvalenzen führen. Da sich das diese Zuordnung beschreibende exponentielle Integralgleichungssystem nicht in mathematisch geschlossener Form nach den Konzentrationen auflösen lässt, müssen Näherungslösungen gefunden werden, welche zum einen die Forderung nach valenzmetrisch exakter Farbwiedergabe weitgehend erfüllen, und zum anderen schaltungstechnisch einfach zu handhaben sind.

Für die Ermittlung der Farbstoffkonzentrationen ergeben sich verschiedene Möglichkeiten:
a) ein rein rechnerisches Iterationsverfahren;
b) ein Aufsuchen in einer Farbskala und entsprechende Interpolation;
c) Aufstellung eines Modellansatzes zur näherungsweisen Bestimmung der Farbstoffkonzentrationen.

Die Bestimmung von Farbstoffkonzentrationen mittels Iterationsverfahrens ist bekannt. Mittels derartiger schnell konvergierender Verfahren ist bei theoretischen Untersuchungen eine hinreichend genaue Bestimmung der Konzentrationen für vorgegebene Farbvalenzen möglich. Der Nachteil dieses an sich vorteilhaften Verfahrens besteht darin, dass bei nicht rein subtraktiven, sondern nur überwiegend subtraktiven Farbmischungen, wie beispielsweise beim Tiefdruck, die iterativ berechneten Konzentrationen nur Näherungswerte darstellen.

Die Bestimmung von Farbstoffkonzentrationen durch einen Such- und Interpolationsvorgang in einer Farbskala oder einem Farbatlas, d.h. einer systematischen Farbsammlung, die auf dem Farbmischungsprozess des zugrundeliegenden Reproduktionssystems aufgebaut ist, erscheint zunächst erfolgversprechend, da die Kennzeichnung jeder in der Sammlung aufgeführten Farbe einerseits durch valenzmetrische Grössen und anderseits durch die Konzentrationen der verwendeten Farben oder beim Druckprozess der sogenannten Auszugsdichten bestimmt ist. Für eine Vorlagenfarbe, deren valenzmetrische Grössen aufgrund der Analyse bekannt sind, beispielsweise aufgrund der vorstehend beschriebenen Bestimmung der Primärfarbsignale, wird diejenige Farbe der Skala herausgesucht, die dieser am nächsten sieht. Diese Entscheidung kann visuell oder auch rechnerisch durch Minimierung des sogenannten Farbabstandes durchgeführt werden. Die Systemgrössen, d.h. die Farbkonzentrationen bzw. die Auszugsdichten für diese ähnlichste Farbe sind dann bekannt. Wenn jedoch höhere Genauigkeitsansprüche gestellt werden, muss eine Interpolation mit den benachbarten Farben der Skala durchgeführt werden. Dies ist jedoch äusserst schwierig, da der durch die Konzentrationen bzw. Auszugdichten gebildete «Farbraum» in einem stark nicht linearen Zusammenhang zu dem durch die Primärvalenzen festgelegten Farbraum steht. Um bei der Interpolation zu ausreichend genauen Ergebnissen zu gelangen, muss die Farbskala eine äusserst feine Aufteilung aufweisen. Ein weiterer Nachteil besteht darin, dass beim Auswechseln eines Farbstoffes die gesamte Farbsammlung neu hergestellt und auch farbvalenzmetrisch neu vermessen werden muss. Trotzdem wird beim Tiefdruck die Abmusterung noch heute im wesentlichen nach diesem Verfahren vorgenommen, obwohl sich selbst bei einem gut eingespielten Team erhebliche Streubreiten bezüglich der herausgesuchten Farbkonzentrationen bzw. Auszugsdichten ergeben. Aufgrund dieser Problematik wird in der vorliegenden Erfindung ein weiteres Verfahren zur Ermittlung von Farbstoffkonzentrationen bzw. Farbstoffkonzentrationen entsprechenden Signalen für ein im wesentlichen oder vollständig einer subtraktiven Farbmischung unterliegendes Farbwiedergabesystem vorgeschlagen, das aus drei Primärfarbwerten bzw. Primärfarbsignalen eine farbvalenzmetrisch korrekte Reproduktion liefert. Das Verfahren ist gekennzeichnet durch folgende Schritte: Umformung der Primärfarbsignale in den Grundfarbstoffen des Wiedergabesystems angepasste Farbwertsignale unter Ersetzen der spektralen Dichteverteilung der einzelnen Grundfarbstoffe des Farbwiedergabesystems durch verschiedenen Wellenlängenbereichen zugeordnete optimalfarbenartige Modellfarbstoffe ohne Nebendichtungen, Umformung der hierbei erhaltenen Farbwertsignale in entsprechende Farbdichte-Signale, sowie Umwandlung der Farbdichte-Signale in Modellfarbstoffkonzentrationssignale, unter Ersetzen der Farbdichten der optimalfarbenartigen Modellfarbstoffe ohne Nebendichten in den einzelnen Wellenlängenbereichen durch optimalfarbenartige Modellfarbstoffe mit je einer Haupt- und zwei Nebendichten, die über den jeweiligen Teilwellenlängenbereich konstant sind, und von denen je eine der dortigen Dichte der drei Grundfarbstoffe näherungsweise zugeordnet ist.

Unter den Grundfarbstoffen des Wiedergabesystems werden die drei Farbstoffe verstanden, mittels derer durch subtraktive Farbmischung oder im wesentlichen subtraktive Farbmischung, die Reproduktion erstellt wird. Unter dem Ersetzen der spektralen Dichteverteilungen der einzelnen Grundfarbstoffe des Farbwiedergabesystems durch drei verschiedenen Wellenlängenbereichen zugeordnete optimalfarbenartige Modellfarbstoffe ohne Nebendichten wird verstanden, dass das sichtbare Spektrum in drei in etwa den Farben rot, gelb und blau entsprechende Wellenlängenbereiche unterteilt wird, wobei die spektralen Dichteverteilungen der einzelnen Grundfarbstoffe in demjenigen Bereich, in dem ihr Maximum liegt, einen konstanten Wert zugeordnet bekommen und in den anderen Wellenlängenbereichen nullgesetzt werden. Diese Massnahme, d. h. das Ersetzen der spektralen Dichteverteilungen durch optimalfarbenartige Modellfarbstoffe ohne Nebendichten, entspricht einer Transformation des durch die Primärfarbsignale gegebenen Farbraumes in einen den Valenzen der Grundfarbstoffe entsprechenden Farbraum. Die diesen Farbwerten entsprechenden Farbwertsignale werden anschliessend in Farbdichtesignale umgewandelt, was bedeutet, dass von jedem Farbwertsignal der negative Logarithmus gebildet wird. Da die realen Grundfarbstoffe des Wiedergabesystems nicht nur in ihren Hauptabsorptionsgebieten wirksam sind, sondern auch unerwünschte Absorptionen in den anderen Spektralgebieten haben, werden die Modellfarbstoffe mit sogenannten Nebendichten versehen, was bedeutet, dass ihnen in den Wellenlängenbereichen, in denen ihre Amplitude bei den Modellfarbstoffen ohne Nebendichten nullgesetzt war, endliche aber konstante Werte zugeordnet werden. In den einzelnen Wellenlängenbereichen sind daher die Haupt- und die Nebenwirkungen aller drei Modellfarbstoffe wirksam, so dass bei der Änderung der Konzentration eines der Modellfarbstoffe nicht nur der Anteil dessen Primärvalenz geändert wird, sondern aufgrund der Nebenwirkung in den beiden anderen Spektralgebieten auch die dortigen Primärvalenzen. Wenn gleichzeitig die Farbdichtesignale in Modellfarbstoffkonzentrations-Signale umgewandelt werden, erhält man bei geeigneter Wahl der Grenzen der drei Wellenlängenbereiche und bei geeigneten Amplitudenverhältnissen der Modellfarbstoffe Signale, welche in guter Näherung die erwünschten Farbstoffkonzentrationen wiedergeben.

Gemäss einer besonders bevorzugten Ausgestaltung des Verfahrens erfolgen die Umformung der Primärfarbsignale in die Farbwertsignale und die Umwandlung der Farbdichtesignale in die Modellfarbstoffkonzentrations-Signale mittels zweier linearer Transformationen dieser Signale, wobei die Matrixkoeffizienten der ersten Linear-Transformation M, durch die Wahl der Wellenlängenbereichsgrenzen und die Matrixkoeffizienten der letzteren Linear-Transformation M₂ durch das Verhältnis von Haupt- und Nebendichten der Modellfarbstoffe in den einzelnen Wellenlängenbereichen für das jeweilige Farbwiedergabesystem bestimmt werden. Dies kann beispielsweise experimentell durch Probieren erfolgen, wobei die Güte des Ergebnisses beispielsweise anhand der in den Farbskalen für die zugehörigen Grundfarbstoffe festgelegten Daten überprüft werden kann.

In einer Weiterbildung der Erfindung wird mit Vorteil jedes Modellfarbstoffkonzentrations-Signal entsprechend einer Kennlinie variiert, welche derart festgelegt ist, dass Grauwerten entsprechende Primärfarbsignale zu Farbstoffkonzentrationssignalen führen, die im jeweiligen Farbwiedergabesystem entsprechend gleiche Grauwerte erzeugen. Diese Kennlinien sind bei Farbwiedergabesystemen, die auf der rein subtraktiven Farbmischung beruhen, Geraden. Bei Farbwiedergabesystemen, die nur annähernd den Gesetzmässigkeiten der subtraktiven Farbmischung gehorchen, wie beispielsweise dem Tiefdruck, ergibt sich ein komplizierterer nicht linearer Verlauf dieser Kennlinien.

Wenn das verwendete Farbwiedergabesystem der Tiefdruck ist, werden zweckmässigerweise die Modellfarbstoffkonzentrations-Signale bzw. die Farbstoffkonzentrations-Signale in entsprechende Auszugsdichte-Signale umgewandelt.

Die Modellfarbstoffkonzentrations-Signale bzw. die Farbstoffkonzentrationssignale bzw. die Auszugsdichte-Signale werden vorzugsweise einer linearen Umformung mittels einer Korrekturmatrix M₃ unterzogen, deren Koeffizienten derart bestimmt werden, dass die durch die Primärfarbstoffe des Farbwiedergabesystems festgelegten Grundfarben und/oder Mischfarben erster Ordnung aus diesen farbgetreu wiedergegeben werden. Unter der Bezeichnung «Grundfarben» werden hierbei die mit je einem der Grundfarbstoffe in unterschiedlicher Konzentration bzw. Auszugsdichte erzeugbaren Farben verstanden. Die Koeffizienten der Matrizen werden vorzugsweise durch eine Optimierungsstrategie für vorgegebene Farbwerte bestimmt. Der Ausgangszustand der Matrizen M1, M2 und/oder M3 ist zu Beginn der Optimierung willkürlich wählbar. Wenn lediglich die Matrizen M1 und M2 optimiert werden, hat man es mit einem Optimierungsproblem mit 18 Freiheitsgraden, wenn auch die Matrix M3 gleichzeitig optimiert werden soll, mit einem Optimierungsproblem mit 27 Freiheitsgraden zu tun. Nach Festlegung einer Reihe von vorgegebenen Farbwerten als Bezugsfarben, wird eine Bewertungsfunktion für die Optimierung festgelegt, die beispielsweise darin besteht, dass der mittlere quadratische Abstand zwischen den realen und Modell-Dichten für die verschiedenen Grundfarben ein Minimum einnehmen soll. Eine weitere Möglichkeit besteht darin, den Farbwiedergabeindex einem Maximum zustreben zu lassen, wobei für den Farbwiedergabeindex beispielsweise die in DIN 6169 festgelegte Formel verwendet wird. Da diese wie alle anderen gebräuchlichen Farbwiedergabeindexformeln empirisch gewonnen sind, ergeben sich Unterschiede zwischen den verschiedenen Ergebnissen, je nachdem, von welchen dieser Farbwiedergabe-Indizes man ausgeht. Für die Optimierung der Matrixkoeffizienten selbst wird vorzugsweise eine Evolutionsstrategie verwendet, da bei dieser während des Optimierungsvorganges möglicherweise eingenommene Nebenmaximas wieder verlassen werden können. Die Optimierung wird zweckmässigerweise für zumindest drei subtraktive Primärfarben, vorzugsweise gleicher visueller Helligkeit, und drei aus diesen gewonnenen Mischfarben erster Ordnung durchgeführt. Da durch die Auswahl dieser Farben das Optimierungsergebnis nicht unwesentlich beeinflusst wird, verwendet man zweckmässigerweise eine hohe Anzahl von Bezugsfarben, die einigermassen gleichmässig im Farbraum verteilt sind.

Die erhaltenen Auszugsdichte-Signale werden mit Vorteil mit elektronisch abgespeicherten Auszugsdichten diskreter Mischfarben des Farbwiedergabesystems (Katalogfarben) verglichen, wobei zweckmässigerweise eine lineare Interpolation zwischen den ermittelten AuszugsdichteSignalen und den nächstgelegenen Auszugsdichte-Signalen der Katalogfarben vorgenommen wird. Die Interpolation führt hier zu genauen Ergebnissen, da die Modellkonzentrationen und die Konzentrationen des realen Farbstoffsystems zwei zueinander nur wenig verzerrte «Farbräume» bilden. Auch die Anzahl der abzuspeichernden Farben, d. h. der Umfang der Katalogfarben kann daher klein gehalten werden. In der Farbskala sind die farbmetrischen Grössen durch die Modellkonzentrationen ersetzt, wodurch vor allem der anzuwendende Interpolationsalgorithmus erheblich vereinfacht wird. Diese Lösung ist insbesondere für den Tiefdruck geeignet, der nicht exakt den Gesetzmässigkeiten der subtraktiven Farbmischung gehorcht. Die aufgrund der Abweichung in der Farbmischung in den Modellkonzentrationen enthaltenen zusätzlichen Fehler können zusammen mit den prinzipiell durch den Modellansatz hervorgerufenen Fehlern durch die nachfolgende Interpolation in der weitgehend linearisierten Skala minimiert werden.

Mit der Erfindung wird auch eine Vorrichtung zur Erzeugung von Farbstoffkonzentrationen entsprechenden Signalen eines im wesentlichen einer subtraktiven Farbmischung unterliegenden Farbwiedergabesystems aus drei Primärfarbsignalen zur Durchführung des Verfahrens nach einem der Ansprüche 16 mit 25 vorgeschlagen. Diese Vorrichtung ist gekennzeichnet durch eine erste Matrixschaltung zur Umformung der Primärfarbsignale in den Primärfarbstoffen des Farbwiedergabesystems angepasste Farbwertsignale, wobei die Matrixkoeffizienten der Matrixschaltung dadurch bestimmt sind, dass die spektralen Dichteverteilungen der einzelnen Primärfarbstoffe des Farbwiedergabesystems durch drei verschiedenen Wellenlängenbereichen zugeordnete, optimalfarbenartige Modellfarbstoffe ohne Nebendichtungen ersetzt sind, durch an die Ausgänge für die Farbwertsignale der ersten Matrixschaltung angeschlossene Logarithmier-Schaltungen, zum Umformen der Farbwertsignale in entsprechende Farbdichte-Signale, sowie durch eine zweite Matrixschaltung zur Umwandlung der Farbdichte-Signale in Farbstoffkonzentrationssignale, wobei die Matrixkoeffizienten der zweiten Matrixschaltung dadurch bestimmt sind, dass die Farbdichten der optimalfarbenartige Modellfarbstoffe ohne Nebendichten der einzelnen Teilwellenlängenbereiche durch optimalfarbenartige Modellfarbstoffe ersetzt sind, die eine Haupt- und zwei Nebendichten aufweisen, welche über die jeweiligen Teilwellenlängen konstant sind, wobei die Haupt- und die beiden Nebendichten den Dichten der drei Primärfarbstoffe in dem entsprechenden Wellenlängenbereich näherungsweise zugeordnet sind.

Die Matrixkoeffizienten der ersten Matrixschaltung sind vorzugsweise durch die Wahl der Grenzen der Teilwellenlängenbereiche, diejenigen der zweiten Matrixschaltung durch das Verhältnis von Haupt- und Nebendichten der Modellfarbstoffe in den einzelnen Teilwellenlängenbereichen für das jeweilige Farbwiedergabesystem bestimmt.

Zweckmässigerweise ist an den Ausgängen für jedes Modellfarbstoffkonzentrations-Signal der zweiten Matrixschaltung eine Schaltung vorgesehen, welche das ankommende Signal gemäss einer vorbestimmten Kennlinie variiert, wobei die Kennlinie derart festgelegt ist, dass Grauwerten entsprechende Primärfarbsignale in Farbstoffsignale umgewandelt werden, die im jeweiligen Farbwiedergabesystem Grauwerte erzeugen. Wenn als Farbwiedergabesysteme ein Tiefdruck verwendet wird, kommt bevorzugt eine ergänzte Schaltung zur Anwendung, welche die Modellfarbstoffkonzentrationssignale bzw. Farbstoffkonzentrationssignale in entsprechende Auszugsdichte- Signale umwandelt, die dem Praktiker geläufiger sind.

Gemäss einer weiteren Ausgestaltung der Erfindung enthält die Vorrichtung eine dritte Matrixschaltung, der die Auszugsdichte-Signale zuführbar sind, wobei die Matrixkoeffizienten der dritten Matrixschaltung derart bestimmt sind, dass die durch jeden Grundfarbstoff des Farbwiedergabesystems festgelegten Grundfarben möglichst farbgetreu wiedergegeben werden.

Bei Farbwiedergabesystemen mit rein subtraktiver Farbmischung können die zweite Matrixschaltung und die dritte Matrixschaltung zu einer gemeinsamen Matrixschaltung zusammengefasst sein.

Bei einer Anwendung im Tiefdruck ist es des weiteren von Vorteil, wenn die Vorrichtung einen Speicher enthält, in dem die Auszugsdichten von Katalogfarben für das jeweilige Farbwiedergabesystem gespeichert sind, wobei eine Komperatorschaltung die ermittelten Modelldichten mit den Katalogfarben vergleicht, und eine Interpolationsschaltung eine Interpolation zwischen den nächstgelegenen Katalogfarben und den ermittelten Auszugsdichten durchführtn.

Die vorstehend beschriebene Vorrichtung eignet sich auch für die Verwendung eines Drucksimulators mit Hilfe eines nach dem Prinzip der additiven Farbmischung arbeitenden Monitors, beispielsweise einem Fernsehbildschirm, der an den Eingängen für Primärfarbsignale der ersten Matrixschaltung angeschlossen ist. In dem Monitor selbst ist eine weitere Matrixschaltung vorgesehen, die eine Transformation der farbvalenzmetrisch richtigen Farbwertsignale des frei wählbaren Bezugssystems in entsprechende Farbwertsignale des Primärvalenzsystems des Monitors vornimmt. Bei der Verwendung als Drucksimulator werden die verschiedenen Schalteinrichtungen in umgekehrter Reihenfolge vor dem Signal durchlaufen, so dass aus AuszugsdichteSignalen Primärfarbsignale erzeugt werden.

Die beiliegenden Zeichnungen dienen zur weiteren Erläuterung der Erfindung.
Fig. 1 zeigt das Prinzip eines elektronischen Lichtpunktabtasters für Filme und Diapositive;
Fig. 2 zeigt die spektrale Kanalempfindlichkeit eines ersten Abtasters (Abtaster Nr. 1) im Originalzustand;
Fig. 3 zeigt die spektrale Kanalempfindlichkeit eines zweiten Abtasters (Abtaster Nr. 2) im Originalzustand;
Fig. 4 zeigt die Übertragungskennlinie eines Abtasters für unbunte Filmfarben;
Fig. 5 zeigt die Übertragungskennlinien von Fig. 4 mit logarithmischer Ordinate;
Fig. 6 zeigt ein vereinfachtes Blockschaltbild eines Filmabtasters mit y-Korrektur;
Fig. 7 zeigt ein vereinfachtes Blockschaltbild eines Filmabtasters mit y-Korrektur und Korrek₋ turmatrixschaltung;
Fig. 8 zeigt die spektralen Dichten von acht Graustufen mit Filmfarbstoffen eines speziellen Filmes (Film Nr. 2);
Fig. 9 zeigt die spektralen Dichten von acht Graustufen mit Filmfarbstoffen eines anderen Filmes (Film Nr. 3);
Fig. 10 zeigt einen Ausschnitt der CIE-UCS-Farbtafel 1960 für den Abtaster Nr. 2 in nicht korrigiertem Zustand und Film Nr. 2
Fig. 11 zeigt einen Ausschnitt der CIE-UCS-Farbtafel 1960 für den Abtaster Nr. 2 im korrigierten Zustand und Film Nr. 2;
Fig. 12 zeigt die effektiven spektralen Kanalempfindlichkeiten des korrigierten Abtasters Nr. 1 im Vergleich zu den EBU-Kurven;
Fig. 13 zeigt die effektiven spektralen Kanalempfindlichkeiten des korrigierten Abtasters Nr. 2 im Vergleich zu den EBU-Kurven;
Fig. 14 zeigt eine normierte Darstellung eines für eine subtraktive Farbmischung verwendeten Farbstoffsystems, mit beispielsweise einem Farbstoff mit den Farbstoffen Gelb, Magenta, Cyan und einem Trägermaterial;
Fig. 15 zeigt in der CIE-UCS-Farbtafel 1960 die ermischbaren Farbarten eines realen Farbstoffsystems für Grauäquivalentdichten von Dₘᵢₙ = 0,3 bis Dₘₐₓ ⁼ 2,5;
Fig. 16 zeigt vier verschiedene Typen von optimalfarbenartigen Modellfarbstoffen;
Fig. 17 zeigt ein Ersetzen realer Farbstoffe durch optimalfarbenartige Modellfarbstoffe;
Fig. 18 zeigt eine Graumischung eines realen und des entsprechenden Modellfarbstoffsystems ohne Nebendichten. Die spektrale Dichte d (λ) ist bedingt - gleich mit einem aselektiven Grau der Dichte D = 1 bei Lichtart D₅₀;
Fig. 19 zeigt in der CIE-UCS-Farbtafel 1960 die ermischbaren Farbarten mit realen Farbstoffen und Modellfarbstoffen ohne Nebendichten von Dₘiₙ ⁼ 0 bis Dₘₐₓ ⁼ 3,2;
Fig. 20 zeigt ein Blockschaltbild von einer Schaltung, welche einem Ersetzen der realen einer subtraktiven Farbmischung unterliegenden Farbstoffe durch optimalfarbenartige Modellfarbstoffe ohne Nebendichten entspricht;
Fig. 21 zeigt eine Nachbildung des realen Farbstoffes «Gelb» durch einen optimalfarbenartigen Modellfarbstoff mit Nebendichten;
Fig. 22 zeigt eine Nachbildung des realen Farbstoffes «Magenta» durch einem optimalfarbenartigen Modellfarbstoff mit Nebendichten;
Fig. 23 zeigt eine Nachbildung des realen Farbstoffes «Cyan" mit einem optimalfarbenartigen Modellfarbstoff mit Nebendichten;
Fig. 24 zeigt eine Graumischung der in den Fig. 21 bis 23 gezeigten Modellfarbstoffe mit Nebendichten, wobei die spektrale Dichte d (λ) unbedingt - gleich mit einem aselektiven Grau der Dichte D = 1 ist;
Fig. 25 zeigt in der CIE-UCS-Farbtafel 1960 die ermischbaren Farbarten mit realen Farbstoffen und mit Modellfarbstoffen mit Nebendichten und Dₘᵢₙ = 0 bis Dₘₐₓ = 3,2;
Fig. 26 zeigt ein Blockschaltbild von einer Schaltung, in der die bei der subtraktiven Farbmischung verwendeten realen Farbstoffe durch optimalfarbenartige Modellfarbstoffe mit Nebendichten ersetzt sind;
Fig. 27 zeigt ein Blockschaltbild von einer Schaltung, welche sich von derjenigen der Fig. 26 dadurch unterscheidet, dass die dortigen Ausgangssignale einer Schaltung für einen Grauabgleich zugeführt sind, wobei diese Schaltung zur Bestimmung von Auszugsdichten aus Primärfarbsignalen dient, wenn eine rein subtraktive Farbmischung vorliegt;
Fig. 28 bis 30 zeigen Modellgrauäquivalentdichten für die Grundfarben Gelb, Magenta und Cyan, wie man sie mit der Schaltung gemäss Fig. 27 erhält;
Fig. 31 bis 33 zeigen Modellgrauäquivalentdichten für die Mischfarben erster Ordnung Blau, Grün und Rot, wie man sie mit der Schaltung gemäss Fig. 27 erhält;
Fig. 34 zeigt ein vollständiges Blockschaltbild von einer Schaltung zur Ermittlung von Auszugsdichten aus Primärfarbsignalen, bei der die von dem Grauabgleich kommenden Signale einer Korrekturmatrixschaltung zur Korrektur für bunte Farben zugeführt sind;
Fig. 35 zeigt in der CIE-UCS-Farbtafel den mit der Schaltung der Fig. 34 wiedergebbaren Farbartbereich im Ausgangszustand der Optimierung für die Koeffizienten der Matrizen von Dₘᵢₙ = 0 bis Dₘₐₓ = 3,2 mit einem Gesamtfarbwiedergabe-Index Rgₑₛ = - 462;
Fig. 36 zeigt in der CIE-UCS-Farbtafel den mit der Schaltung von Fig. 34 ermischbaren Farbartbereich nach 92 Optimierungsschritten von Dₘᵢₙ = 0 bis Dₘₐₓ = 3,2 und einem Gesamtfarbwiedergabe-Index von R_{ges} = 52;
Fig. 37 zeigt in der CIE-UCS-Farbtafel den mit der Schaltung von Fig. 34 ermischbaren Farbartbereich im Endzustand der Optimierung, Dₘᵢₙ= 0 bis Dₘₐₓ = 3,2 und einem Gesamtfarbwiedergabe-Index Rgₑₛ = 76;
Fig. 38 zeigt in der CIE-UCS-Farbtafel den ermischbaren Farbartbereich entsprechend Fig. 37 im Endzustand der Optimierung, wobei jedoch der Dichteumfang von Dₘᵢₙ = 0,3 bis Dₘₐₓ = 2,5 reicht, mit einem Gesamtfarbwiedergabe-Index R_{ges} = 89;
Fig. 39 zeigt die Kennlinien für einen Grauabgleich der Schaltung von Fig. 34 für eine rein subtraktive Farbmischung;
Fig. 40 mit 42 zeigen die Modellgrauäquivalentdichten für die Grundfarben Gelb, Magenta und Cyan bei Verwendung der Schaltung von Fig. 34 und optimal festgelegten Koeffizienten der Matrizen M₁ bis M₃;
Fig. 43 mit 45 zeigen die Modellgrauäquivalentdichten für die Mischfarben erster Ordnung Blau, Grün und Rot bei Verwendung der Schaltung von Fig. 34 und optimal festgelegten Koeffizienten der Matrizen M,, M₂ und M₃;
Fig. 46 zeigt eine Schaltung entsprechend zu derjenigen von Fig. 34 mit besonderer Anpassung für den Tiefdruck, bei der in der Schalteinheit für den Grauabgleich eine Umformung der Modell- konzentrationen in Modellauszugsdichten vorgenommen ist;
Fig. 47 zeigt die Kennlinien für den Grauabgleich bei der Vorrichtung von Fig. 46, im Falle des Tiefdrucks;
Fig. 48 zeigt eine Weiterbildung der Schaltung von Fig. 46, bei der eine Feinstkorrektur der Farbwiedergabe dadurch vorgenommen ist, dass die Modellauszugsdichte-Signale einer Komparator-Interpolationsschaltung zugeführt sind, welche diese Signale mit gespeicherten Werten einer Farbskala vergleicht und interpoliert.

Im folgenden wird ein Beispiel für die Farbanalyse erläutert, das zeigt, wie die Farbwiedergabeeigenschaften bestehender Systeme durch geeignete elektronische Massnahmen verbessert werden können.

Die Farbanalyse wird hierbei mittels eines Filmabtasters durchgeführt.

Die Farbanalyse kann als eine Farbmessung nach dem Dreibereichsverfahren aufgefasst werden; sie ist daher im Prinzip unabhängig von der verwendeten Farbsynthese. Wegen der Forderung nach einem möglichst guten Störabstand ist man bestrebt, möglichst ohne elektronische Matrixschaltungen auszukommen, so dass als Farbmischkurven für Farbfernsehkameras und Filmabtaster die EBU-Spektralwertkurven nachgebildet werden müssten. Wegen der erforderlichen, jedoch nicht realisierbaren negativen Anteile dieser Spektralwertkurven, stellt jede reale spektrale Empfindlichkeitskurve eine mehr oder weniger gute Annäherung an die EBU-Kurven dar. Aus energetischen Gründen sowie wegen der Verschiedenheit der zu reproduzierenden Vorlagen, besitzen Farbkameras und Filmabtaster meist unterschiedliche Farbmischkurven, d.h. spektrale Empfindlichkeitskurven; Farbfernsehkameras müssten ebenso wie das menschliche Auge in der Lage sein, bedingt gleiche Farben einer Szene als gleiche Farbe zu registrieren, da jede Farbvalenz durch unendlich viele Farbreize verursacht werden kann. Beim Farbfilm hingegen wird jede ermischbare Farbvalenz durch genau eine Farbreizfunktion verwirklicht, so dass beim Farbfilmabtaster kein Metamerieproblem besteht.

Jede Farbvalenz kann bei der Filmabtastung einerseits durch drei farbvalenzmetrisch exakte Farbwerte, Re, Ge, Be, anderseits durch drei fiktive Farbwerte R, G, B, die man mittels der realen Farbmischkurven erhält, beschrieben werden. Dies entspricht den folgenden Beziehungen:

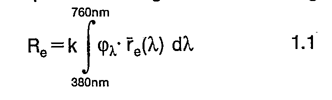

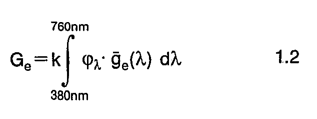

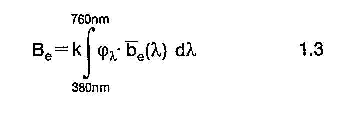

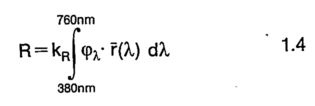

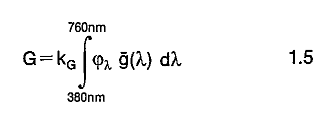

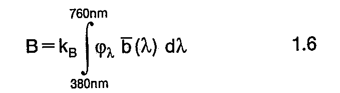

Zwischen den exakten und fiktiven Farbwerten besteht also eine eindeutige Zuordnung, die im einfachsten Fall, falls die Farbmischkurven mit den EBU-Spektralwertkurven übereinstimmen, durch eine Einheitsmatrix beschrieben werden kann; allgemein besteht jedoch ein funktionaler Zusammenhang, der sich jedoch in der Regel nicht durch eine einfache lineare Beziehung ausdrücken lässt.

Am Beispiel von Farbfilmabtastern mit bekannter spektraler Empfindlichkeit wird nun gezeigt, wie der funktionale Zusammenhang zwischen den fiktiven und den exakten Farbwerten durch einfache Beziehungen näherungsweise so beschrieben werden kann, dass sich daraus einfache analoge Korrekturschaltungen ableiten lassen.

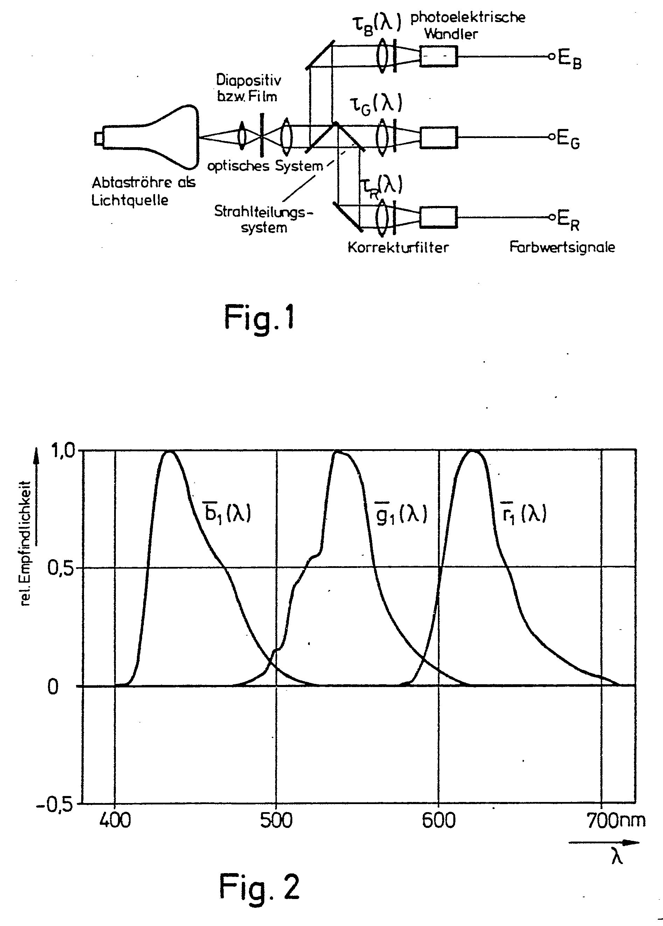

Farbfilm- bzw. Diaabtaster nach Fig. 1 werden in der Regel wegen des einfachen und schnell durchführbaren Abgleichs mit konstanter Einstellung betrieben.

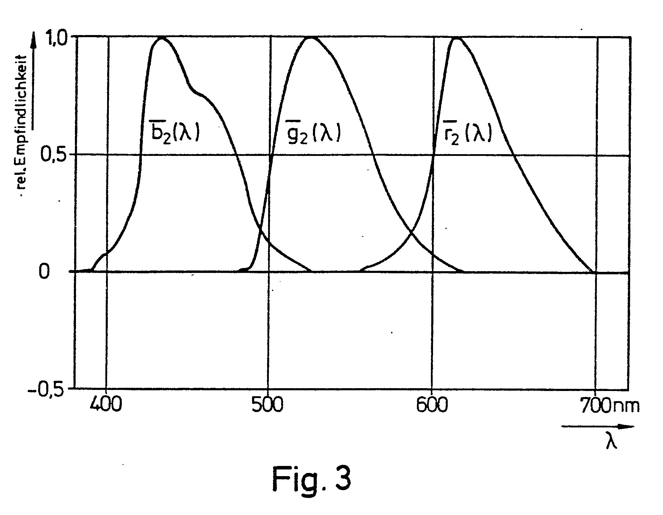

Zur Bestimmung der Farbwiedergabeeigenschaften der untersuchten Abtaster wurde wie folgt vorgegangen:
1. Es wurden zwei Farbfilmabtaster verschiedener Hersteller, deren spektrale Kanalempfindlichkeiten r̅_{A}(λ), g̅_{A}(λ), b̅_{A}(λ) mit A = 1 oder 2 bekannt waren, ausgewählt. In den Fig. 2 und 3 sind in normierter Darstellung deren Kanalempfindlichkeiten dargestellt. Sie haben nur wenig Ähnlichkeit mit den EBU-Kurven.
2. Es wurden sechs Filmtestfarbensätze mit je 536 Filmtestfarben verwendet. Bestandteile eines jeden Filmtestfarbensatzes waren unter anderem acht Graustufen mit Dichten zwischen Dₘᵢₙ = 0,35 und Dₘₐₓ 2,1; 17 Testfarben nach DIN 6169 sowie sechs verschiedene Hautfarben. Die spektralen Transmissionsgrade der einzelnen Filmtestfarben wurden rechnerisch mit den spektralen Farbstoffdaten der bei den Fernsehanstalten am häufigsten zur Filmaufzeichnung verwendeten Filme bestimmt.
3. Die Abtaster wurden jeweils auf Filmweiss Dₘᵢₙ = 0,35 jedes Filmtestfarbensatzes abgeglichen; hierzu wurden die Verstärkungsfaktoren der Kanäle k_{R}, k_{G} und k_{B} so bestimmt, dass die R-G-B-Farbwerte untereinander gleich gross waren und ihre maximal zulässigen Werte annahmen.
4. Es wurden die Normfarbwerte der 536 Original-Filmfarben (Index 0) eines jeden Testfarbensatzes für Lichtart 0₆₅ gemäss der folgenden Formeln bestimmt. 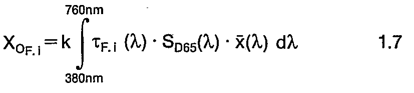 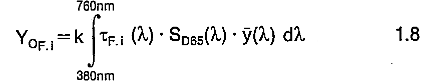 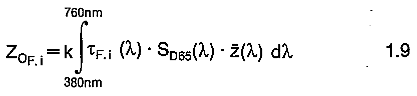 mit 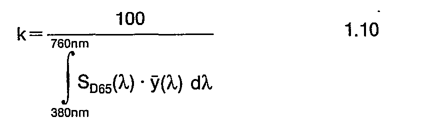 für 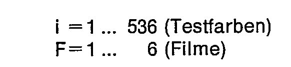
5. Die Wiedergabefarbwerte (Index W) der 536 Filmfarben je Testfarbensatz wurden für alle untersuchten Filmabtaster berechnet. (Im Gegensatz zu Gleichung 1.7, welche Selbstleuchter betrifft, geht hier die Lichtart nicht ein, da es sich hier um Remissionsfarben handelt.) 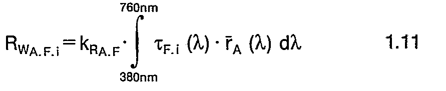 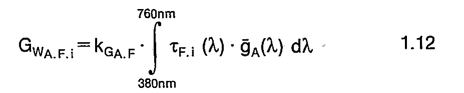 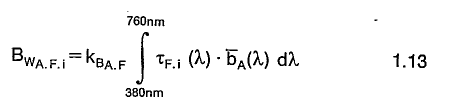 mit folgenden Abgleichbedingungen: 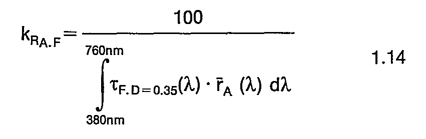 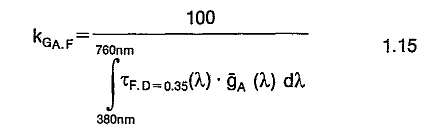 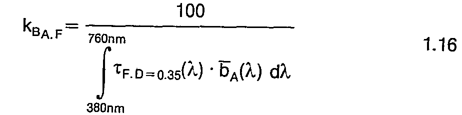
   für A = 1 .... 2 (Abtaster)
   F = 1 .... 6 (Filme)
   i = 1 .... 536 (Testfarben)

   wobei τ_{F,D}=0,35(λ) der spektrale Transmissionsgrad von Filmweiss (Dₘᵢₙ = 0,35) eines jeden Filmtestfarbensatzes F ist.

Die Normfarbwerte der Wiedergabefarben wurden gemäss DIN 6169 aus den R-G-B-Farbwerten anschliessend wie folgt bestimmt:

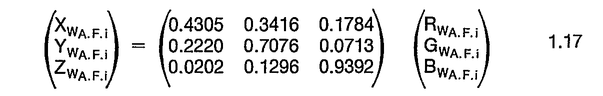

6. Die speziellen Farbwiedergabeindizes nach DIN 6169 RA,F.i wurden für die 536 Filmtestfarben aller Abtaster-Film-Kombinationen bestimmt. Die speziellen Farbwiedergabeindizes R_{;} sind ein Mass für die valenzmetrische Übereinstimmung von Original- und Wiedergabefarben; eine ideale Übereinstimmung wird definitionsgemäss durch einen speziellen Farbwiedergabeindex R_{;} = 100 gekennzeichnet.

7. Es wurden mittlere Farbwiedergabeindizes für bestimmte Farbgruppen sowie deren Standardabweichung als Mass für die Streuung um diesen Mittelwert bestimmt. Dabei wurden insbesondere berechnet:
a) der allgemeine Farbwiedergabeindex R. nach DIN 6169 sowie σₐ über die DIN-Testfarben Nr. 1 bis 8. 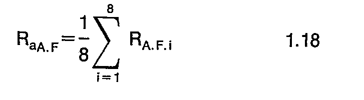 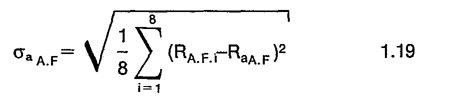
   für A = 1 .... 2 (Abtaster)
   F = 1 .... 6 (Filme)
   i = 1 .... 8 (zu den Testfarben Nr. 1 bis 8 nach DIN 6169 bedingtgleiche Filmtestfarben)
b) der mittlere Farbwiedergabeindex und Standardabweichungen über acht Graustufen der Dichten Dₘᵢₙ = 0,35 bis D_{max =} 2,1. 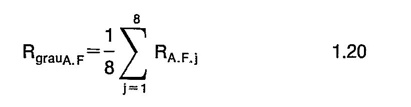 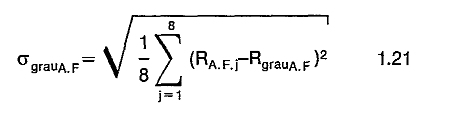 für j = 1 .... 8 (Graustufen)
c) die mittleren Farbwiedergabeindizes und Standardabweichungen über 536 Filmtestfarben.

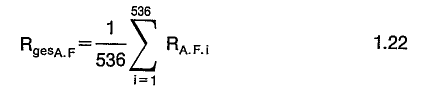

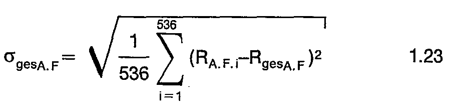

In der im Anhang befindlichen Tabelle sind die mittleren Farbwiedergabeindizes einschliesslich der Standardabweichungen, sowie die speziellen Farbwiedergabeindizes für die 17 DIN-Testfarben, sechs verschiedenen Hautfarben und acht Graustufen tabellarisch zusammengestellt.

Beim Vergleich der mittleren Farbwiedergabeindizes der unkorrigierten, jedoch auf Filmweiss der Dichte D = 0,35 abgeglichenen Abtaster fällt besonders auf, dass die Grauwiedergabe der einzelnen Abtaster-Filmkombinationen recht unterschiedlich ist.

Ferner ist es bemerkenswert, dass relativ grosse Schwankungen der Farbwiedergabeindizes eines Abtasters bei der Abtastung verschiedener Filmtestfarbensätze auftreten.

Die fehlerhafte Grauwiedergabe wird verständlich, wenn man Fig. 4 betrachtet, in der die effektiven Farbwerte R, G und B über den normierten Helligkeiten Ymax der einzelnen Graustufen für die Abtaster-Filmkombinationen aufgetragen sind. Bei idealen, d.h. der Augenempfindlichkeit entsprechenden Farbmischkurven müssten sich in dieser Darstellungsweise als Kennlinien unter 45° geneigte Geraden ergeben, die durch den Koordinaten-Ursprung verlaufen, da die maximalen R-, G- und B-Werte willkürlich zu Eins angenommen wurden. Man erkennt aus Fig. 4 jedoch deutliche nichtlineare Abweichungen von der idealen Kennlinie.

Mit Funktionsgeneratoren könnten zwar die Farbwertsignale gegenläufig vorverzerrt werden, so dass die Nichtlinearitäten kompensiert würden, jedoch sind Schaltungen dieser Art unzweckmässig, dasie zu viele Einstellmöglichkeiten besitzen, die die Wahrscheinlichkeit von Bedienungsfehlern vergrössern.

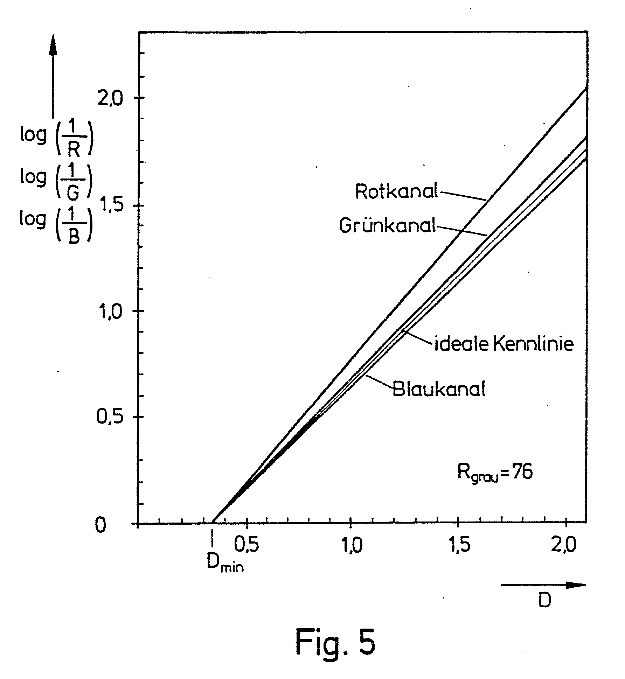

Trägt man jedoch anstelle der Farbwerte die logarithmierten Kehrwerte der drei Farbwertsignale, also log( 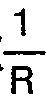 ) log( 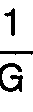 ) _{b}zw. log( 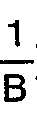 ) über der Dichte D der einzelnen Graustufen auf, so erhält man bei allen Film-Abtaster-Kombinationen je drei Kennlinien, die sich innerhalb der Zeichengenauigkeit als Geraden mit unterschiedlichen Steigungen darstellen lassen, wie dies in Fig. 5 dargestellt ist.

Theoretisch müssten sich drei gleiche Kennlinien mit einer Steigung von Eins ergeben; die realen Kennlinien besitzen jedoch unterschiedliche Steigungen β_{R}, β_{G} und β_{B}. Der Zusammenhang zwischen den logarithmierten Farbwerten und den Dichten kann also folgendermassen beschrieben werden: 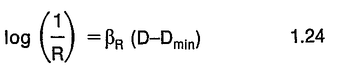 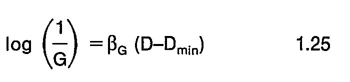 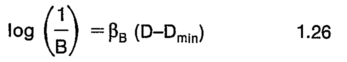 Mit 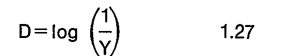 und 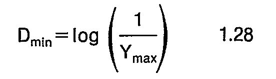 lassen sich die Farbwerte R, G und B wie folgt ausdrücken:

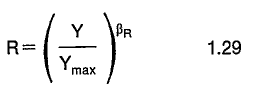

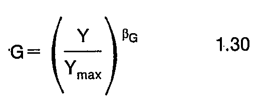

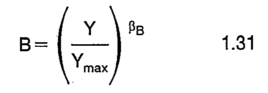

Für eine theoretisch exakte Wiedergabe von unbunten Filmproben müssten die ß-Werte im Exponenten den Wert Eins besitzen. Dies lässt sich durch in der Farbfernsehtechnik übliche y-Korrekturschaltungen erreichen, so dass die Fehler beim Grauabgleich bei den Film-Abtaster-Kombinationen nahezu völlig beseitigt werden. Es gilt hierbei 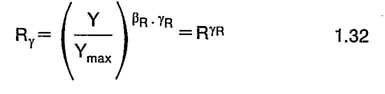 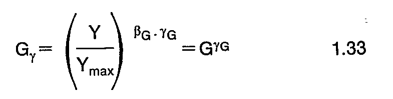 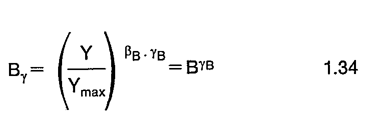 falls 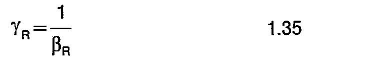 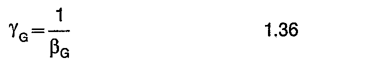 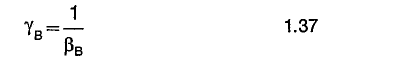 ist.

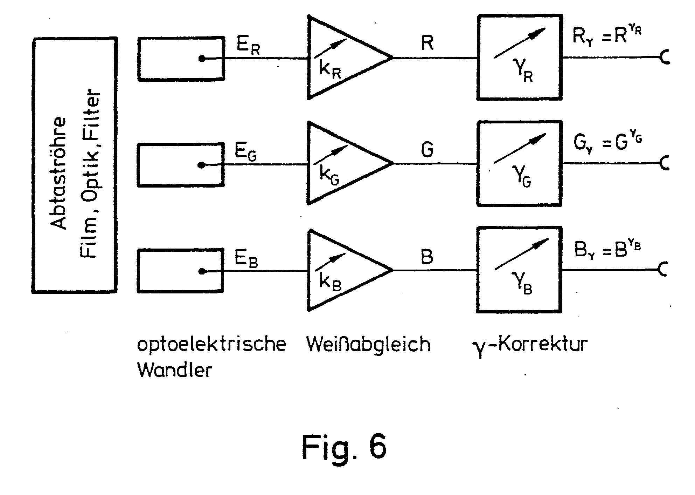

Der Vorteil der y-Korrekturschaltungen liegt darin, dass je Kanal nur eine Einstellmöglichkeit vorhanden ist, mit der das erforderliche y eingestellt werden kann. Fig. 6 zeigt das um die y-Korrekturschaltungen erweiterte Blockschaltbild eines Filmabtasters.

In den Tabellen des Anhangs sind zu jeder Abtaster-Filmkombination je Kanal die erforderlichen y-Korrekturwerte eingetragen. In den Spalten b dieser Tabellen erkennt man im Vergleich zu den Spalten a die Auswirkungen der y-Korrekturen.

Bei den bunten DIN-Testfarben sowie den Hautfarben ergeben sich im Vergleich zu den y-korrigierten Abtastern nahezu keine bzw. nur geringfügige Unterschiede. Die Farbwiedergabeeigenschaften der Abtaster bezüglich der Wiedergabe von unbunten Testfarben werden jedoch durch die y-Korrektur nahezu ideal. Die y-Werte sind sowohl von den spektralen Empfindlichkeiten der Abtaster als auch von den spektralen Eigenschaften der abgetasteten Filme abhängig; sie müssen daher für jede Abtaster-Filmkombination z.B. auch durch geeignete im Film angebrachte Graukeile gesondert bestimmt werden.

Im folgenden wird gezeigt, wie durch eine Matrizierung der y-korrigierten R-G-B-Signale, d. h. durch Umformung derselben mittels einer Matrixschaltung die Farbwiedergabeeigenschaften des Filmabtasters für die bunten Farben verbessert werden können.

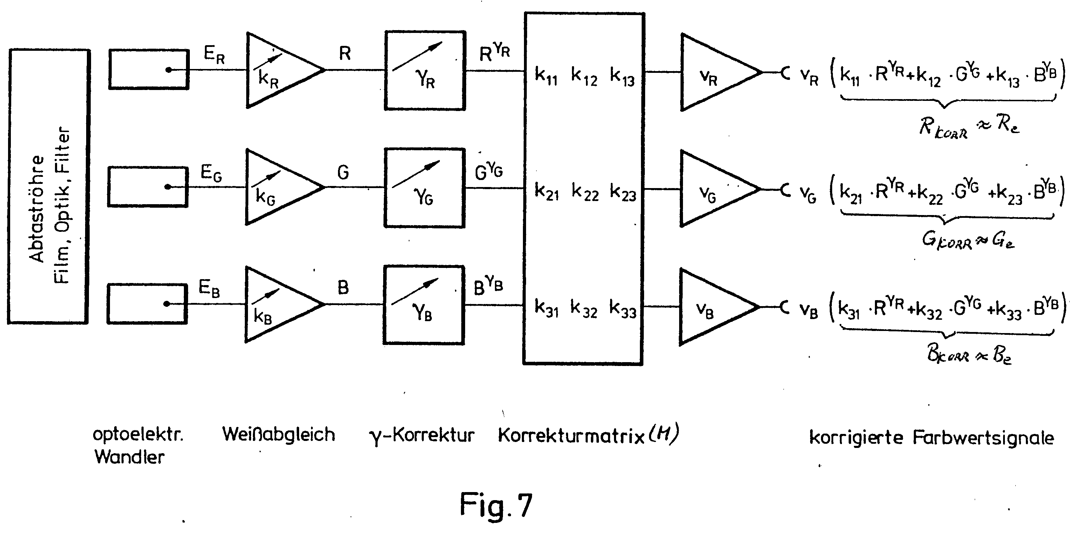

Fig. 7 zeigt ein Blockschaltbild für eine derartige Schaltung. Die lineare Matrizierung ist schaltungstechnisch leicht zu realisieren. Auch der Störabstand wird durch eine derartige Schaltung nicht wesentlich verschlechtert, wenn man dafür sorgt, dass die negativen Koeffizienten nicht grösser als das 0,2- bis 0,3fache des Wertes der Hauptdiagonalen werden.

Die realen spektralen Empfindlichkeitskurven der Abtaster können ferner durch die Matrizierung effektiver an die EBU-Spektralwertkurven angepasst werden.

Eine lineare Matrizierung entsprechend Fig.7 entspricht einer ersten linearen Näherung des nichtlinearen Zusammenhanges zwischen den fiktiven R-G-B-Werten der Film-Abtaster-Kombination und den entsprechenden farbvalenzmetrisch exakten Rₑ₋, Gₑ- und B.-Farbwerten. Formelmässig lässt sich dies folgendermassen ausdrücken:

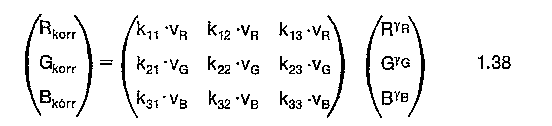

Die R-, G- und B-Werte sind die Farbwertsignale, die ein nicht korrigierter Abtaster liefert. Die Verstärkungsfaktoren v_{R}, v_{G} und v_{B} sind erforderlich, weil den Koeffizienten der Hauptdiagonalen der Korrekturmatrix willkürlich der Wert Eins zugeordnet wird, damit man die relativen Grössen der Matrixkoeffizienten vergleichen und ihren Einfluss auf den Störabstand leichter abschätzen kann.

Die naheliegendste und zugleich einfachste Möglichkeit, eine Bewertungsfunktion für die Optimierung festzulegen, besteht darin, die spektralen Empfindlichkeiten der Abtaster so zu matrizieren, dass die hieraus resultierenden neuen spektralen Empfindlichkeitskurven sich bestmöglich an die EBU-Kurven als Sollempfindlichkeiten derart anschmiegen, dass die Summe der Differenzenquadrate zwischen Soll- und Ist-Kurven Wellenlänge für Wellenlänge minimal wird. Die Bewertungsfunktion, die in diesem Fall aus drei Termen besteht, lässt sich folgendermassen formulieren.

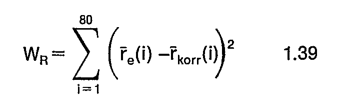

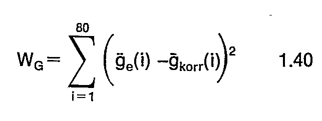

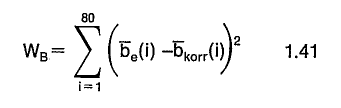

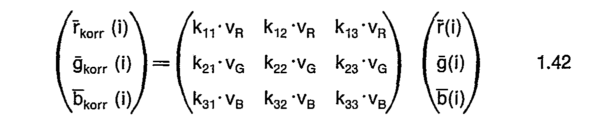

Eine Bewertungsfunktion dieser Art ist z. B. bei Dreibereichsfarbmessgeräten sowie elektronischen Farbfernsehkameras zweckmässig, da dort die spektralen Remissions- bzw. Transmissionseigenschaften der zu analysierenden Farben unbekannt sind. Bei der Abtastung von Filmen oder anderen Reproduktionen, die wie Filmfarben aus drei Komponenten, sei es durch additive oder subtraktive Farbmischung aufgebaut sind, besteht zusätzlich die Möglichkeit, die spektralen Eigenschaften dieser Komponenten bei der Festlegung der Bewertungsfunktion zu berücksichtigen. Beispielsweise kann man eine geeignete Anzahl von Filmfarben als Bezugsfarben definieren und für diese Farben einen mittleren Farbwiedergabeindex berechnen, der, falls die Farbwiedergabe für die gewählten Filmfarben einem Optimum zustrebt, einen maximalen Wert erreichen muss. Ausserdem kann durch eine geeignete Auswahl von Bezugsfarben das Optimierungsergebnis in eine gewünschte Richtung beeinflusst werden. Wählt man als Bezugsfarben lediglich eine Reihe von Hautfarben, so wird als Ergebnis der Optimierung vornehmlich die Farbwiedergabe der Hautfarben verbessert werden; andere Farben aber werden in nicht vorherbestimmter Weise mehr oder weniger verfälscht wiedergegeben. Um zu gewährleisten, dass die Farbwiedergabeeigenschaften eines optimierten Abtasters bezüglich aller zu reproduzierenden Farben gleichmässig verbessert werden, wurde eine relativ grosse Zahl von 536 Bezugsfarben festgelegt.

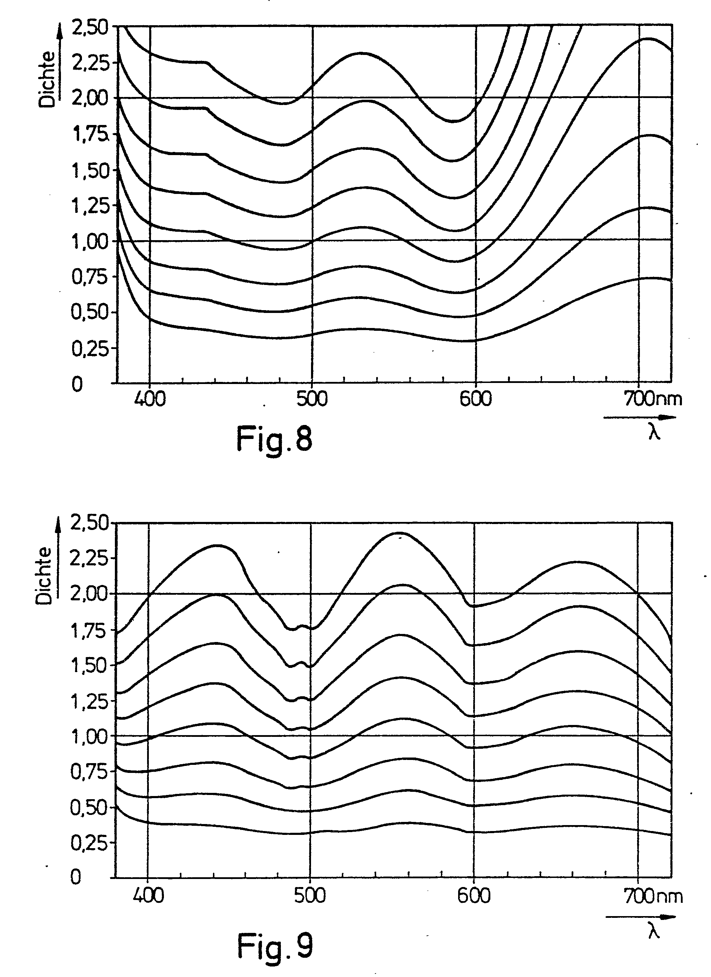

Jeder Testfarbansatz bestand aus:
1. einer Graustufe der Dichte D = 1 bei Lichtart 0₆₅ zum Unbuntabgleich der Abtaster.
2. 17 Filmtestfarben, die farbortgleich sind mit den in DIN 6169 genormten Testfarben;
3. sechs zu den Hautfarben farbortgleiche Filmtestfarben; 512 Testfarben, die sich aus 8³ Kombinationen als subtraktive Mischung von acht Grauäquivalentdichten der drei Farbstoffe Gelb, Magenta und Cyan, und zwar für die Grauäquivalentdichten D = 0,35, D = 0,55, D = 0,75, D = 1,0, D = 1,25, D = 1,5, D = 1,8 und D = 2,1 ergeben. In diesen 512 Filmtestfarben sind jeweils acht Graustufen enthalten, die man definitionsgemäss dann erhält, wenn die Grauäquivalentdichten der drei Farbstoffe alle den gleichen Wert haben. Die Graustufe mit der Dichte D = 0,35 entspricht Bildweiss und die mit der Dichte D = 2,1 Bildschwarz. Jeweils acht Graustufen für die Filme Nr. 2 und Nr. 3 sind in den Fig. 8 und 9 dargestellt.

Die sich hieraus ergebende Optimierungsaufgabe kann mathematisch wie folgt beschrieben werden:

Es sind die Koeffizienten der Korrekturmatrix 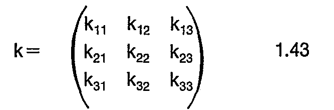 derart zu bestimmen, dass der über 536 Filmfarben gemittelte Farbwiedergabeindex (nach DIN 6169) 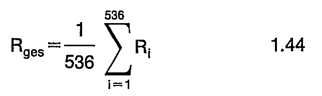 maximal wird.

Von den neun Koeffizienten der Matrix sind allerdings nur sechs unabhängig frei wählbar, da für jeden geänderten Koeffizientensatz der Weissabgleich durch Bestimmung der Verstärkungsfaktoren v_{R}, v_{G} und v_{B} wiederhergestellt werden muss. Es handelt sich hier also um ein Optimierungsproblem mit sechs unabhängigen Variablen. Geht man davon aus, dass die gesuchten Koeffizienten zwischen + 0,3 und - 0,3 liegen können und dass die maximale Auflösung, d.h. der kleinste realisierbare Faktor 10-³ betragen soll, so gibt es 4,6 1016 verschiedene mögliche Kombinationen, von denen eine entsprechend der Bewertungsfunktion die optimale Lösung darstellt.

Als geeignete Optimierungsstrategie wurde die Mutations-oder Evolutionsstrategie verwendet, da diese in der Lage ist, Nebenmaximas wieder zu verlassen.

Ausgangspunkt der Optimierung war die Einheitsmatrix. Da von den neun zu bestimmenden Koeffizienten nur sechs unabhängig variabel sind, wurde mit Hilfe eines Zufallsgenerators eine Zahl von 1 aus 6 ausgelost. Der entsprechende Koeffizient wurde um einen bestimmten Betrag Ak verändert, der Abtaster zwecks Normierung, wie vorstehend erwähnt, durch Bestimmung von v_{R}, _{VG} und _{VB} neu auf Bildweiss abgeglichen und der über 536 Farben gemittelte Farbwiedergabeindex berechnet. Ist der neue Farbwiedergabeindex grösser als der des Ausgangszustandes, wird die Änderung beibehalten und die Prozedur kann neu beginnen; im anderen Fall wurde zunächst versucht, ob eine entgegengerichtete Änderung des betreffenden Koeffizienten um -Δ k, nachdem zuvor die nicht erfolgreiche Änderung wieder rückgängig gemacht wurde, zu einer Verbesserung führt. War auch diese Massnahme erfolglos, wurde ein neuer Koeffizient ausgelost. Erst wenn alle Versuche bei allen sechs Koeffizienten erfolglos bleiben, musste entweder die Schrittweite Ak verkleinert werden, oder aber, wenn bereits die kleinste technisch sinnvolle Änderung erreicht ist, die Optimierung abgebrochen werden, da dann das Optimum erreicht war.

Mit dieser Evolutionsstrategie wurden die optimalen Matrixkoeffizienten für alle Abtaster-Film- Kombinationen bestimmt. Die speziellen Farbwiedergabeindizes der y-korrigierten und optimal matrizierten Abtaster-Film-Kombinationen sind in Spalte c der Tabellen im Anhang zusammengestellt. Bei allen bunten Testfarben ist eine deutliche Verbesserung der Farbwiedergabeeigenschaften festzustellen; die Wiedergabe der Grautöne wurde durch die Korrekturmatrix kaum beeinflusst.

Ebenfalls die gemittelten Farbwiedergabeindizes sowie die Standardabweichungen bestätigen, dass die Farbwiedergabeeigenschaften aller Abtaster-Film-Kombinationen deutlich verbessert wurden.

Besonders bemerkenswert ist, dass die ermittelten Koeffizientensätze jeweils für einen Abtaster bei allen untersuchten Filmen nahezu gleich waren, so dass je Abtaster ein mittlerer Koeffizientensatz angegeben werden kann. Diese mittleren Koeffizientensätze sind im Anhang ebenfalls in den Tabellen angegeben. Die mit diesen Koeffizienten ermittelten Farbwiedergabeindizes (Spalte d) unterscheiden sich bis auf R12 (spezieller Farbwiedergabeindex der Testfarbe Nr. 12) kaum von den Farbwiedergabeindizes, die jeweils mit den optimierten Koeffizienten berechnet wurden, obwohl noch ein weiterer formaler Unterschied in den Berechnungsmethoden beider Fälle bestand. Im Falle c) wurden die korrigierten R-G-B-Farbwerte mit den Koeffizienten der optimierten Matrix berechnet, hierbei wurden rein rechnerisch negative Farbwerte zugelassen, so dass sich im Ergebnis nur noch die Restfehler der Farbanalyse widerspiegeln, die mit den einfachen elektronischen Korrekturmassnahmen nicht kompensiert werden können. Im Fall d) wurden neben der Korrekturmatrix mit den gemittelten Koeffizienten die Eigenschaften des additiven Wiedergabesystems dadurch berücksichtigt, dass etwaige negative Farbwerte nicht zugelassen und willkürlich zu Null gesetzt wurden. Lediglich der Farbwiedergabeindex der Testfarbe Nr. 12, deren Farbort ausserhalb des von den Primärfarben aufgespannten Dreieckes liegt, wurde deutlich kleiner.

Die optimalen Matrixkoeffizienten sind also unabhängig von den spektralen Eigenschaften der Filmfarbstoffe, sie hängen jedoch von der Auswahl der Testfarben ab. Das Ergebnis der Optimierung wird jedoch dann unabhängig von der Auswahl der Bezugsfarben, d. h. dem Eindruck der Testfarben bei der Bezugsbeleuchtung, wenn die Testfarben in einem empfindungsgemässen Farbraum gleichmässig verteilt sind. So ergaben sich fast die gleichen Matrixkoeffizienten unabhängig davon, ob mit 536 Filmtestfarben oder nur mit den Testfarben Nr. 1 bis Nr. 8 nach DIN 6169 gerechnet wurde. Dies ist besonders wichtig, da es beweist, dass zu einer Optimierung nur wenige Testfarben erforderlich sind, und diese Optimierung in der oben beschriebenen Form mit vertretbarem Aufwand auch noch experimentell durchgeführt werden kann.

In den Fig. 10 und 11 sind die Auswirkungen der Optimierung für zwei Filme und den zweiten Abtaster in der CIE-UCS-Farbtafel dargestellt. Besonders bemerkenswert sind die grossen Sättigungsfehler des unkorrigierten Abtasters, sie können durch die beschriebenen Korrekturmassnahmen fast völlig beseitigt werden.

Die Auswirkungen der Matrizierung auf die effektiven spektralen Kanalempfindlichkeiten der Abtaster sind in den Fig. 12 und 13 dargestellt. Man sieht, dass die matrizierten Kurven jetzt zwar auch negative Anteile besitzen und dass sie sich besser an die EBU-Kurven als die nicht korrigierten Abtastkurven anschmiegen, trotzdem bleiben grosse Unterschiede zwischen den EBU-Kurven und den durch die Korrekturmassnahmen erreichten Kurven bestehen. Trotz vergleichbarer guter Farbwiedergabeeigenschaften der korrigierten Abtaster sind ihre effektiven spektralen Empfindlichkeiten auch untereinander recht verschieden. Der Grund, weshalb die doch so unterschiedlichen Farbmischkurven zu so einheitlich guten Ergebnissen führen, scheint darin zu liegen, dass bei der Abtastung von bereits reproduzierten farbigen Vorlagen kein Metamerieproblem besteht. Mit der Korrekturmatrix lassen sich also die realen Abtastkurven optimal an die EBU-Spektralwertkurven anpassen, da die gefundenen Matrixkoeffizienten je Abtaster nahezu unabhängig von den spektralen Eigenschaften der verwendeten Filmfarbstoffe sind. Mit Hilfe der nichtlinearen y-Korrekturen werden sowohl die spektralen Eigenschaften der Abtaster als auch der Filmfarbstoffe berücksichtigt; dafür spricht die Tatsache, dass die erforderlichen y-Werte ausschliesslich von der Abtaster-Film-Kombination abhängen.

Die Korrektur des Grauabgleiches wurde bei den untersuchten Filmabtastern rechnerisch durchgeführt; dies war möglich, da die spektralen Daten der Filmfarbstoffe bekannt waren und sich deren Mischungsgesetze hinreichend genau beschreiben lassen. Bei realen Reproduktionssystemen sind meist beide Voraussetzungen nicht erfüllt, trotzdem kann der Grauabgleich in der oben beschriebenen Form auch experimentell durchgeführt werden, wenn in der abzutastenden Vorlage ein Graukeil mit mindestens drei (Schwarz, Weiss und ein mittleres Grau) unbunten Stellen vorhanden ist. Mit Hilfe der y-Korrektur können z.B. die abgetasteten Farbwertsignale so vorverzerrt werden, dass die korrigierten Signale in der Lage sind, mit Hilfe eines geeigneten Farbmischungssystems einen entsprechend abgestuften Graukeil zu reproduzieren.

Die Bestimmung der optimalen Matrixkoeffizienten, die für jedes Analysensystem prinzipiell nur einmal durchgeführt werden muss, da die Koeffizienten unabhängig von den spektralen Daten der verwendeten Farbstoffe sind, ist ebenfalls z.B. mit Hilfe der Evolutionsstrategie experimentell durchführbar. Wie die Untersuchungen gezeigt haben, sind bereits acht sorgfältig ausgesuchte Bezugsfarben völlig ausreichend, um die Optimierung durchzuführen. Wegen der Vielzahl der Versuche ist es jedoch einfacher, diese Optimierung auf einem Grossrechner durchzuführen, sofern die spektralen Kanalempfindlichkeiten des Systems bekannt sind.

Die beschriebenen Korrekturmassnahmen beschränken sich nicht nur auf die Farbanalyse von Reproduktionssystemen, sondern es lassen sich ebenfalls mit den gleichen Prinzipien die absoluten Messgenauigkeiten von Farbmessgeräten nach dem Dreibereichsverfahren verbessern. Insbesondere Densitometer, die wegen der Nichteinhaltung der Luther-Bedingung keinesfalls zu den Farbmessgeräten gerechnet werden dürfen, können mit den oben beschriebenen Korrekturmassnahmen zu einfachen Farbmessgeräten umfunktioniert werden.

Im folgenden wird ein Beispiel für die Farbsynthese wiedergegeben, bei dem aus farbvalenzmetrisch korrekten bzw. korrigierten Primärfarbsignalen die Farbstoffkonzentration für ein nach dem Prinzip der subtraktiven Farbmischung arbeitendes Wiedergabesystem bzw. im Falle des Tiefdrucks die Auszugsdichte bestimmt werden.

Die Primärfarbsignale werden dabei beispielsweise, wie im vorstehend beschriebenen Beispiel für die Farbanalyse gewonnen.

Die bei der subtraktiven Farbmischung entstehenden, durch ihre Normfarbwerte X, Y und Z gekennzeichneten Mischfarben sind eindeutig durch die Konzentration _{C}y, _{CM} und c_{c} der drei im Farbwiedergabesystem verwendeten Grundfarben bestimmt, wobei folgende Beziehungen gelten, wenn als subtraktives Farbwiedergabesystem ein Farbfilm angenommen ist. 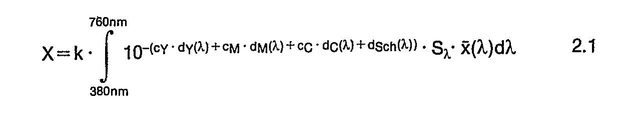 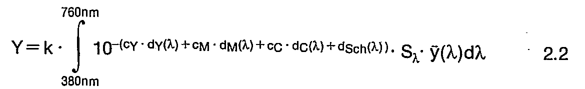 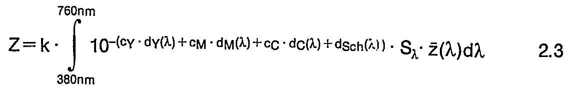 wenn mit 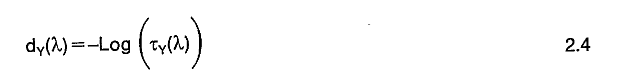 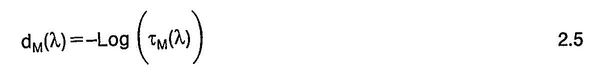 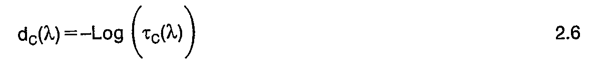 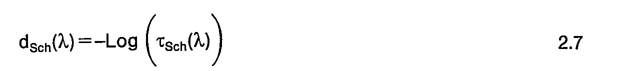 die Farbstoff-Dichten bezeichnet sind. Hierbei bedeuten
τ_{sch} (λ) den spektralen Transmissionsgrad eines Schichtträgers;
_{T}y (λ) den spektralen Transmissionsgrad einer gelben Farbstoffschicht;
τ_{M} (λ) den spektralen Transmissionsgrad einer Magenta-Farbstoffschicht;
τ_{c} (λ) den spektralen Transmissionsgrad einer Cyan-Farbstoffschicht;

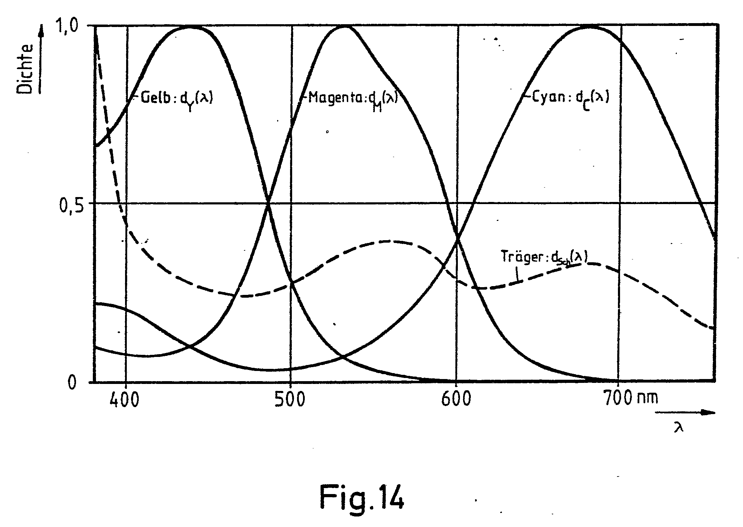

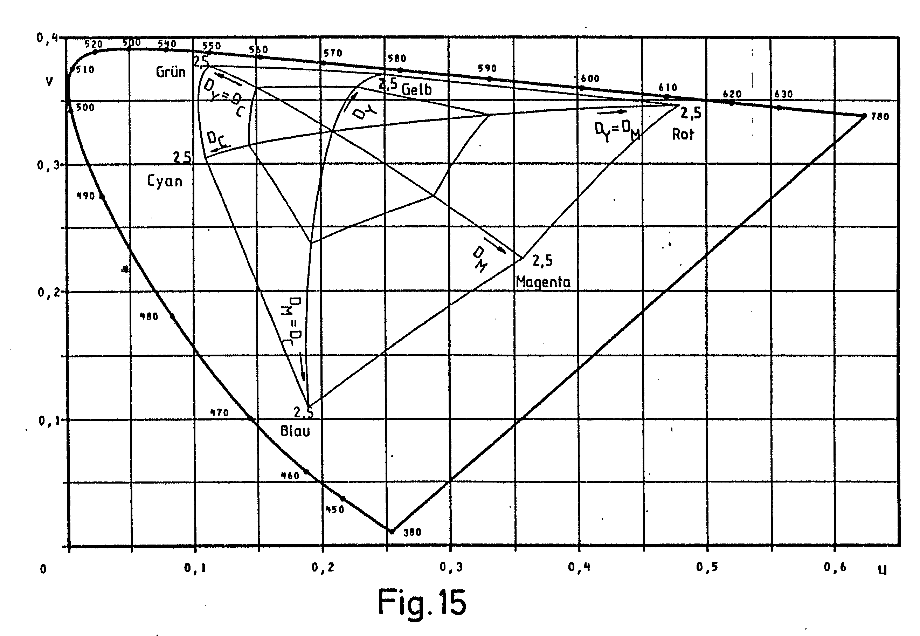

und S_{λ}, die spektrale Strahlungsverteilung der beleuchtenden Lichtquelle. Fig. 14 zeigt die spektralen Dichten, Fig. 15 die ermischbaren Farbarten eines solchen Farbstoffsystems.

Soll eine valenzmetrisch exakte Wiedergabe mit Hilfe eines derartigen subtraktiven Synthesesystems erreicht werden, müssen für die Farbvalenzen der Vorlagefarben diejenigen Konzentrationen ermittelt werden, die in subtraktiver Mischung bei dem gegebenen Farbstoffsystem zu gleichen Farbvalenzen führen, was mathematisch bedeutet, dass das exponentielle Integralgleichungssystem 2.1 bis 2.3 mathematisch nach der Konzentration aufgelöst werden muss. Da dies in geschlossener Form nicht möglich ist, werden Näherungslösungen angegeben, die zum einen die Forderung nach valenzmetrisch exakter Farbwiedergabe erfüllen, und zum anderen schaltungstechnisch einfach zu handhaben sind.

In einem ersten Schritt wurden die realen Farbstoffe des Wiedergabesystems durch optimalfarbenartige Modellfarbstoffe ersetzt. Optimalfarben sind solche Körperfarben, deren Transmissions-oder auch Remissionskurven eine rechtwinklige Form besitzen, wobei nur die zwei Transmissions
grade τ(λ,) = 0 und τ(λ) = 1 bzw. die zwei Remissionsgrade β(λ) = 0 und β(λ) = 1 und höchstens zwei Sprungstellen im sichtbaren Wellenlängenbereich vorkommen dürfen.

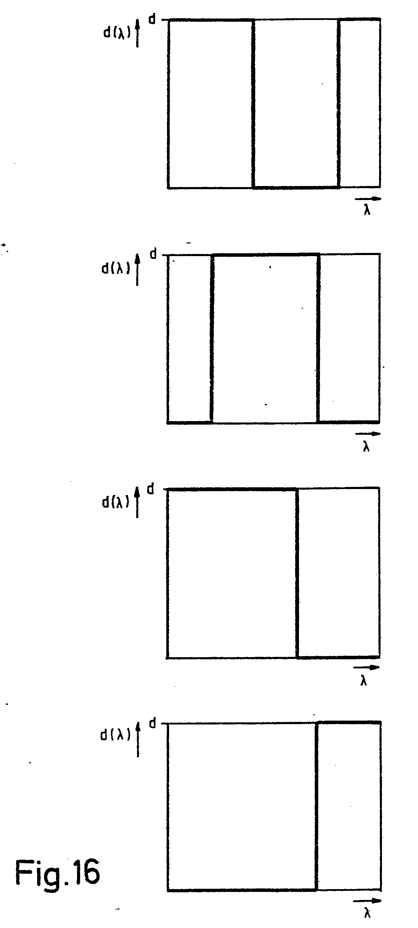

Wenn man die zugehörigen spektralen Dichten in Abhängigkeit von der Wellenlänge aufträgt und dabei unterstellt, dass die Absorption in den verschiedenen Wellenlängenbereichen nicht unendlich gross wird, erhält man spektrale Dichteverläufe, deren Typen in Fig. 16 wiedergegeben sind, und die im Rahmen dieser Anmeldung als optimalfarbenartige Modellfarbstoffe bezeichnet werden.

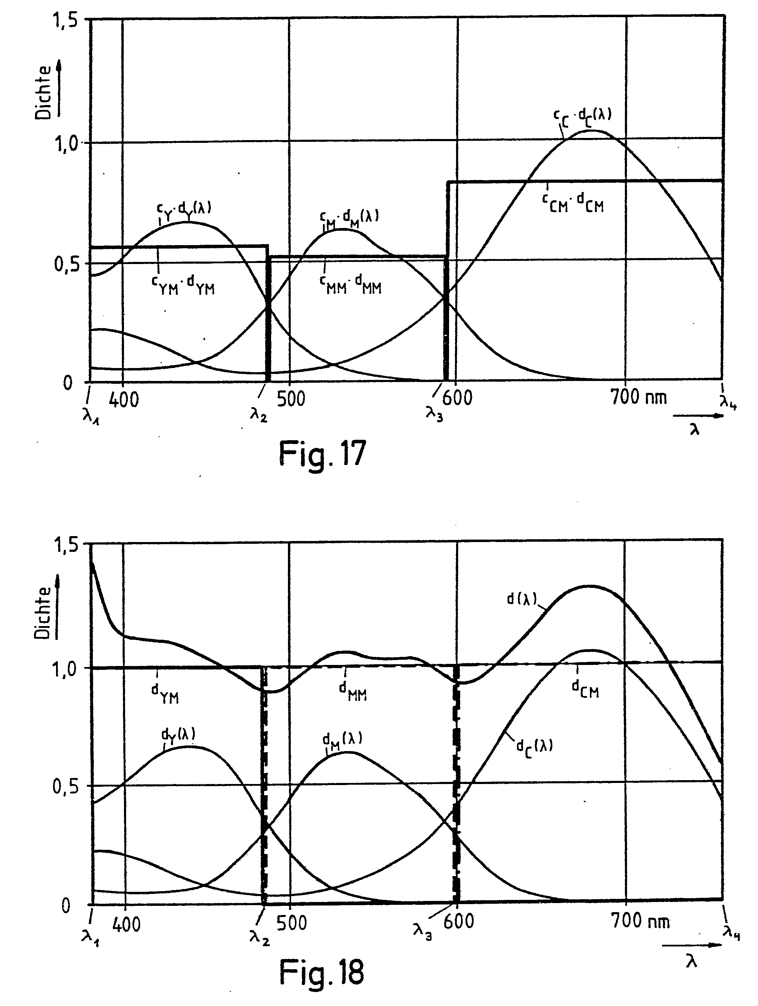

Fig. 17 zeigt, wie die realen Farbstoffe schematisch mit optimalfarbenartigen Modellfarbstoffen nachgebildet werden. Der sichtbare Wellenlängenbereich ist in drei Teilwellenlängenbereiche unterteilt. In den verschiedenen Teilwellenlängenbereichen gilt

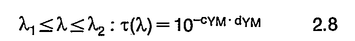

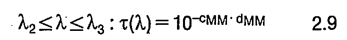

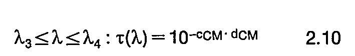

Da in den einzelnen Teilwellenlängenbereichen jeder Modellfarbstoff einen konstanten Dichtewert hat und die beiden anderen Modellfarbstoffe die Dichte Null aufweisen, lassen sich die Gleichungen 2.1 bis 2.3 mit der vereinfachenden Annahme, dass das Trägermaterial vollkommen transparent sei (d_{Sch}λ ) = 0), in folgender Form schreiben

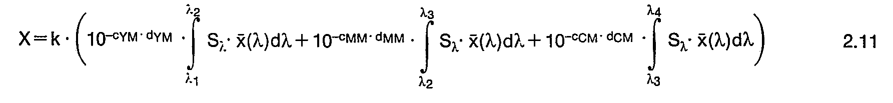

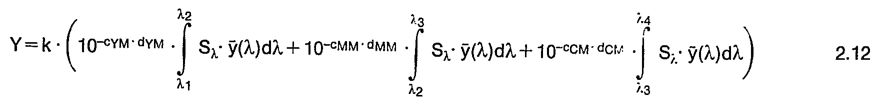

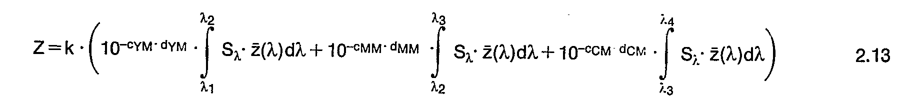

Die verschiedenen Integrale stellen dabei die Normfarbwerte der drei Spektralgebiete unter Berücksichtigung einer Lichtquelle mit der Strahlungsverteilung S_{λ} dar. Da im Wellenlängenbereich λ₁ bis λ₂ überwiegend die blauen Spektralanteile liegen, wird folgende Schreibweise eingeführt:

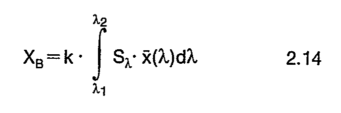

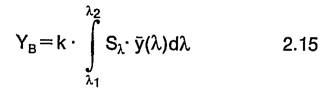

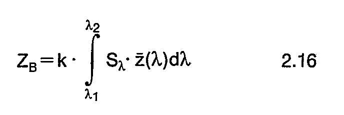

Analog liegen im Wellenlängenbereich λ₂ bis λ₃ überwiegend die grünen Spektralanteile 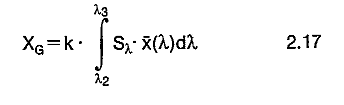 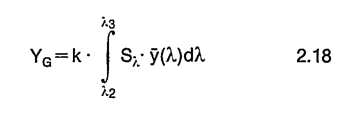 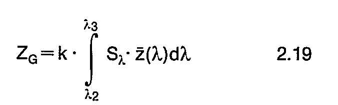 und im Bereich λ₃ bis λ₄ die roten Spektralanteile

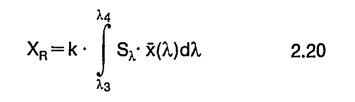

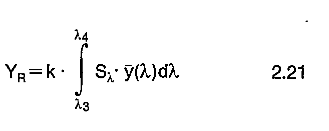

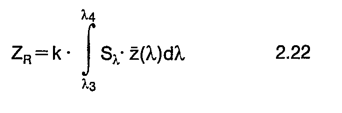

Diese Ausdrücke in die Gleichungen 2.11, 2.12 und 2.13 eingesetzt, ergibt

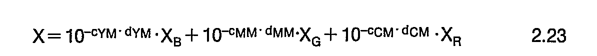

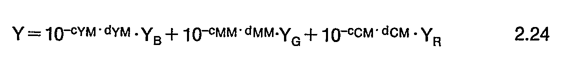

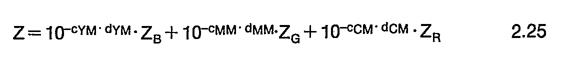

Dies entspricht einer additiven Farbmischung, wobei die Faktoren 10^{-ε}m . dCM, 10^{-cMM d}MM und 10-^{cYM}. dYm den Anteil der Primärvalenzen an der additiven Mischung festlegen, so dass sie den Farbwerten R, G und B entsprechen.

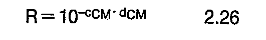

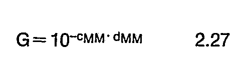

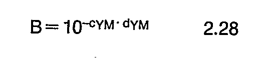

Das bedeutet, dass die Modellkonzentrationen C_{YM}, C_{MM} und C_{CM} die Anteile der durch die Intervallgrenzen festgelegten Primärvalenzen an der additiven Mischung bestimmen. Für diesen Fall der optimalfarbenartigen Modellfarbstoffe ohne sogenannte Nebendichten lässt sich die subtraktive Farbmischung auf die additive zurückführen, und das Gleichungssystem 2.23 bis 2.25 kann nach den Konzentrationen C_{YM}, C_{MM} und C_{CM} aufgelöst werden.

Es wurden ferner, wie in Fig. 18 gezeigt, die optimalfarbenartige Modellfarbstoffe so festgelegt, dass sie in subtraktiver Mischung ein aselektives Grau der Dichte D = 1 ergeben. Die Modell- konzentrationen sind dann definitionsgemäss die Einheitskonzentrationen C_{YM} = C_{MM} = C_{CM} = 1^{.}

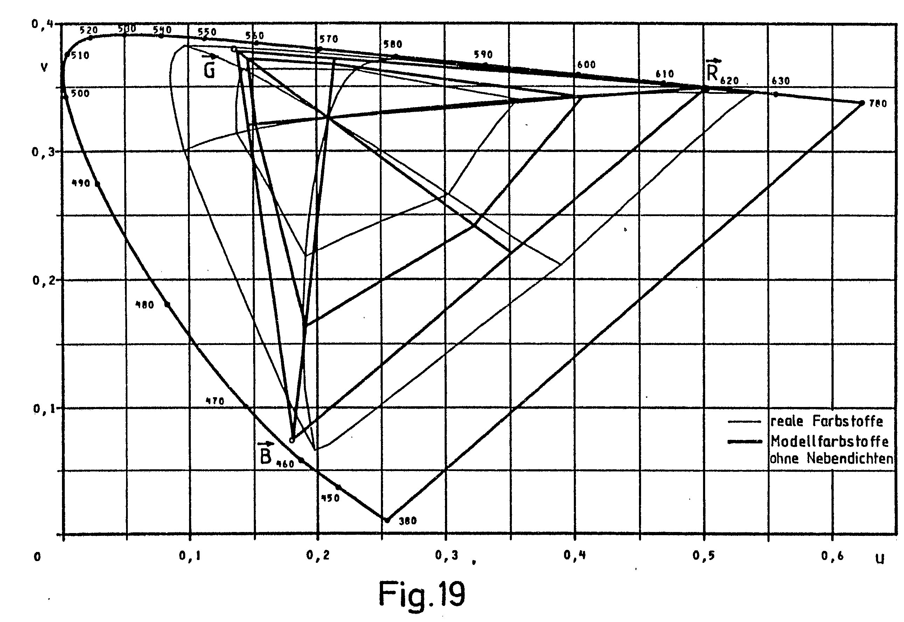

Mit Hilfe des so abgeglichenen Modellfarbstoffsystems wurden nach den Gleichungen 2.1 bis 2.3 die ermischbaren Farbarten für die Grauäquivalente Dₘᵢₙ = 0 bis Dₘₐₓ = 3.2 berechnet und ihre Farbörter, wie in Fig. 19 dargestellt, in der CIE-UCS-Farbtafel dargestellt. Die willkürlich festgelegten Grenzen der Teilwellenlängenbereiche führen zu den zusätzlich eingezeichneten Primär- → → → valenzen R, G, B.

Auffällig ist die zunächst geringe Übereinstimmung des mit Hilfe der Modellfarbstoffe ermischbaren Farbartenbereichs mit demjenigen der realen Farbstoffe.

Da die Dichten der Modellfarbstoffe, gemäss Fig. 18, in den jeweiligen Spektralgebieten d_{YM} = ^{d}_{MM} = d_{CM} = 1 sind, gilt

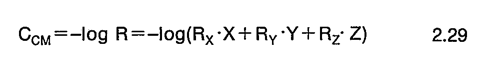

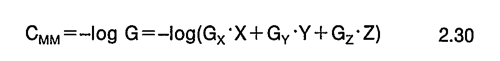

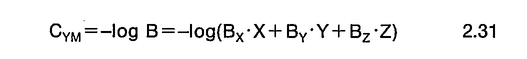

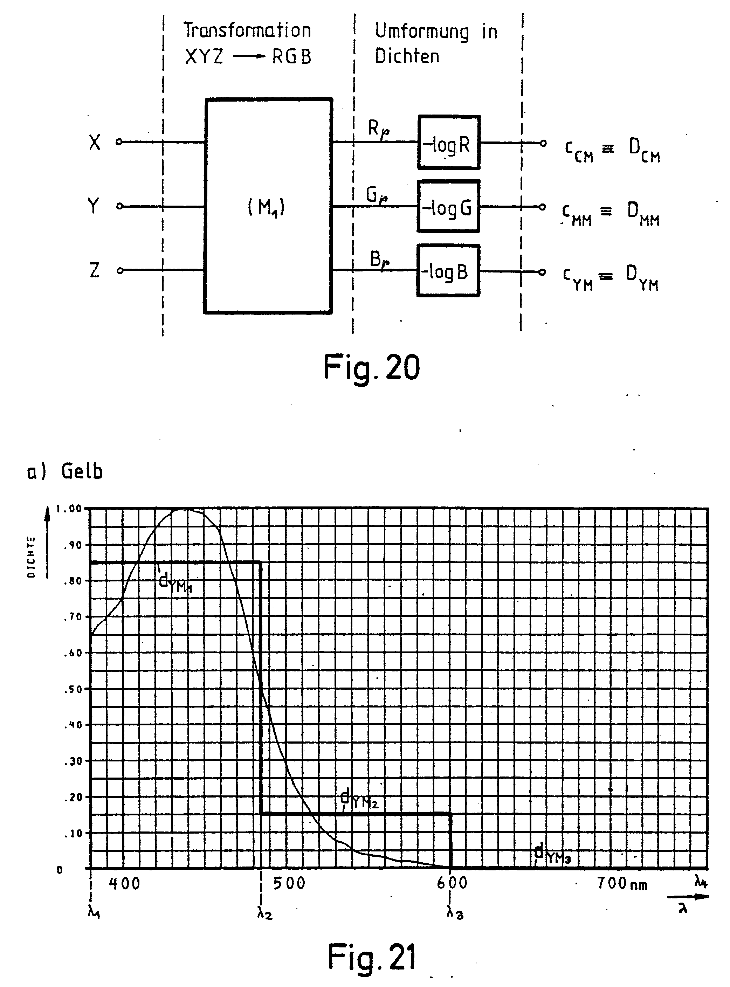

Dieses Ergebnis lässt sich schaltungstechnisch durch das Blockschaltbild der Fig. 20 darstellen, wobei für die Matrixschaltung die folgende Beziehung gilt:

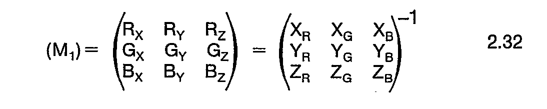

Die Koeffizienten R, bis B_{z} sind durch die Art der Aufteilung des sichtbaren Spektralgebietes in die drei Teilwellenlängenbereiche bestimmt, was aus den Gleichungen 2.14 bis 2.22 deutlich wird.

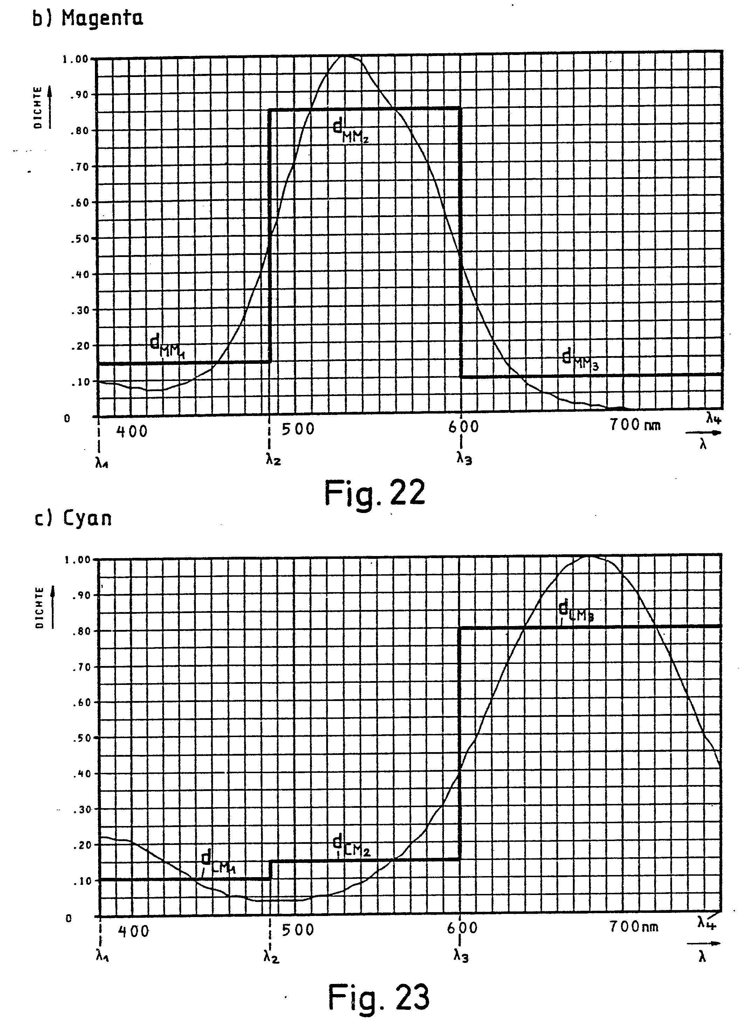

Zur weiteren Verbesserung der Farbwiedergabe wurde wie folgt vorgegangen. Da die realen Farbstoffe nicht nur in ihren Hauptabsorptionsgebieten wirksam sind, sondern auch unerwünschte Absorptionen in den anderen Spektralgebieten haben, wurden die Modellfarbstoffe mitsogenannten Nebendichten versehen, wie dies in den Fig. 21 und 22 und 23 für die Einzelfarbstoffe dargestellt ist.

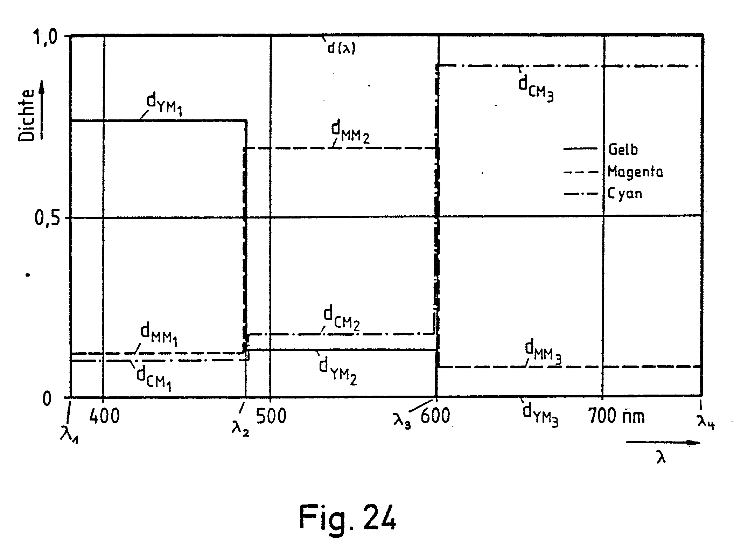

Fig. 24 zeigt die Graumischung für die derart gewählten Modellfarbstoffe mit Nebendichten.

In den drei Wellenlängenbereichen gilt für die resultierende spektrale Dichte bei den Modellkonzentrationen C_{YM}, C_{MM} und C_{CM}

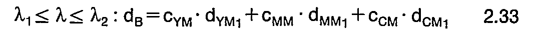

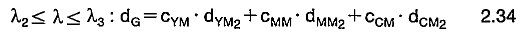

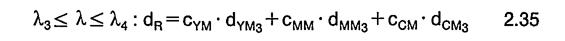

Da in den blauen, grünen und roten Spektralgebieten die Summendichten d_{B}, d_{G} und d_{R} jeweils wieder wellenlängenunabhängig sind, können die Gleichungen 2.1 und 2.3 in folgender Form geschrieben werden

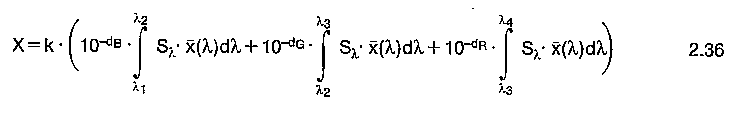

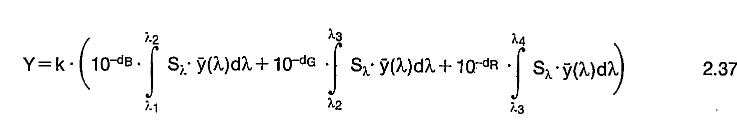

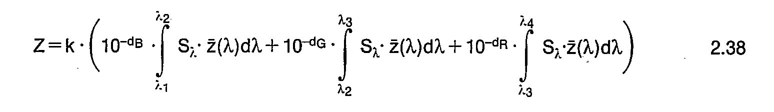

Die Teilintegrale stellen auch hier die Normfarbwerte der drei Spektralgebiete bei Berücksichtigung der Wiedergabelichtquelle S₂ dar. Nach Festlegung der Spektralgebietsgrenzen kann somit jedes Gebiet wieder als Primärvalenz gekennzeichnet durch die Normfarbwerte nach den Gleichungen 2.14 bis 2.22 aufgefasst werden. Hieraus folgt

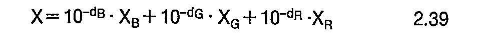

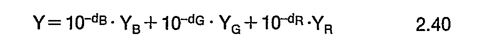

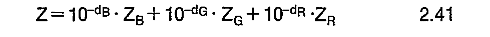

Die Faktoren 10^{-dB}, 10^{-dG} und 10^{-dR} können auch in diesem Fall als Anteile R, G, und B der Primär- → valenzen R, G und B an der additiven Mischung gedeutet werden, so dass gilt

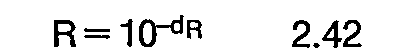

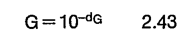

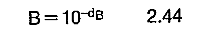

Nur setzt sich hier die Grösse der Anteile nach 2.33 bis 2.35 aus den Haupt- und Nebendichten aller drei Modellfarbstoffe zusammen. Ändert sich z.B. die Konzentration C_{CM} des Cyan-Modellfarbstoffes, so hat dies Einfluss auf die Summendichten d_{R}, dₑ und d_{B} und somit ändert sich nicht nur der Anteil R der Primärvalenz R, sondern es ändern sich auch durch die Nebenwirkungen in den beiden anderen Spektralgebieten die Anteile G und B der Primärvalenzen G und B.

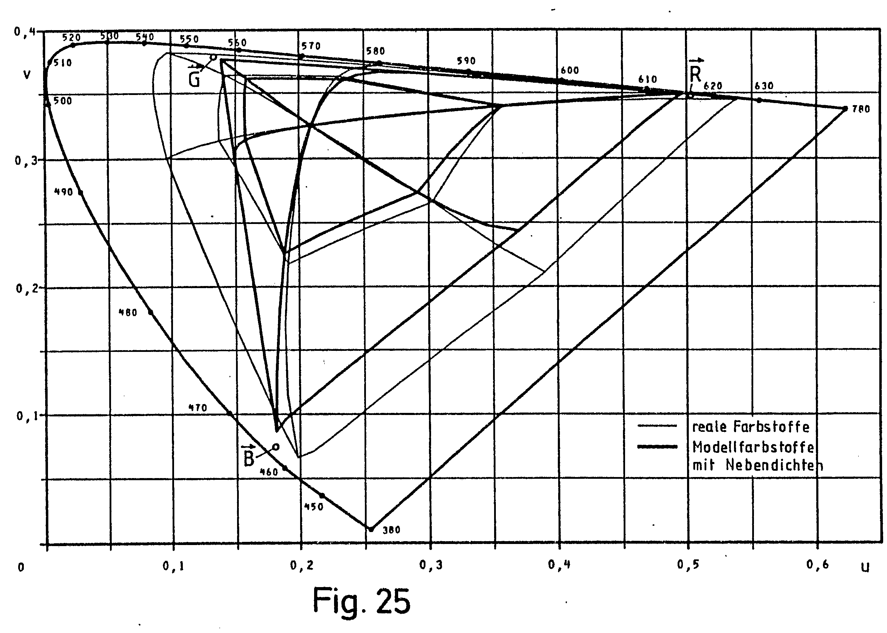

Für die Darstellung in der CIE-UCS-Farbtafel gemäss Fig. 25 bedeutet dies, dass die Mischungsergebnisse eines Modellsystems mit Nebendichten nicht mehr auf geraden Verbindungslinien liegen, wenn die Modellkonzentration verändert wird, sondern auf gekrümmten Linien, wie dies bei realen Farbstoffen in subtraktiver Mischung der Fall ist. Man erkennt ferner, dass der Umfang des erzielbaren Farbartbereichs für das Modellfarbstoffsystem kleiner geworden ist. Die vollständige Lösung für optimalfarbenartige Modellfarbstoffe mit Nebendichten erhält man durch Einsetzen der Farbwerte aus den Gleichungen 2.42 bis 2.44 in 2.39 bis 2.41 und durch Auflösung nach R, G und B.

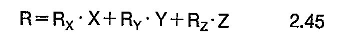

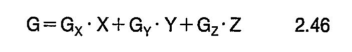

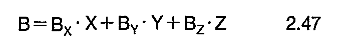

Anderseits gilt nach den Gleichungen 2.33 bis 2.35 und 2.42 bis 2.44 auch 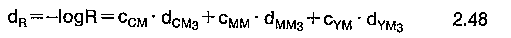 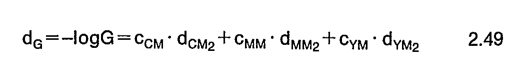 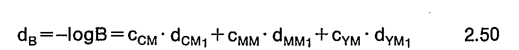 und hieraus lassen sich die Modellkonzentrationen c_{GM}, C_{MM} und C_{CM} berechnen

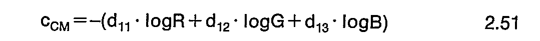

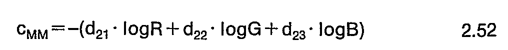

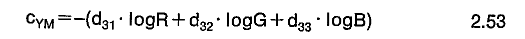

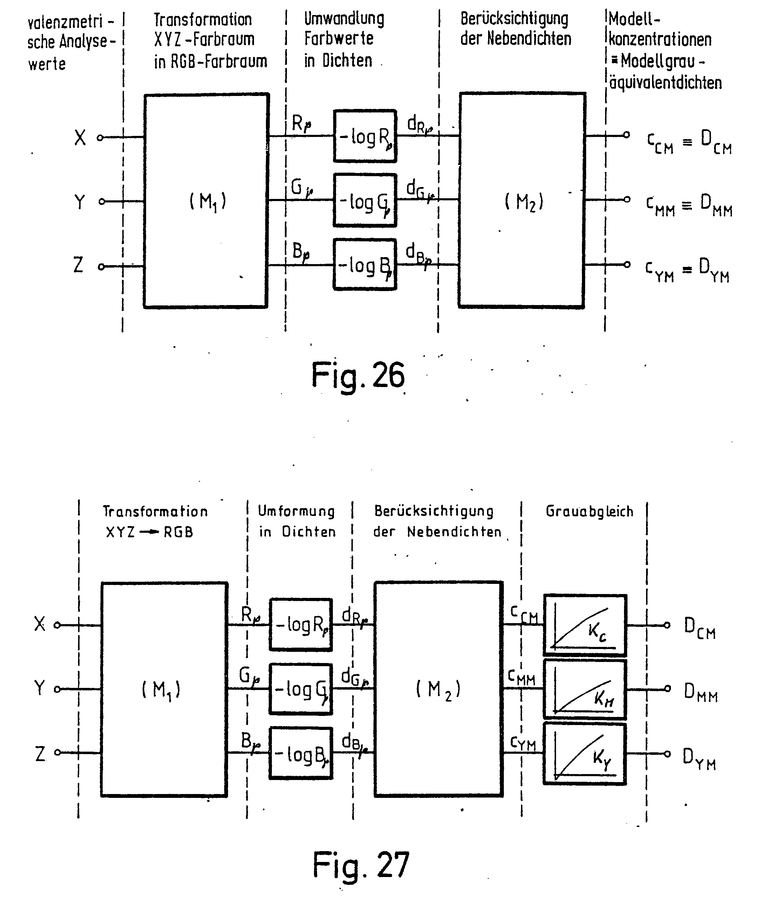

Das Ersetzen der Modellfarbstoffe ohne Nebendichten durch solche mit Nebendichten lässt sich schaltungstechnisch durch Anfügen einer Matrixschaltung M2 an die in Fig. 20 gezeigte Schaltung realisieren, wie dies in dem Blockschaltbild der Fig. 26 gezeigt ist.

Für die Matrix gilt hierbei

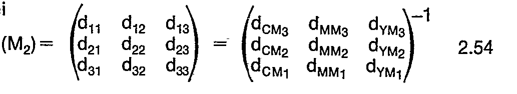

Die Koeffizienten dieser Matrix sind durch die Wahl der Amplitudenverhältnisse der Haupt- und Nebendichten der Modellfarbstoffe in den einzelnen Teilwellenlängenbereichen bestimmt.

Um den wiedergebbaren Farbumfang des Modells auszuweiten wurde versucht, unter Lösung von der Anschaulichkeit, ausgehend von dem Blockschaltbild der Fig. 26, durch Optimierung die Koeffizienten der Matrizen (M₁) und CM₂) zu bestimmen.

Da das Modell eine näherungsweise Lösung für ein reales Farbstoffsystem ist, mit dem die Wiedergabefarben subtraktiv ermischt werden, wurde eine geeignete Anzahl von Bezugsfarben definiert, die mit Hilfe dieses realen Farbstoffsystems hergestellt sind. Für diese Bezugsfarben sind dann sowohl die valenzmetrischen Werte X, Y und Z als auch die Grauäquivalentdichten Dy, D_{M} und D_{C} bzw. auch die Konzentrationen C_{Y}, C_{M} und C_{C} bekannt. Das bedeutet, dass für die Bezugsfarben die exakten Lösungen der subtraktiven Gleichungen 2.1, 2.2 und 2.3 bekannt sind. Da von der Auswahl dieser Bezugsfarben unter Umständen das Optimierungsergebnis abhängt, wurden 512 Bezugsfarben festgelegt, die einigermassen gleichmässig im Farbraum verteilt sind. Es waren dies die in Fig. 15 dargestellten ermischbaren Farbarten der realen Farbstoffe für Grauäquivalentdichten von Dmin = 0,3 bis Dₘₐₓ = 2,5, wobei angemerkt werden muss, dass in dieser Darstellung der Übersicht wegen nicht alle Zwischenwerte eingezeichnet sind.

Für diese Bezugsfarben wurden nach Blockschaltbild Fig. 26 aus den Normfarbwerten X, Y und Z die Modellgrauäquivalentdichten Dy_{M}, D_{MM} und D_{cm} berechnet. Zwischen den realen und Modell-Grauäquivalentdichten kann anschliessend mit den Gleichungen 2.55 bis 2.57 für Gelb, Magenta und Cyan ein mittlerer quadratischer Abstand aebildet werden.

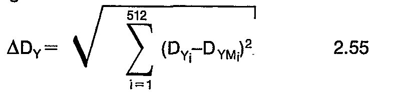

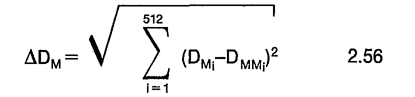

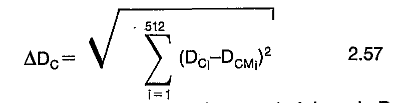

Für die Bewertungsfunktion wurde folgende Beziehung gebildet: 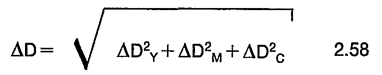 Ziel der Optimierung war, diesen mittleren quadratischen Abstand zu minimieren. Eine andere Möglichkeit besteht darin, den Farbwiedergabeindex für die genannten Farben zu optimieren.

Die Optimierung wurde aus den bereits bei der Farbanalyse erwähnten Gründen mittels einer Evolutionsstrategie durchgeführt.

Es wurde so vorgegangen, dass mit Hilfe eines Zufallsgenerators einer der 18 Matrixkoeffizienten der Matrizen M, und M₂ ausgelost wurde und dass dieser, von einem Anfangszustand ausgehend, um einen bestimmten Betrag verändert wurde. Dann wurden bei diesem Modellzustand für alle 512 Bezugsfarben, deren Normfarbwerte bekannt waren, die Modell-Konzentrationen bzw. -Grauäquivalentdichten berechnet und gemäss 2.58 der mittlere quadratische Abstand zwischen den tatsächlichen und den Modellwerten bestimmt. Wenn dieser abnahm, wurde die Änderung des Koeffizienten beibehalten und der Vorgang begann von neuem. Andernfalls wurde versucht, ob eine entgegengerichtete Änderung des Koeffizienten zu einer Verbesserung führte. Falls dies nicht der Fall war, wurde dieser Koeffizient unverändert gehalten und ein neuer ausgelost. In Abhängigkeit von der Erfolgs- oder Misserfolgsquote wurde der Betrag der Änderung grösser bzw. kleiner (Schrittweitensteuerung) gemacht. Wenn die kleinste technisch sinnvolle Änderung erreicht war, wurde die Optimierung abgebrochen und das Optimum war erreicht.

Wenn das Modell auf die zuvor beschriebene Weise optimiert wurde, ergaben sich nicht mehr zwangsläufig für die Bezugsgraustufen drei gleich grosse Modellkonzentrationen, da durch die Änderungen der Koeffizienten der Abgleich des 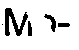 dellsystems gestört wurde. Daher wurde di, Schaltung gemäss Fig. 26 um einen Grauabgleich ergänzt, wie dies in Fig. 27 dargestellt ist. Die drei Kennlinien wurden bei jedem Optimierungsschritt derart bestimmt, dass die in den Bezugsfarben enthaltenen acht Graustufen von Dₘᵢₙ = 0 bis Dmax = 3,2 Modellgrauäquivalentdichten gleicher Grösse ergaben.

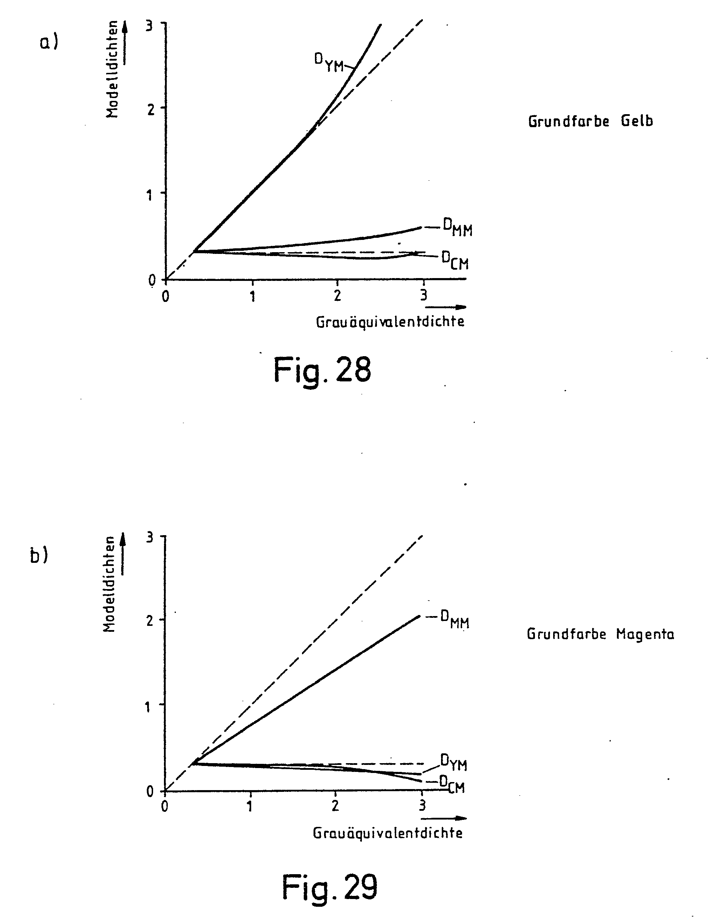

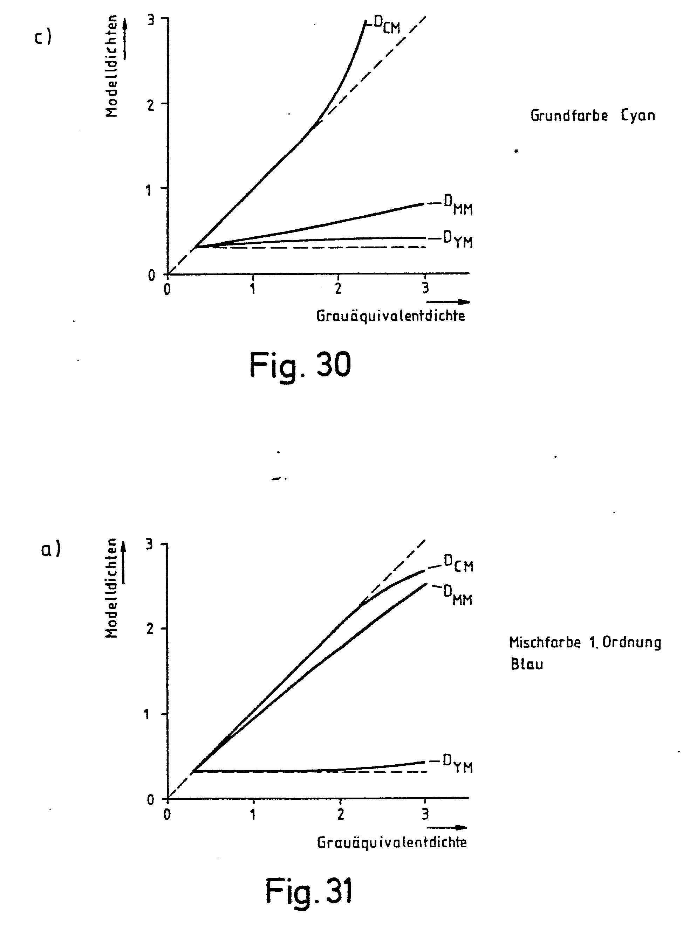

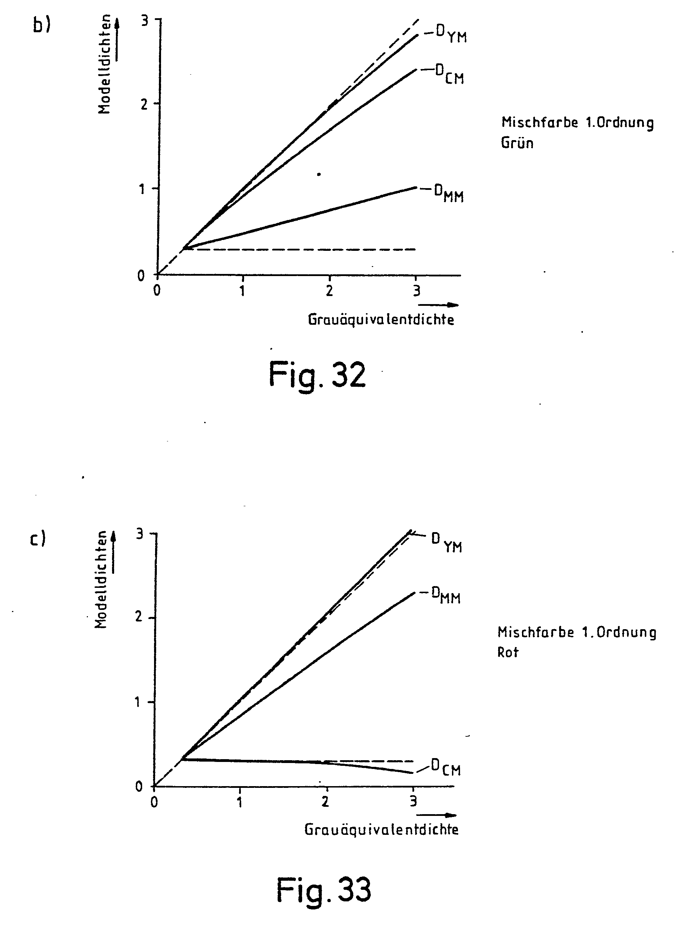

Für die bunten Bezugsfarben wurden zusätzliche Korrekturmassnahmen entwickelt, da, wie die Fig. 28 bis 30 zeigen, die dort mit ausgezogenen Linien wiedergegebenen Modelldichten für die vorgegebenen realen Bezugsgrundfarben Gelb, Magenta, Cyan, Abweichungen von den durch die strichlierten Geraden angegebenen tatsächlichen Farbdichten zeigen. Gleiches gilt, wie in den Fig. 31 bis 33 dargestellt, auch für die Mischfarben erster Ordnung.

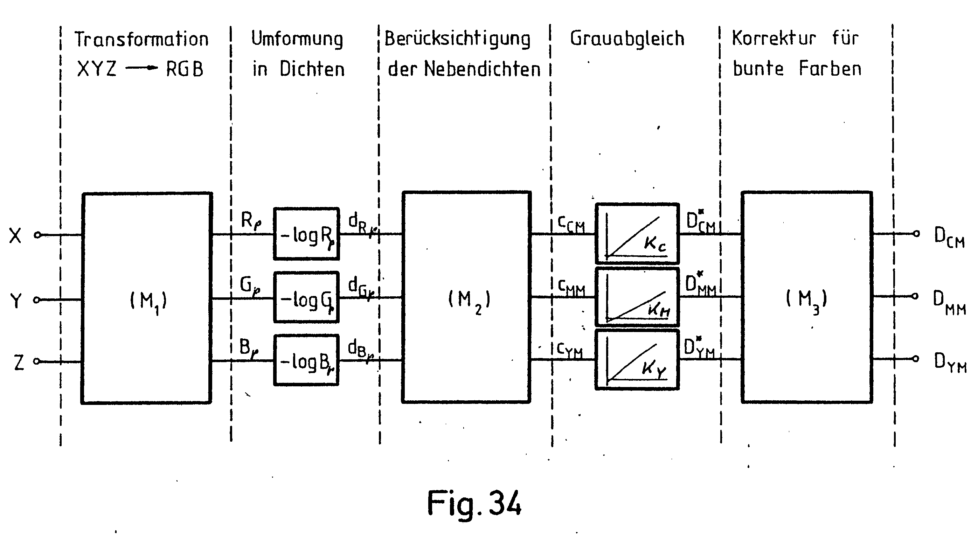

Die Nichtlinearität ergibt sich dadurch, dass die nichtlineare subtraktive Farbmischung durch einen Modellansatz bzw. eine Schaltung mit im wesentlichen linearen Teilgliedern angenähert wurde. Da diese Kennlinien jedoch in grossen Teilen durch Geraden angenähert werden können, wobei dies bis D = 2 sehr gut gilt, kann eine nachträgliche Korrektur dieser Modellgrauäquivalentdichten mit Hilfe einer einfachen Matrixschaltung M₃ entsprechend Fig. 34 durchgeführt werden, der die von dem Grauabgleich kommenden Signale zugeführt werden. Da durch den Grauabgleich bei jedem Optimierungsschritt gewährleistet wird dass für unbunte Bezugsfarben die Modellgrauäquivalentdichten exakt sind, hat diese Korrekturmatrix M₃ nur Einfluss auf die bunten Farben.

Zwecks optimaler Bestimmung der Koeffizienten der Matrix M₃ wurde eine Optimierung mittels der Evolutionsstrategie durchgeführt, bei der die Koeffizienten aller Matrizen M₁ M₂ und M₃ variiert wurden, so dass sich die Zahl der Freiheitsgrade aufgrund der zusätzlichen Korrekturmatrix M₃ auf 27 erhöhte. Der Ausgangszustand der Matrizen M₁ M₂ und M₃ zu Beginn der Optimierung wurde willkürlich gewählt, z.B. wurde von der Einheitsmatrix ausgegangen, d. h. von Modellfarbstoffen ohne Nebendichten.

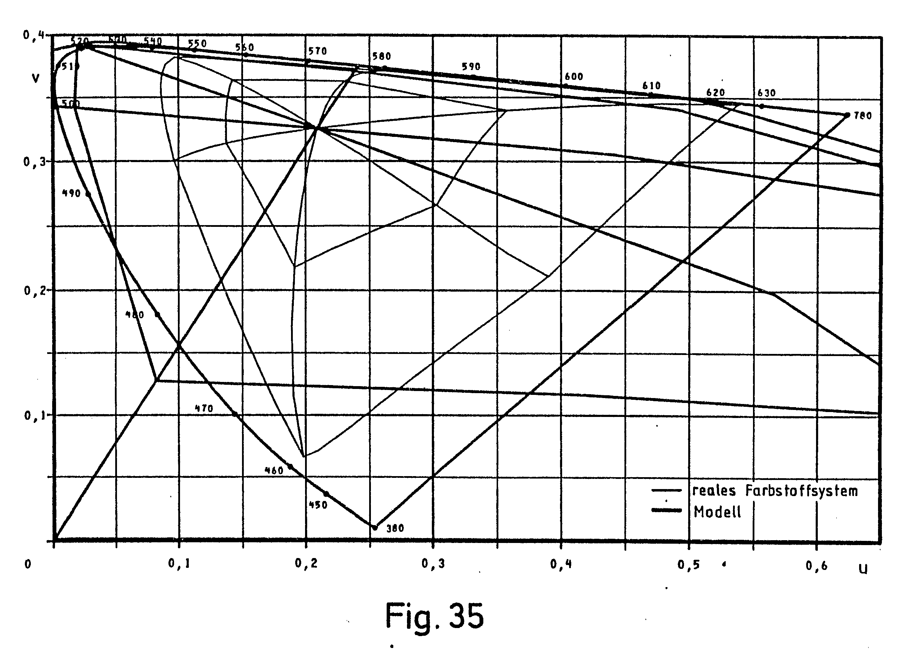

Dem entspricht ein sehr grosser Farbartbereich, wie aus Fig. 35 hervorgeht, dem ein Farbwiedergabe-Index R_{ges} = -462 entspricht.

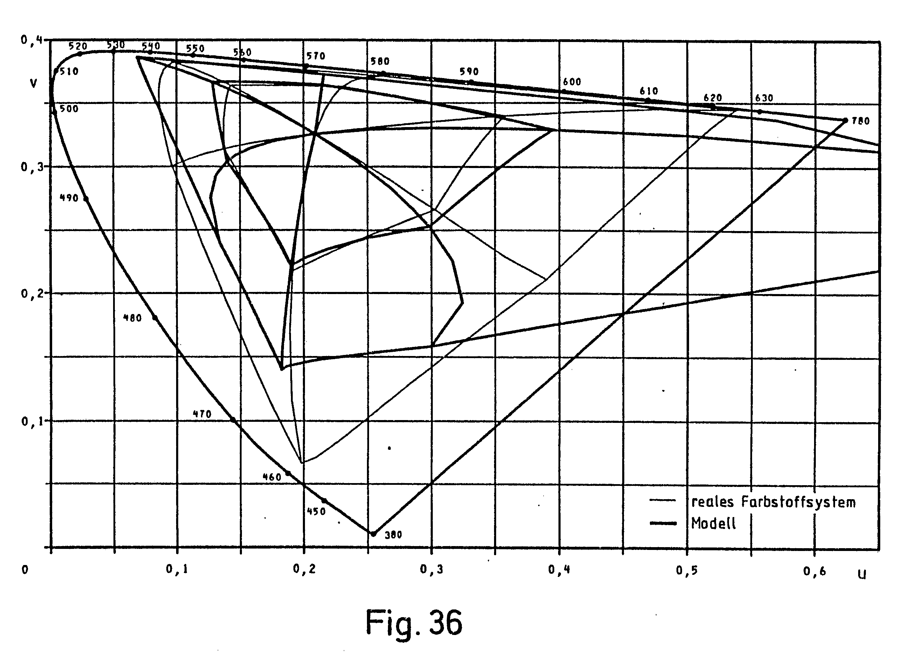

Nach nur 92 Optimierungsversuchen war bereits der in Fig. 36 dargestellte Modellzustand erreicht, der durch einen Gesamtfarbwiedergabe-Index Rgₑₛ = 52 gekennzeichnet wird.

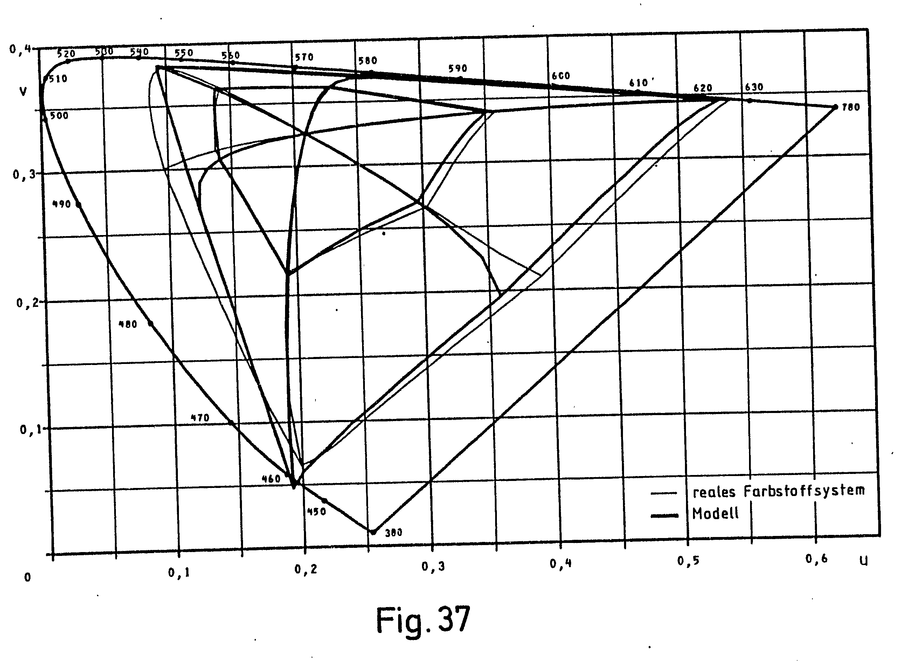

Der Modellfarbartbereich hat sich bereits erheblich dem Farbartbereich der realen Farbstoffe angenähert, und die Farbörter der Grundfarben Gelb, Magenta und Cyan und ebenso der Mischfarben erster Ordnung Rot, Grün und Blau liegen bereits auf gekrümmten Linien. Nach 10 425 Versuchen war das Optimum erreicht, da die Beträge, mit denen die zufällig herausgesuchten Koeffizienten verändert wurden, durch die Schrittweitensteuerung der Optimierungsstrategie die kleinste technisch sinnvolle Grösse erreicht hatten. Diesen Endzustand der Optimierung zeigt Fig. 37, und er wird gekennzeichnet durch einen Gesamtfarbwiedergabe-Index Rgₑₛ = 76. Die Mischungslinien haben sich weitgehend denen der realen Farbstoffe angeschmiegt.

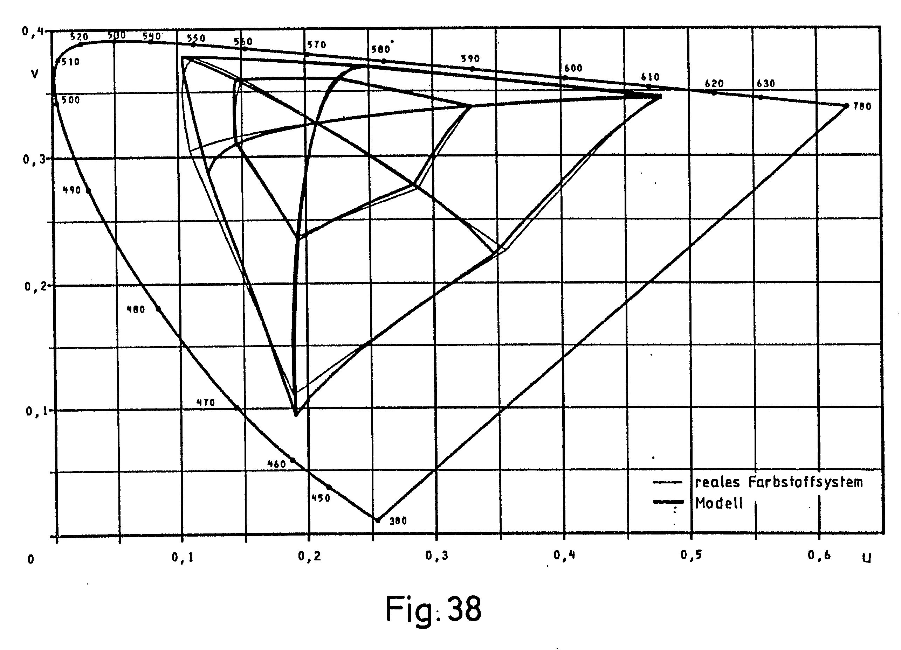

Es bleiben lediglich bei hohen Dichten Abweichungen bestehen. Wenn man sich jedoch auf einen für die Praxis sinnvollen Dichteumfang von Dₘᵢₙ = 0,3 bis Dₘₑₓ = 2,5 beschränkt, erhält man, wie in Fig. 38 dargestellt, eine sehr gute Annäherung an den Farbartbereich der realen Farbstoffe, der ebenfalls von Dₘᵢₙ = 0,3 bis Dₘₐₓ = 2,5 reicht. Der Gesamtfarbwiedergabe-Index liegt in diesem Fall bei R_{ges} = 89.

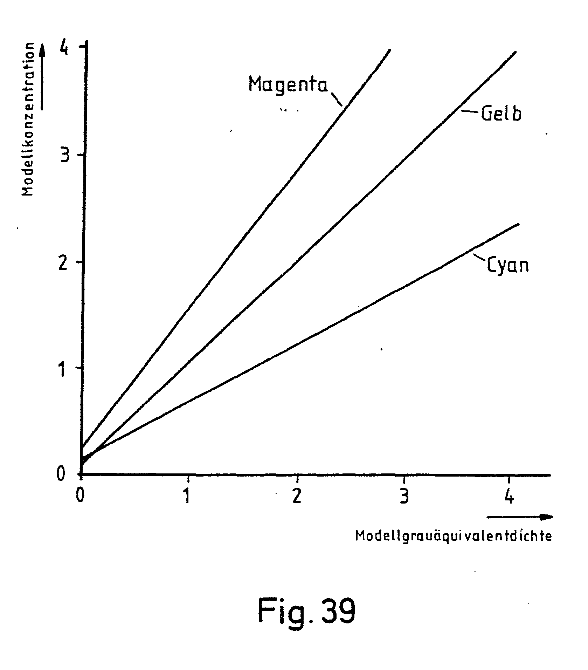

Fig. 39 zeigt für den Endzustand die zum Grauabgleich erforderlichen Kennlinien. Diese sind Geraden, da Grauäquivalentdichten und Konzentrationen für optimalfarbenartige Modellfarbstoffe in rein subtraktiver Mischung zueinander proportional sind. Dies bedeutet, jedoch lediglich für ein reales Farbstoffsystem mit rein subtraktiver Farbmischung, dass die Schaltung der Fig. 34 auf diejenige der Fig. 27 reduziert werden kann.

Bei nur überwiegend subtraktiv arbeitenden Reproduktionssystemen, wie z. B. dem Tiefdruck, ist dies nicht mehr der Fall.

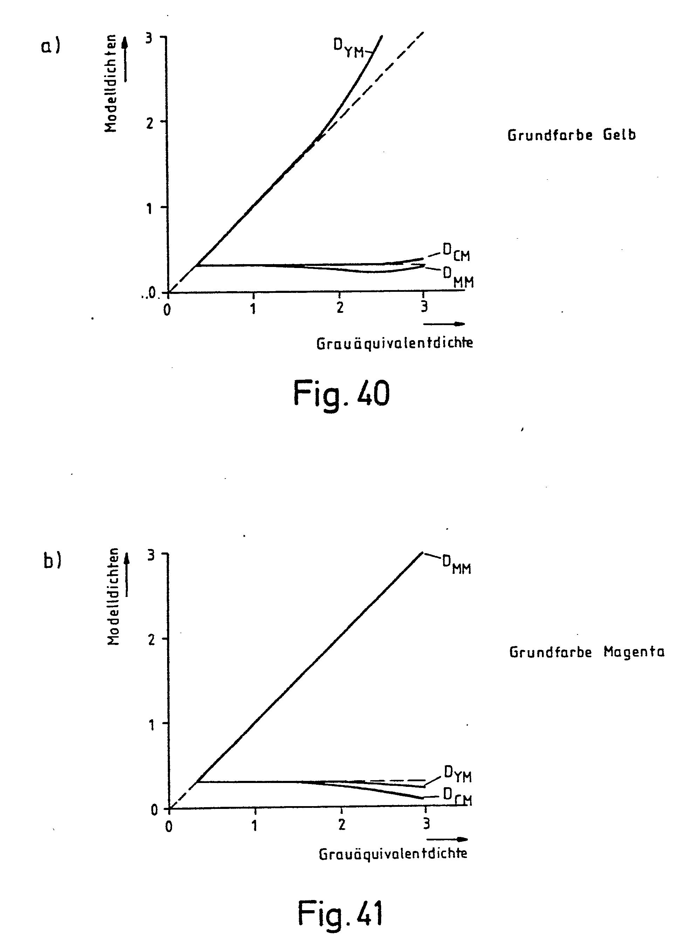

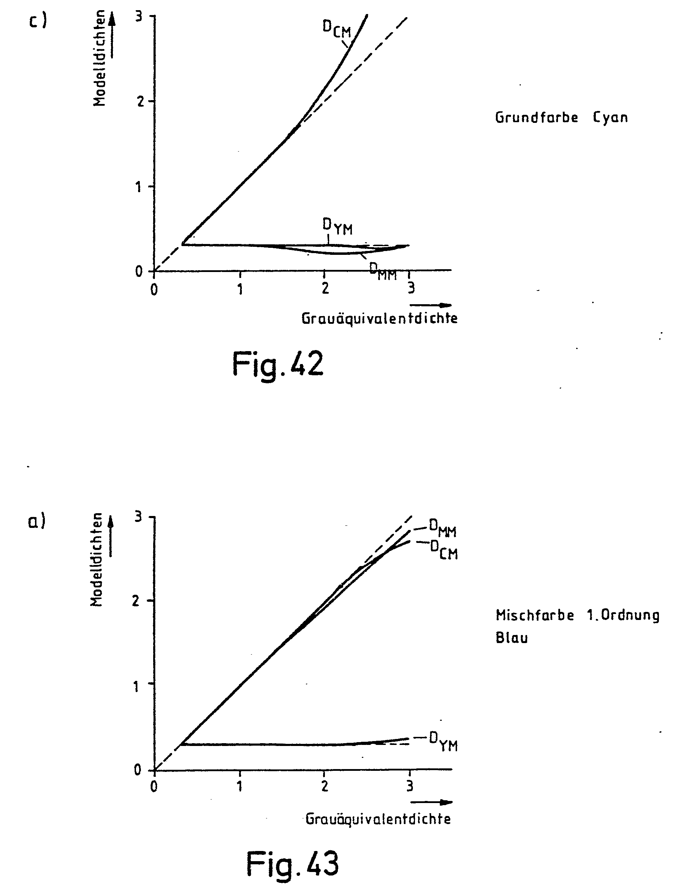

Die Wirksamkeit der Korrekturmatrix Mₐ für bunte Farben ergibt sich aus den Fig. 40 bis 45.

Die vorstehend beschriebenen Schaltungen können auf den Tiefdruck übertragen werden, da dessen Farbmischung subtraktiv oder zumindest überwiegend subtraktiv ist.

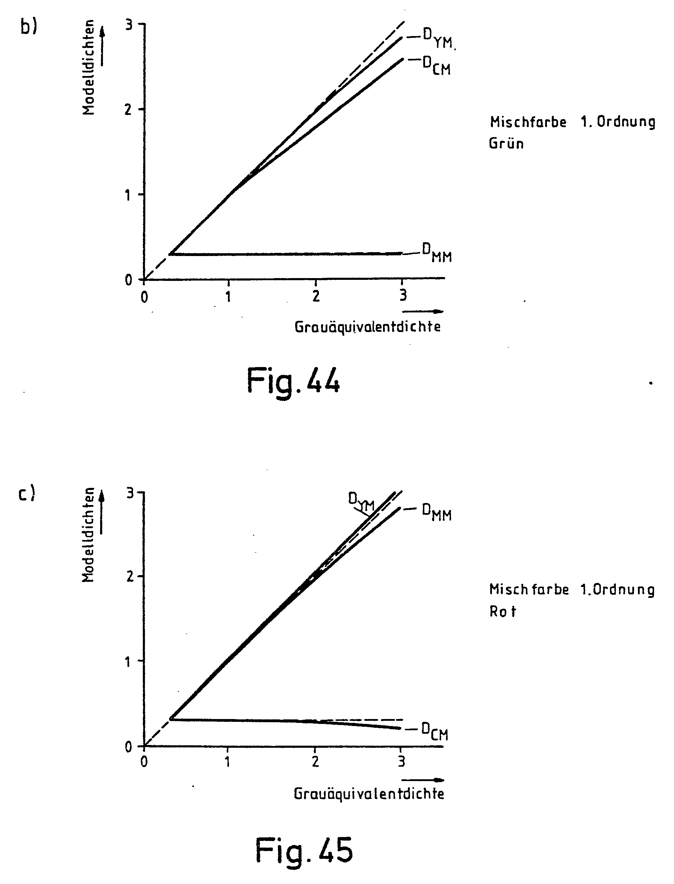

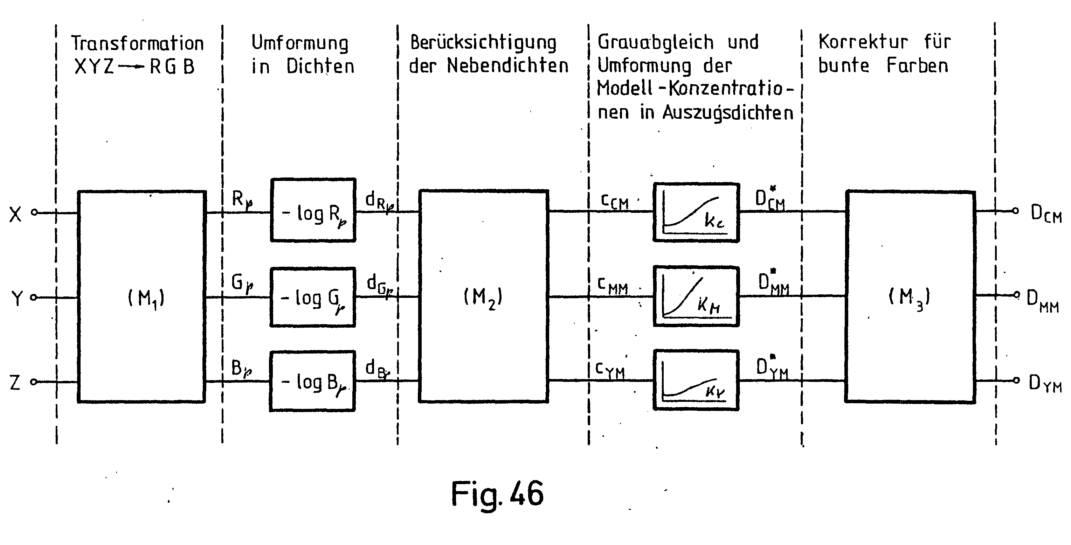

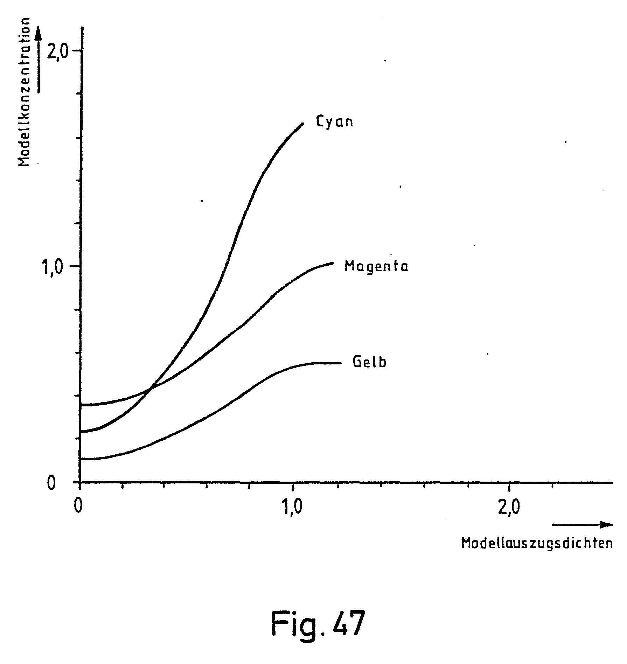

Fig. 46 zeigt eine derartige Schaltung. Sie unterscheidet sich von derjenigen der Fig. 34 lediglich dadurch, dass die Schaltungselemente für den Grauabgleich eine Umformung der Modellkonzentrationssignale in Auszugsdichtesignale durchführen, und dass die in Fig. 44 dargestellten Kennlinien für den Grauabgleich im Gegensatz zur rein subtraktiven Farbmischung keine Geraden mehr sind. Fig. 47 zeigt diese Kennlinie.

Der Grund hierfür liegt darin, dass es beim Tiefdruck keine strenge Proportionalität zwischen Modellkonzentrationen und Modellauszugsdichten gibt, wie es im analogen Fall des rein subtraktiv arbeitenden Farbstoffsystems zwischen Modellkonzentrationen und Modellgrauäquivalentdichten der Fall ist. Die Kennlinien für den Grauabgleich enthalten zusätzlich die Übertragungscharakteristik von den Dichten der Auszüge über die Ätztiefe der Näpfchen zu der übertragenen Farbstoffmenge. Diese bestimmt die in der Praxis häufig als Farbdichte bezeichnete Grösse, die dem in dieser Anmeldung benutzten Begriff der Konzentration proportional ist.

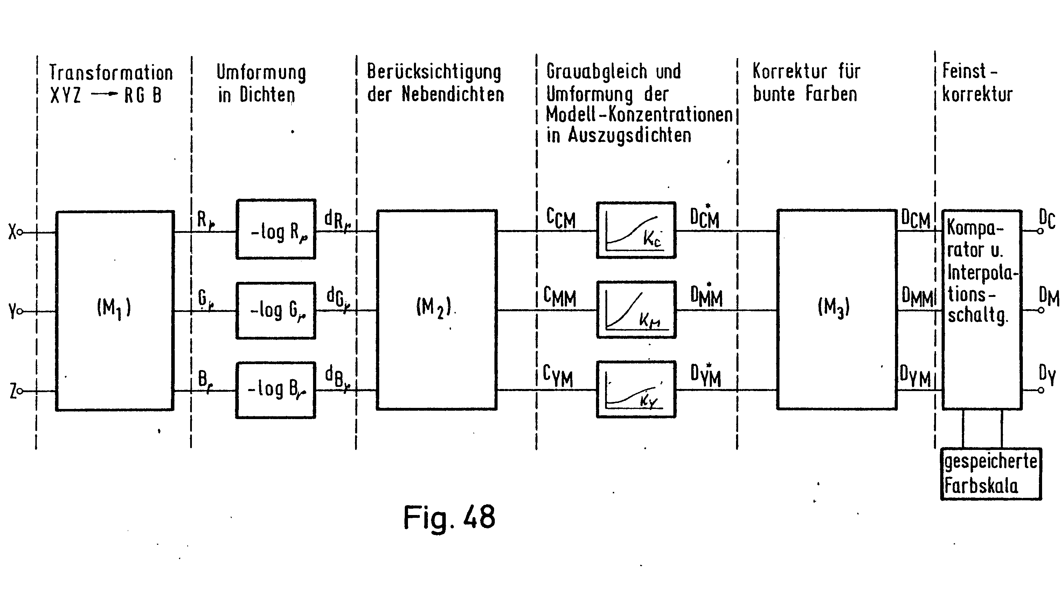

Eine weitere Verbesserung der Farbwiedergabeeigenschaft lässt sich bei der Schaltung der Fig. 46 erreichen, wenn man die erhaltenen Modellauszugsdichten D_{CM}, D_{MM}, D_{YM} mit diskreten Werten einer abgespeicherten Farbskala vergleicht. Hierzu dient eine Schaltung, wie sie in Fig. 48 angegeben ist, bei der die Modellauszugsdichtesignale einer Komparator- und Interpolationsschaltung zugeführt werden, welche an einen Speicher angeschlossen ist, in dem die Farbskala abgespeichert ist.

Da nämlich die Modellauszugsdichten und die Auszugsdichten des realen Farbstoffsystems zwei zueinander nur wenig verzerrte «Farbräume» bilden, kann die benötigte Anzahl der diskreten abgespeicherten Farben der Skala erheblich kleiner sein, als wenn die abgespeicherte Farbskala nach farbmetrischen Grössen auf der einen Seite und Konzentrationen auf der anderen Seite parametriert ist. Es werden somit die farbmetrischen Grössen mit Hilfe des Modells durch die Modellauszugsdichte ersetzt, wodurch sich ein einfacher Interpolationsalgorithmus ergibt.

Dieses Vorgehen ist besonders für den Tiefdruck geeignet, der nicht exakt den Gesetzmässigkeiten der subtraktiven Farbmischung gehorcht. Die aufgrund der Abweichung in der Farbmischung in den Modellauszugsdichten enthaltenen zusätzlichen Fehler können zusammen mit den prinzipiell durch den Modellansatz hervorgerufenen Fehlern durch die nachfolgende Interpolation in der weitgehend linearisierten Skala auf ein Minimum reduziert werden.

Man kann daher zumindest nach Vornahme dieser Feinkorrektur von einer farbvalenzmetrisch richtigen Farbsynthese sprechen.

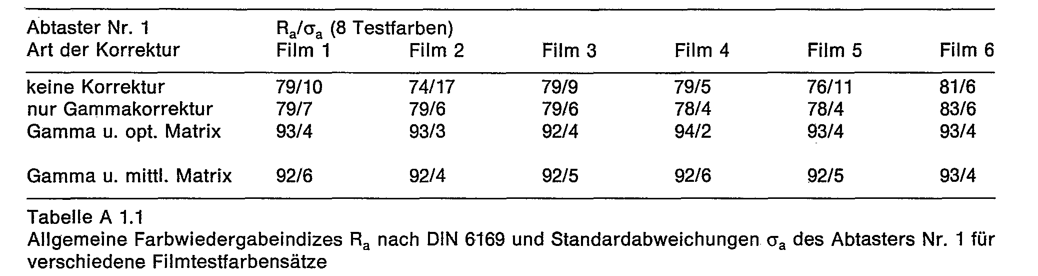

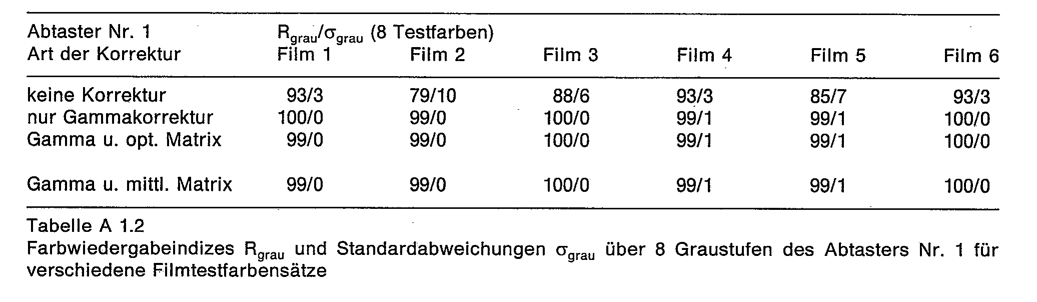

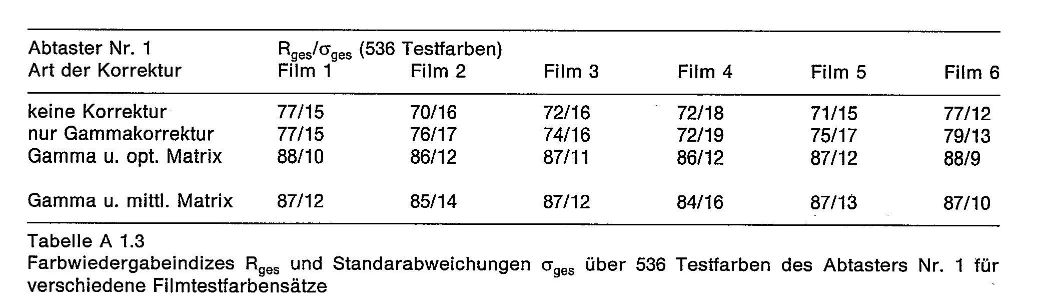

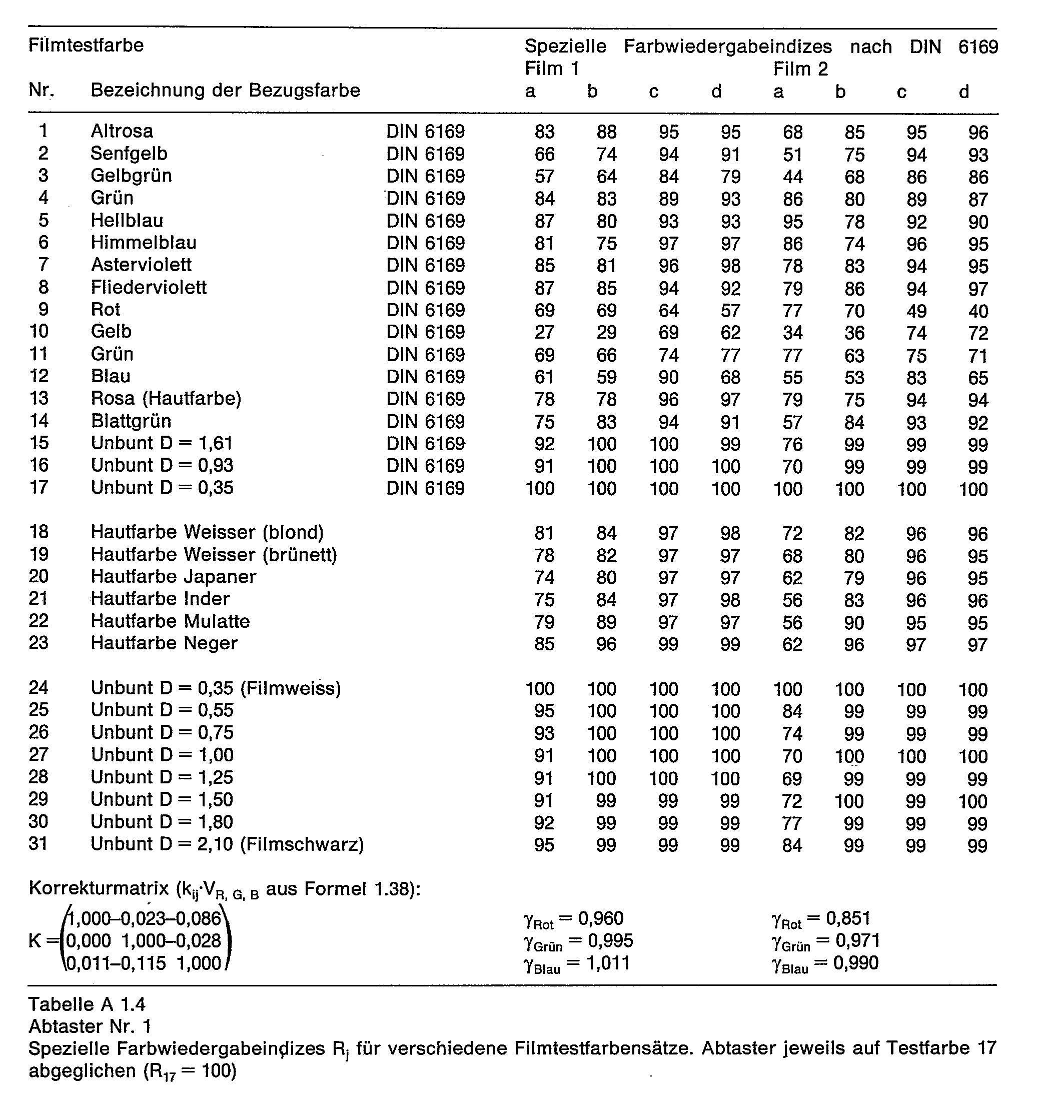

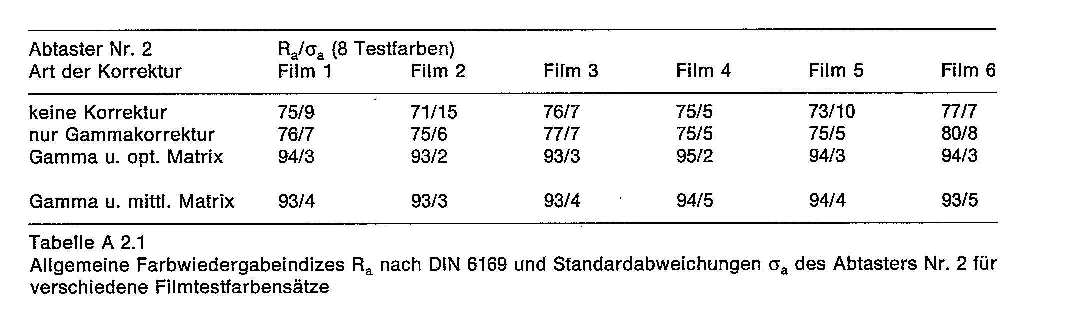

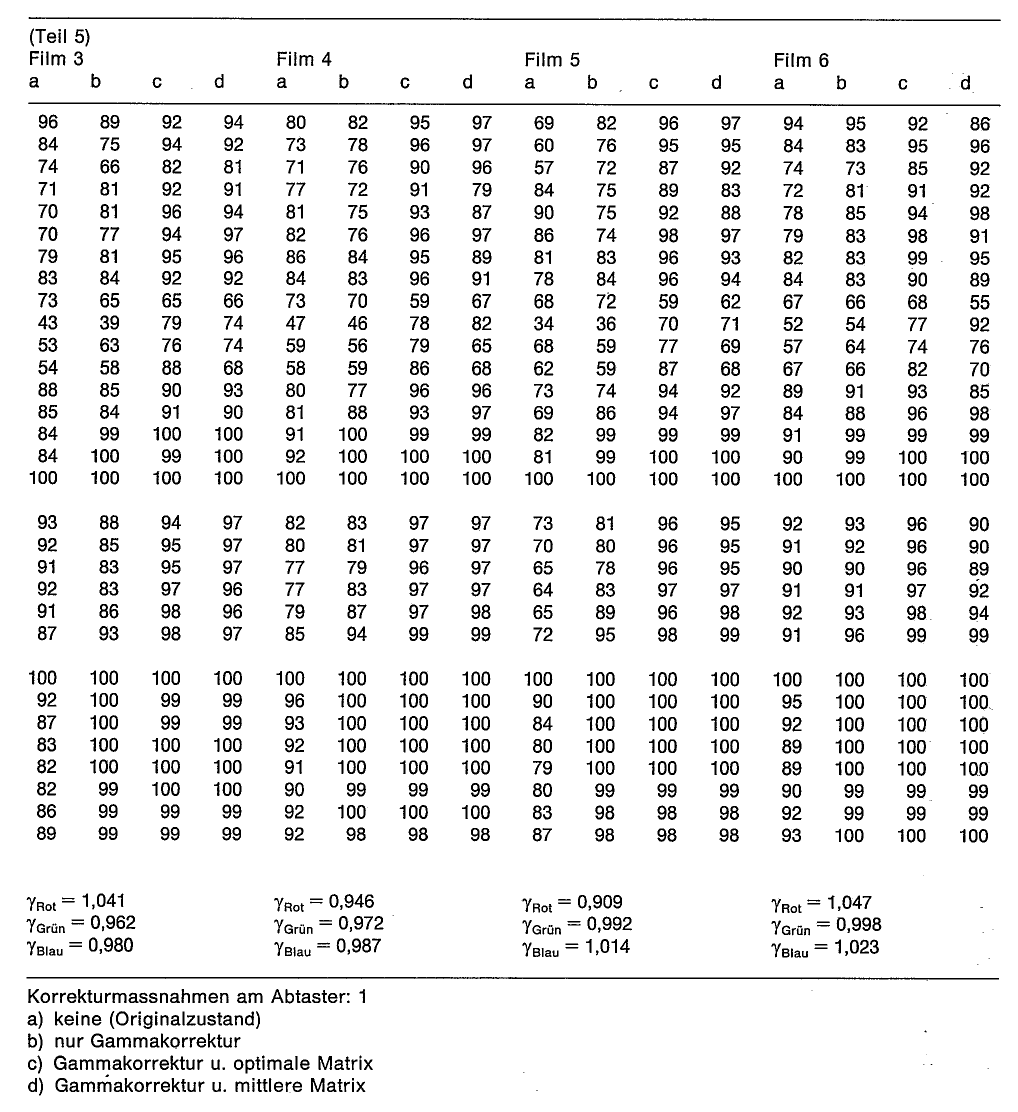

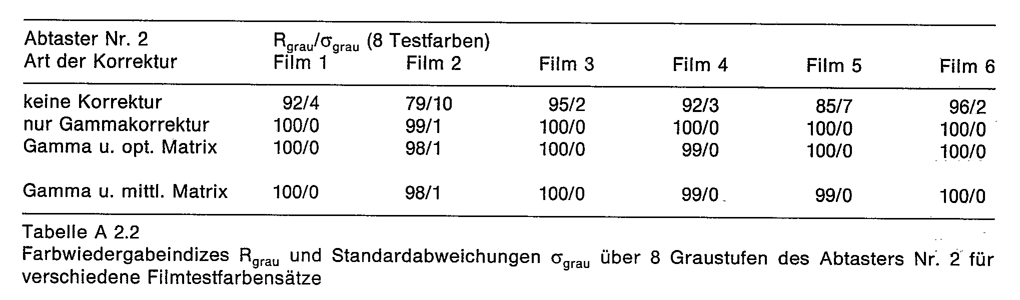

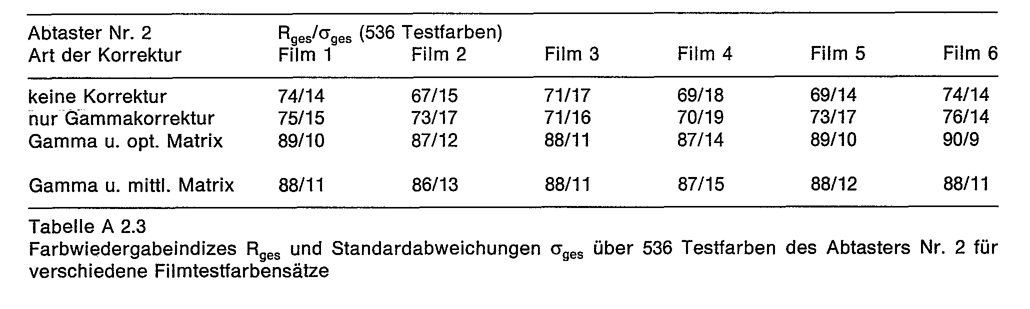

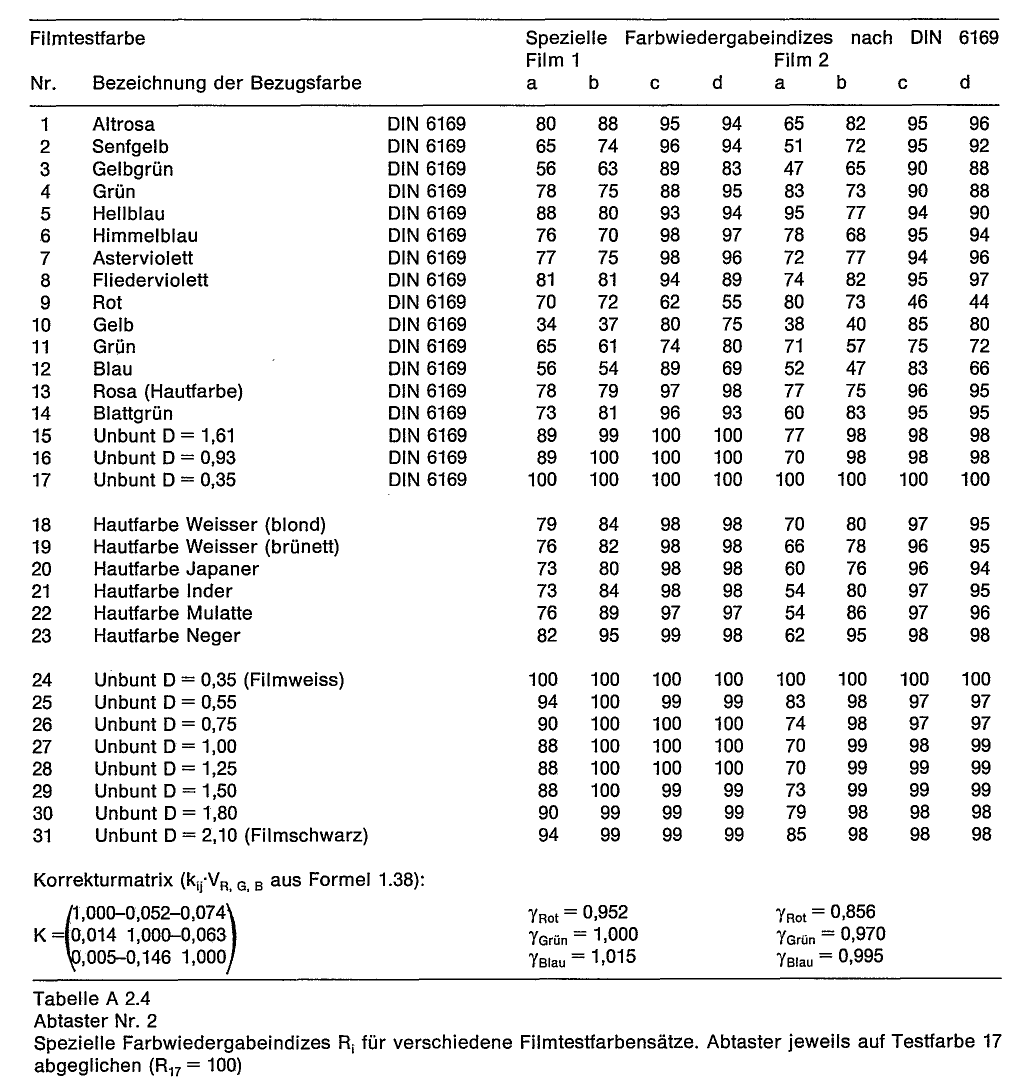

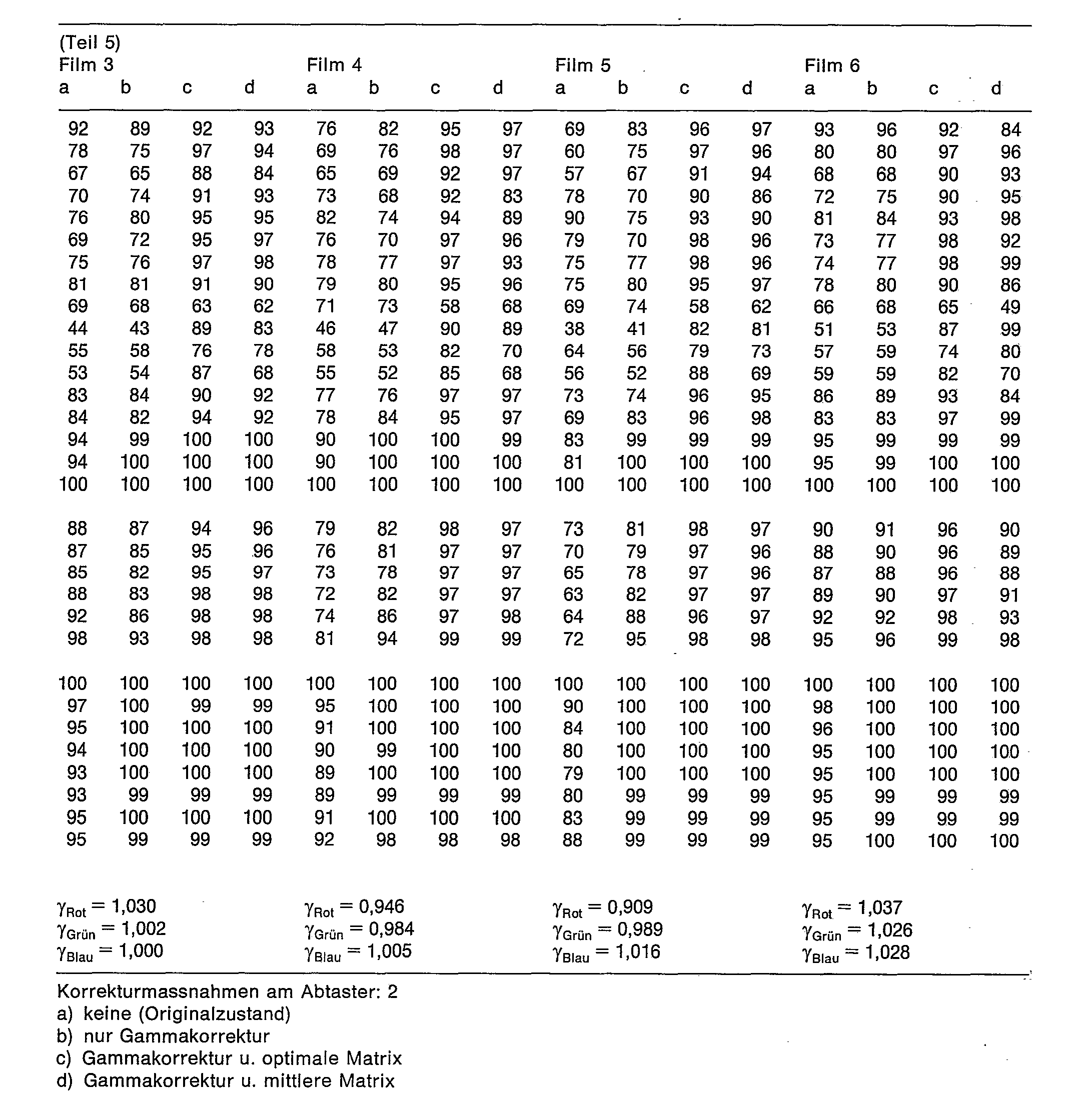

## Patentansprüche

1. Verfahren zur Reproduktion von Originalvorlagen mit insbesondere nicht metamerer Farbzusammensetzung, bei dem die jeweilige Originalvorlage bezüglich ihres Farbgehalts nach einem Dreibereichsverfahren abgetastet und nach einer Verarbeitung der beim Abtastvorgang erhaltenen Abtastsignale durch eine Farbmischung mittels eines im wesentlichen oder vollständig einer subtraktiven Farbmischung unterliegenden Farbwiedergabesystems reproduziert wird, wobei die Verarbeitung der Abtastsignale deren Anpassung an das Farbwiedergabesystem und/oder der Änderung der Gradation und/oder der Veränderung der Farbwiedergabe einzelner Farben im Gesamtbild oder in diskreten Bildbereichen dient, dadurch gekennzeichnet, dass die Abtastsignale (R, G, B) in drei farbvalenzmetrisch korrigierte Primärfarbsignale (X, Y, Z) umgewandelt werden, und dass diese farbvalenzmetrisch korrigierten Primärfarbsignale anstatt der ursprünglichen Abtastsignale verarbeitet werden.

2. Verfahren nach Anspruch 1, dadurch gekennzeichnet, dass die farbvalenzmetrisch korrigierten Primärfarbsignale vor ihrer Weiterverarbeitung zwischengespeichert werden.

3. Verfahren nach einem der vorstehenden Ansprüche, dadurch gekennzeichnet, dass die farbvalenzmetrisch korrigierten Primärfarbsignale (X, Y, Z) in dem Farbwiedergabesystem angepasste Farbstoffkonzentrationssignale (C_{c}, C_{M}, Cy) oder Auszugsdichtesignale (Dc, D_{M}, Dy) umgeformt und erst an diesen Signalen (C_{c}, C_{M}, Cy oder D_{c}, D_{M}, Dy) gezielte Eingriffe der Farbwiedergabe vorgenommen werden.

4. Verfahren nach Anspruch 3, dadurch gekennzeichnet, dass aus den durch gezielte Eingriffe variierten Farbstoffkonzentrationssignalen (C_{c}, C_{M}, Cy) oder Auszugsdichtesignalen (D_{c}, D_{M}, Dy) entsprechend variierte Primärfarbsignale (X, Y, Z) gebildet werden, mittels derer und der restlichen unverändert gebliebenen abgespeicherten Primärfarbsignale durch additive Farbmischung ein Monitorbild erzeugt wird, welches dem Operator die durch die gezielten Eingriffe in die Farbstoffkonzentrationssignale oder die Auszugsdichtesignale bewirkten Änderungen in der zugehörigen, durch die im wesentlichen subtraktive Farbmischung des Farbwiedergabesystems erzeugten Reproduktion der Originalvorlage aufzeigt.

5. Verfahren nach Anspruch 4, dadurch gekennzeichnet, dass die der Originalvorlage farbgetreu entsprechenden farbvalenzmetrisch korrigierten Primärfarbsignale so lange unverändert gespeichert werden, bis das Monitorbild dem gewünschten Reproduktionsergebnis entspricht.

6. Verfahren nach einem der vorstehenden Ansprüche, dadurch gekennzeichnet, dass zur Gewinnung der farbvalenzmetrisch korrigierten Primärfarbsignale (X, Y, Z) jedes Abtastsignal zwecks Korrektur des Grauabgleichs einer Gradationsentzerrung (γ_{R}, γ_{G}, γ_{B}) unterzogen wird, und dass mit den gradationsentzerrten Abtastsignalen zur Verbesserung der Farbwiedergabeeigenschaften bunter Objektfarben eine lineare Transformation (M) durchgeführt wird.

7. Verfahren nach Anspruch 6, dadurch gekennzeichnet, dass die Abtastsignale (R, G, B) vor der Gradationsentzerrung einem Weissabgleich (K_{R}, K_{G}, K_{B}) unterzogen-werden und dass die Gradationsentzerrung durch Potenzierung der Abtastsignale mit einem Exponent (γ_{R}, γ_{G}, γ_{B}) erfolgt, dessen Kehrwert (β_{R}, β_{G}, β_{B}) gleich der Steigung der Übertragungskennlinie des jeweiligen unkorrigierten Abtasters für unbunte Farben der Originalvorlage ist, wenn die Übertragungskennlinie die Abhängigkeit des Logarithmus des Kehrwertes der Abtastsignale von den Dichten (D) der zu reproduzierenden Graustufen wiedergibt.

8. Verfahren nach Anspruch 6 oder 7, dadurch gekennzeichnet, dass der Exponent (γ_{R}, γ_{G}, γ_{B}) aus den spektralen Daten des jeweiligen Abtasters und den Farbstoffen der Originalvorlage berechnet wird.

9. Verfahren nach Anspruch 6 oder 7, dadurch gekennzeichnet, dass die Werte für den Exponent (γ_{R}, γ_{G}, γ_{B}) durch einen in der Originalvorlage oder am Rand derselben angebrachten Graukeil experimentell bestimmt werden.

10. Verfahren nach einem der Ansprüche 6 bis 9, dadurch gekennzeichnet, dass bei der die lineare Transformation bewirkenden Matrix (M) keine negativen Koeffizienten zugelassen werden, die grösser sind als das etwa 0,3fache des Wertes der Hauptdiagonale.

11. Verfahren nach einem der Ansprüche 6 bis 10, dadurch gekennzeichnet, dass bei der die lineare Transformation bewirkenden Matrix (M) die Matrixkoeffizienten für bestimmte vorgegebene Farben optimiert werden.

12. Verfahren nach Anspruch 11, dadurch gekennzeichnet, dass die Matrixkoeffizienten derart bestimmt werden, dass die spektralen Empfindlichkeitskurven der Abtaster bestmöglich an farbvalenzmetrisch korrekte Spektralwertkurven für additive Primärvalenzen angenähert werden.

13. Verfahren nach Anspruch 10 oder 11, dadurch gekennzeichnet, dass die Optimierung der Matrixkoeffizienten für zumindest drei subtraktive Grundfarben, vorzugsweise gleicher visueller Helligkeit, und drei aus ihnen gebildeten Mischfarben erster Ordnung durchgeführt wird.

14. Verfahren nach Anspruch 10, 11 oder 13 zur Gewinnung dreier farbvalenzmetrisch korrigierter Primärfarbsignale, dadurch gekennzeichnet, dass bei der Optimierung der Matrixkoeffizienten der mittlere Farbwiedergabeindex ermittelt und optimiert wird und/oder dass die Optimierung mittels einer Evolutionsstrategie durchgeführt wird.

15. Vorrichtung zur Durchführung des Verfahrens nach einem der Ansprüche 6 bis 14 mit einer Dreibereichsabtastvorrichtung, gekennzeichnet durch eine y-Korrektur-Schaltung (γ_{R}, γ_{B}, γ_{G}) in jeder Ausgangsleitung für die Abtastsignale (R, G, B) und durch eine Matrixschaltung (M), welche an die Ausgänge der y-Korrektur-Schaltungen (γ_{R}, γ_{G}, γ_{B}) angeschlossen ist zur Erzielung von farbvalenzmetrisch korrigierten Primärfarbsignalen.

16. Verfahren nach einem der Ansprüche 6 bis 14 zur Erzeugung von Farbstoffkonzentrationen entsprechenden Signalen eines im wesentlichen oder vollständig einer subtraktiven Farbmischung unterliegenden Farbwiedergabesystems aus drei Primärfarbsignalen, gekennzeichnet durch folgende Schritte:
Umformung der Primärfarbsignale (X, Y, Z) in den Grundfarbstoffen des Wiedergabesystems angepasste Farbwertsignale (Rp, Gp, Bp) unter Ersetzen der spektralen Dichteverteilungen der einzelnen Grundfarbstoffe des Farbwiedergabesystems durch drei verschiedenen Wellenlängenbereichen zugeordnete optimalfarbenartige Modellfarbstoffe ohne Nebendichten,
Umformung der hierbei erhaltenen Farbwertsignale (Rp, G_{µ}, Bp) in entsprechende Farbdichtesignale (α_{Rp}, α_{Gp}, α_{BP}) sowie Umwandlung der Farbdichtesignale in Modellfarbstoffkonzentrations-Signale (C_{CM}, C_{MM}, C_{YM}) unter Ersetzen der Farbdichte der optimalfarbenartigen Modellfarbstoffe ohne Nebendichten in den einzelnen Wellenlängenbereichen durch optimalfarbenartige Modellfarbstoffe mit je einer Haupt- und zwei Nebendichten, die über den jeweiligen Teilwellenlängenbereich konstant sind und von denen je eine der dortigen Dichte der drei Grundfarbstoffe näherungsweise zugeordnet ist.

17. Verfahren nach Anspruch 16, dadurch gekennzeichnet, dass die Umformung der Primärfarbsignale in die Farbwertsignale und die Umwandlung der Farbdichtesignale in die Modellfarbstoffkonzentrations-Signale mittels zweier linearer Transformationen dieser Signale erfolgt, wobei die Matrixkoeffizienten der ersteren Linear-Transformation (M,) durch die Wahl der Wellenlängenbereichsgrenzen (λ₂, λ₃) und die Matrixkoeffizienten der letzteren Linear-Transformation (M_{z}) durch das Verhältnis von Haupt- und Nebendichten der Modellfarbstoffe in den einzelnen Wellenlängenbereichen für das jeweilige Farbwiedergabesystem bestimmt werden.

18. Verfahren nach Anspruch 16 oder 17, dadurch gekennzeichnet, dass jedes Modellfarbstoffkonzentrations-Signal (C_{CM}, C_{MM}, C_{YM}) entsprechend einer Kennlinie (K_{c}, Kₘ, Ky) variiert wird, welche derart festgelegt ist, dass Grauwerten entsprechende Primärfarbsignale zu Farbstoffkonzentrations-Signalen führen, die im jeweiligen Farbwiedergabesystem entsprechend gleiche Grauwerte erzeugen.

19. Verfahren nach einem der Ansprüche 16 bis 19, dadurch gekennzeichnet, dass die Modellfarbstoffkonzentrations-Signale bzw. die Farbstoffkonzentrations-Signale in entsprechende Auszugsdichtesignale umgewandelt werden.

20. Verfahren nach einem der Ansprüche 16 bis 19, gekennzeichnet durch eine lineare Umformung der Modellfarbstoffkonzentrations-Signale bzw. der Farbstoffkonzentrations-Signale bzw. der Auszugsdichtesignale mittels einer Korrekturmatrix (M₃), deren Koeffizienten derart bestimmt werden, dass die durch die Primärfarbstoffe des Farbwiedergabesystems festgelegten Grundfarben und/oder Mischfarben erster Ordnung aus diesen farbgetreu wiedergegeben werden.

21. Verfahren nach einem der Ansprüche 16 bis 20, dadurch gekennzeichnet, dass für das jeweilige Farbwiedergabesystem die Koeffizienten der Matrizen (M₁, M₂ oder/und M₃) durch eine Optimierungsstrategie für vorgegebene Farben bestimmt werden.

22. Verfahren nach Anspruch 21, dadurch gekennzeichnet, dass für die Optimierung der Matrixkoeffizienten eine Evolutionsstrategie durchgeführt wird.

23. Verfahren nach Anspruch 21 oder 22, dadurch gekennzeichnet, dass die Optimierungsstrategie zumindest für drei subtraktive Primärfarben, vorzugsweise gleicher visueller Helligkeit, und drei aus diesen gewonnenen Mischfarben erster Ordnung durchgeführt wird.

24. Verfahren nach einem der Ansprüche 16 bis 23, dadurch gekennzeichnet, dass die erhaltenen Auszugsdichtesignale mit elektronisch abgespeicherten Auszugsdichten diskreter Mischfarben des Farbwiedergabesystems (Katalogfarben) verglichen werden.

25. Verfahren nach Anspruch 24, gekennzeichnet durch eine lineare Interpolation zwischen den ermittelten Auszugsdichtesignalen (D_{CM}, D_{MM}, Dy_{M}) und den nächstgelegenen Auszugsdichten der Katalogfarben.

26. Vorrichtung zur Erzeugung von Farbstoffkonzentrationen entsprechenden Signalen eines im wesentlichen einer subtraktiven Farbmischung unterliegenden Farbwiedergabesystems aus drei Primärfarbsignalen zur Durchführung des Verfahrens nach einem der Ansprüche 16 bis 25, gekennzeichnet durch eine erste Matrixschaltung (M₁) zur Umformung der Primärfarbsignale (X, Y, Z) in den Primärfarbstoffen des Farbwiedergabesystems angepasste Farbwertsignale (Rp, Gp, Bp), wobei die Matrixkoeffizienten der Matrixschaltung (M,) dadurch bestimmt sind, dass die spektralen Dichteverteilungen der einzelnen Primärfarbstoffe des Farbwiedergabesystems durch drei verschiedenen Wellenlängenbereichen zugeordnete optimalfarbenartige Modellfarbstoffe ohne Nebendichten ersetzt sind, durch an die Ausgänge für die Farbwertsignale der ersten Matrixschaltung angeschlossene Logarithmierschaltungen (-log(Rp_{R}), -log(Gp_{G}) und -log(Bp_{B})) zum Umformen der Farbwertsignale in entsprechende Farbdichtesignale (d_{Rp}, d_{Gp}, d_{Bp}) sowie durch eine zweite Matrixschaltung (M₂) zur Umwandlung der Farbdichtesignale in Modellfarbstoffkonzentrations-Signale (C_{cM}, C_{MM,}C_{YM}), wobei die Matrixkoeffizienten der zweiten Matrixschaltung (M₂) dadurch bestimmt sind, dass die Farbdichten der optimalfarbenartigen Modellfarbstoffe ohne Nebendichten der einzelnen Teilwellenlängenbereiche durch optimalfarbenartige Modellfarbstoffe ersetzt sind, die eine Haupt- und zwei Nebendichten aufweisen, welche über die jeweiligen Teilwellenlängenbereiche konstant sind, wobei die Haupt- und die beiden Nebendichten den Dichten der drei Primärfarbstoffe in dem entsprechenden Wellenlängenbereich näherungsweise zugeordnet sind.

27. Vorrichtung nach Anspruch 26, dadurch gekennzeichnet, dass die Matrixkoeffizienten der ersten Matrixschaltung (M,) durch die Wahl der Grenzen der Teilwellenlängenbereiche und dass die Matrixkoeffizienten der zweiten Matrixschaltung (M₂) durch das Verhältnis von Haupt- und Nebendichten der Modellfarbstoffe in den einzelnen Teilwellenlängenbereichen für das jeweilige Farbwiedergabesystem bestimmt sind.

28. Vorrichtung nach Ansprüchen 26 und 27, dadurch gekennzeichnet, dass an den Ausgängen für jedes Modellfarbstoffkonzentrations-Signal der zweiten Matrixschaltung (M₂) eine Schaltung (K_{c}, K_{M}, Ky) vorgesehen ist, welche das ankommende Signal gemäss einer vorbestimmten Kennlinie variiert, wobei die Kennlinie derart festgelegt ist, dass Grauwerten entsprechende Primärfarbsignale in Farbstoffsignale umgewandelt werden, die im jeweiligen Farbwiedergabesystem Grauwerte erzeugen.

29. Vorrichtung nach einem der Ansprüche 26 bis 28, gekennzeichnet durch Schaltungen zur Umwandlung der Modellfarbstoffkonzentrations-Signale bzw. Farbstoffkonzentrations-Signate in entsprechende Auszugsdichtesignale.

30. Vorrichtung nach einem der Ansprüche 26 bis 29, gekennzeichnet durch eine dritte Matrixschaltung (M₃), der die Auszugsdichtesignale zuführbar sind, wobei die Matrixkoeffizienten der dritten Matrixschaltung derartig bestimmt sind, dass die durch jeden Grundfarbstoff des Farbwiedergabesystems festgelegten Grundfarben möglichst farbgetreu wiedergegeben werden.

31. Vorrichtung nach Anspruch 30, dadurch gekennzeichnet, dass bei Farbwiedergabesystemen mit rein subtraktiver Farbmischung die zweite Matrixschaltung (M₂) und die dritte Matrixschaltung (M₃) zu einer gemeinsamen Matrixschaltung zusammengefasst sind.

32. Vorrichtung nach einem der Ansprüche 26 bis 31, gekennzeichnet durch einen Speicher (Sp), in dem die Auszugsdichten von Katalogfarben für das jeweilige Farbwiedergabesystem gespeichert sind, durch eine Komparatorschaltung, welche die ermittelten Modelldichten (CM, MM, YM) mit den Katalogfarben vergleicht, und durch eine Interpolationsschaltung, welche eine Interpolation zwischen den nächstgelegenen Katalogfarben und den ermittelten Auszugsdichten durchführt.

33. Vorrichtung nach einem der Ansprüche 26 bis 32, gekennzeichnet durch einen nach dem Prinzip der additiven Farbmischung arbeitenden Monitor, der über entsprechende Anpassungsnetzwerke an den Eingängen für die Primärfarbsignale (X, Y, Z) der ersten Matrixschaltung (M,) angeschlossen ist.

## Claims

1. Method for the reproduction of originals especially of non-metameric colour composition, where the original is scanned in each case, with respect to its colour content, according to a tristimulus method and after processing of the scanning signals obtained is reproduced, via a colour mixture by means of a colour rendition system based mainly or completely on a subtractive colour mixture, the processing of the scanning signals serving the adaption of same to the colour rendition system and/or the alteration of the gradation and/or the alteration of the colour rendition of individual colours in the overall image or in discrete areas of the image, characterized in that the scanning signals (R, G, B) are converted into three primary colour signals (X, Y, Z) corrected in accordance with visual colour sensitivity, said primary colour signals being processed instead of the original scanning signals.

2. Method according to claim 1, characterized in that the primary colour signals, corrected in accordance with visual colour sensitivity, are stored temporarily before being further processed.

3. Method according to one of the preceding claims, characterized in that the primary colour signals (X, Y, Z), corrected in accordance with visual colour sensitivity, are converted into colouring material concentration signals (C_{c}, C_{M}, Cy) or colour separation density signals (D_{c}, D_{M}, Dy) adapted to the colour rendition system, and that controlled measures in altering the colour rendition are only taken at these signals (C_{c}, C_{M}, Cy or D_{c}, D_{M}, Dy).

4. Method according to claim 3, characterized in that from the colouring material concentration signals (C_{c}, C_{M}, Cy) or colour separation density signals (D_{c}, D_{M}, Dy), varied by means of the objective alteration measures correspondingly varied primary colour signals (X, Y, Z) are produced, by means of which, together with the remaining, unaltered stored primary colour signals an image on a monitor is generated, via additive colour mixture, which shows the operator the alterations effected via the objective alteration measures in the colouring material concentration signals or the colour separation density signals in the associated reproduction, generated via the mainly subtractive colour mixture of the colour rendition system of the original.

5. Method according to claim 4, characterized in that the primary colour signals, true-to-colour with respect to the original and corrected in accordance with visual colour sensitivity, are stored in unchanged form until the monitor image corresponds to the desired reproduction result.

6. Method according to one of the preceding claims, characterized in that for deriving the primary colour signals (X, Y, Z), corrected in accordance with visual colour sensitivity every scanning signal is subjected for the purpose of correcting the grey balance to a gradation equalization (γ_{R}, γ_{G}, γ_{B}), and in that, for improving the colour rendition properties of chromatic object colours, a linear transformation (M) is carried out with the scanning signals, which have been gradation equalized.

7. Method according to claim 6, characterized in that before the gradation equalization the scanning signals (R, G, B) are subjected to a white balance (K_{R}, K_{G}, Kₑ) and that the gradation equalization ensues via exponention of the scanning signals with an exponent (γ_{R}, γ_{G}, γ_{B}) whose reciprocal (β_{R}, β_{G}, β_{B}) is equal to the slope of the transmission characteristic of the respective uncorrected scanner for achromatic colours of the original, if said transmission characteristic shows the dependence of the logarithm of said reciprocal of said scanning signals on the density (D) of the shades of grey to be reproduced.

8. Method according to claim 6 or 7, characterized in that the exponent (γ_{R}, γ_{G}, γ_{B}) is calculated from the spectral data of the respective scanner and from the colouring matters of the original.

9. Method according to claim 6 or 7, characterized in that the values for the exponent (y_{R}, γ_{G}, γ_{B}) are experimentally determined by means of a wedge filter provided in the original or at its edge.

10. Method according to one of claims 6 to 9, characterized in that no negative coefficients greater than about 0.3 times the value of the main diagonal are permitted in the matrix (M) effecting the linear transformation.

11. Method according to one of claims 6 to 10, characterized in that for the matrix (M) effecting the linear transformation the matrix coefficients for certain given colours are optimized.

12. Method according to claim 11, characterized in that the matrix coefficients are determined such that the spectral sensitivity curves of the scanners are approximated as well as possible to colour mixture curves which are in accordance with visual colour sensitivity for additive primary valences.

13. Method according to claim 10 or 11, characterized in that optimization of the matrix coefficients is undertaken for at least three subtractive fundamental colours, preferably of equal visual brightness, and three secondary colours of first order formed from them.

14. Method according to claims 10, 11 or 13, for obtaining three primary colour signals, which are in accordance with visual colour sensitivity, characterized in that during the optimization of the matrix coefficients the mean colour rendition index is determined and optimized and/or that the optimization is carried out by means of an evolution strategy.

15. Device for carrying out the method according to one of claims 6 to 14 including a tristimulus scanning means, characterized by a y-correction circuit (γ_{R}, γ_{G}, γ_{B}) in each output lead for the scanning signals (R, G, B) and by a matrix circuit (M) which is connected at the outputs of the y-correction circuits (γ_{R}, γ_{G}, γ_{B}) for obtaining primary colour signals corrected in accordance with visual colour sensitivity.

16. Method according to one of claims 6 to 14, for determining signals, corresponding to colouring material concentrations of a colour rendition system comprising three primary colour signals and based mainly or completely on a subtractive colour mixture, characterized by the following steps:
conversion of the primary colour signals (X, Y, Z) into colours signals (Rp, Gp, Bp) adapted to the basic colouring materials of the rendition system with replacement of the spectral density distributions of the individual basic colouring materials of the colour rendition system by three optimal colour-like model colouring materials without secondary densities which are attributed three different wavelength ranges, conversion of the thus obtained colour signals (Rp, Gp, Bp) into corresponding colour density signals (α_{Rp}, α_{Gp}, asp) and conversion of the colour density signals into model colouring material concentration signals (C_{cM}, C_{MM}, C_{YM}) with replacement of the colour densities of the optimal colour-like model colouring materials without secondary densities, in the individual wavelength ranges by optimal colour-like model colouring materials that each have a main and two secondary densities which are constant over the respective partial wavelength range, each one of those being assigned, by approximation, to the density in this range of the three basic colouring materials.

17. Method according to claim 16, characterized in that the transformation of the primary colour signals into colour value signals and the conversion of the colour density signals into model colouring material concentration signals ensues via two linear transformations of these signals, the matrix coefficients of the first linear transformation (M,) being determined by the choice of the wavelength range limits (λ₂, λ₃) and the matrix coefficients of the second linear transformation (M₂) being determined by the ratio of main and secondary densities of the model colouring materials in the individual wavelength ranges for the respective colour rendition system.

18. Method according to claim 16 or 17, characterized in that each model colouring material concentration signal (C_{cM}, C_{MM}, C_{YM}) is varied according to a characteristic curve (K_{c}, K_{M}, Ky) which is determined such that primary colour signals corresponding to grey scale values lead to colouring material concentration signals that generate the same grey scale values in the respective colour rendition system.

19. Method according to one of claims 16 to 18, characterized in that the model colouring material concentration signals or the colouring material concentration signals are converted into corresponding separation density signals.

20. Method according to one of claims 16 to 19, characterized by a linear transformation of the model colouring material concentration signals or the colouring material concentration signals or the colour separation density signals by means of a correction matrix (M₃) whose coefficients are determined such that the fundamental colours laid down by the primary colouring materials of the colour rendition system, and/or secondary colours of first order from these, are rendered true-to-colour.

21. Method according to one of claims 16 to 20, characterized in that for the respective colour rendition system the coefficients of the matrices (M₁, M₂, or/and M₃) are determined by means of an optimization strategy for given colours.

22. Method according to claim 21, characterized in that an evolution strategy is carried out for the optimization of the matrix coefficients.

23. Method according to one of claims 21 to 22, characterized in that the optimization strategy is carried out at least for three subtractive primary colours, preferably of equal visual brightness, and three secondary colours of first order obtained from these.

24. Method according to one of claims 16 to 23, characterized in that the separation density signals obtained are compared with electronically stored separation densities of discrete secondary colours of the colour rendition system (catalogue colours).

25. Method according to claim 24, characterized by a linear interpolation between the established separation density signals (D_{cM}, D_{MM}, D_{YM}) and the nearest separation densities of the catalogue colours.

26. Device for determining signals, corresponding to colouring material concentrations, of a colour rendition system comprising three primary colour signals and based mainly on a subtractive colour mixture, for carrying out the method according to one of claims 16 to 25, characterized by a first matrix circuit (M,) for transforming the primary colour signals (X, Y, Z) into colour signals (Rp, Gp, Bp) adapted to the primary colouring materials of the colour rendition system, the matrix coefficients of the matrix circuit (Mᵢ) being determined in that the spectral density distributions of the individual primary colouring materials of the colour rendition system are replaced by three optimal colour-like model colouring materials without secondary densities and assigned to different wavelength ranges, by logarithmizing circuits (-log(Rp_{R}, -log(Gp_{G}) and -log(Bpₑ)), connected at the outputs for the colour signals of the first matrix circuit, for transforming the colour signals into corresponding colour density signals (d_{RP}, d_{Gp}, d_{Bp}), and by a second matrix circuit (M₂) for transforming the colour density signals into model colouring material concentration signals (C_{cM}, C_{MM}, C_{yM}), the matrix coefficients of the second matrix circuit being determined in that the colour densities of the optimal colour-like model colouring material, without secondary densities, of the individual partial wavelength ranges are replaced by optimal colour-like model colouring materials which have a main and two secondary densities constant over the respective partial wavelength ranges, the main and the two secondary densities being assigned in approximation to the densities of the three primary colouring materials in the corresponding wavelength range.

27. Device according to claim 26, characterized in that the matrix coefficients of the first matrix circuit (M,) are determined by the choice of limits for the partial wavelength ranges, those of the second matrix circuit (M₂) by the ratio of main to secondary densities of the model colouring materials in the individual partial wavelength ranges for the respective colour rendition system.

28. Device according to claims 26 and 27, characterized in that a circuit (K_{c}, K_{M}, Ky) is provided at the outputs for each model colour concentration signal of the second matrix circuit (M₂), which varies the incoming signal according to a prescribed characteristic that is determined such that primary colour signals corresponding to grey scale values are converted into colouring material signals which generate grey scale values in the respective colour rendition system.

29. Device according to one of claims 26 to 28, characterized by circuits for transforming the model colouring material concentration signals or colouring material concentration signals into corresponding separation density signals.

30. Device according to one of claims 26 to 29, characterized by a third matrix circuit (M₃) to which the separation density signals can be supplied, the matrix coefficients of the third matrix circuit being determined such that the fundamental colours laid down by each basic colouring material are rendered as true-to-colour as possible.

31. Device according to claim 30, characterized in that for colour rendition systems with purely subtractive colour mixture the second matrix circuit (M₂) and the third matrix circuit (M₃) are combined as a common matrix circuit.

32. Device according to one of claims 26 to 31, characterized by a memory (Sp) in which the separation densities of catalogue colours for the respective colour rendition system are stored, by a comparator circuit which compares the determined model densities (CM, MM, YM) with the catalogue colours, and by an interpolation circuit which carries out an interpolation between the nearest catalogue colour and the determined separation densities.

33. Device according to one of claims 26 to 32, characterized by a monitor working according to the principle of additive colour mixture, which is connected at the inputs for the primary colour signals (X, Y, Z) of the first matrix circuit (M,) via corresponding adaption networks.

## Revendications

1. Procédé de reproduction de documents originaux avec en particulier des composés colorés non métamères, dans lequel le document original est exploré du point de vue de sa teneur en colorants selon un procédé à trois zones et est reproduit après un traitement des signaux d'exploration obtenus par l'exploration par un mélange de couleurs et au moyen d'un système de reproduction de couleurs utilisant essentiellement ou totalement un mélange de couleurs soustractifs, le traitement des signaux d'exploration ayant pour objet leur adaptation au système de reproduction de couleurs et/ou la modification de la gradation et/ ou la modification de la reproduction de couleurs individuelles dans l'ensemble de l'image ou dans les parties discrètes de l'image, caractérisé en ce que les signaux explorateurs (R, G, B) sont convertis en trois signaux de couleurs primaires (X, Y, Z) corrigés métriquement sur le plan des stimuli de couleur, et en ce que ces signaux de couleurs primaires corrigés métriquement sur le plan des stimuli de couleurs sont traités à la place des signaux d'exploration d'origine.

2. Procédé selon la revendication 1, caractérisé en ce que les signaux de couleurs primaires corrigés métriquement sur le plan des stimuli de couleurs sont mis temporairement en mémoire avant la poursuite de leur traitement.

3. Procédé selon l'une des revendications précédentes, caractérisé en ce que les signaux de couleurs primaires (X, Y, Z) corrigés métriquement sur le plan des stimuli de couleurs sont transformés en signaux de concentration de colorants (C_{c}, C_{M}, Cy) ou en signaux de densité de séparation de couleurs (De, D_{M}, D_{Y}) adaptés au système de reproduction de couleurs et en ce que des interventions appropriées sont entreprises sur la reproduction en couleurs d'abord sur lesdits signaux (Ce, C_{M}, Cy ou De, D_{M}, Dy).

4. Procédé selon la revendication 3, caractérisé en ce que l'on forme des signaux de couleurs primaires (X, Y, Z) modifiés de façon correspondante aux signaux de concentration de colorants (C_{c}, C_{M}, Cy) ou aux signaux de densité de séparation de couleurs (De, D_{M}, Dy) qui ont été modifiés par des interventions appropriées, au moyen desquels et avec les signaux de couleurs primaires restants et inchangés qui ont été mis en mémoire, on produit par mélange additif de couleurs une image de moniteur qui montre à l'opérateur les modifications opérées par les interventions appropriées sur les signaux de concentration de colorants ou sur les signaux de densité de séparation de couleurs dans la reproduction du document original obtenue par un mélange de couleurs essentiellement soustractif du système de reproduction de couleurs.

5. Procédé selon la revendication 4, caractérisé en ce que les signaux de couleurs primaires corrigés métriquement sur le plan des stimuli de couleur et correspondant fidèlement au modèle original sont mis en mémoire sans être modifiés jusqu'à ce que l'image de moniteur corresponde au résultat désiré pour la reproduction.

6. Procédé selon l'une des revendications précédentes, caractérisé en ce que, pour obtenir les signaux de couleurs primaires (X, Y, Z) corrigés métriquement sur le plan des stimuli de couleur, chaque signal d'exploration est soumis, en plus de la correction de l'ajustage des gris, à un redressement de gradation (γ_{R}, γ_{G}, γ_{B}) et en ce que l'on réalise une transformation linéaire (M) avec les signaux d'exploration dont la gradation a été redressée pour améliorer les propriétés de reproduction des couleurs d'objets colorés.

7. Procédé selon la revendication 6, caractérisé en ce que les signaux d'exploration (R, G, B) sont soumis avant le redressement de la gradation à un ajustage du blanc (K_{R}, K_{G}, Kₛ) et en ce que le redressement de la gradation est réalisé par une élévation de puissance des signaux d'exploration au moyen d'un exposant (y_{R}, _{YG}, _{YB}), dont la valeur inverse (β_{R}, [β_{G}, β_{B}) est égale à la pente de la ligne caractéristique de transfert du dispositif explorateur respectif non corrigé pour des couleurs non mélangées du document original, quand la ligne caractéristique de transfert reproduit la dépendance du logarithme de la valeur inverse des signaux d'exploration par rapport aux densités (D) des étages de gris à reproduire.

8. Procédé selon l'une des revendications 6 ou 7, caractérisé en ce que l'exposant (γ_{R}, γ_{G}, γ_{B}) est calculé à partir des valeurs spectrales du dispositif explorateur respectif et des colorants du document original.

9. Procédé selon l'une des revendications 6 ou 7, caractérisé en ce que les valeurs de l'exposant (γ_{R} γ_{G} γ_{B}) sont déterminées expérimentalement au moyen d'un coin gris disposé dans le document original ou sur son bord.

10. Procédé selon l'une des revendications 6 à 9, caractérisé en ce que l'on n'admet, dans la matrice (M) qui réalise la transformation linéaire, aucun coefficient négatif dépassant environ 0,3 fois la valeur de la diagonale principale.

11. Procédé selon l'une des revendications 6 à 10, caractérisé en ce que l'on optimise les coefficients de la matrice (M) qui détermine la transformation linéaire pour certaines couleurs prédéterminées.

12. Procédé selon la revendication 11, caractérisé en ce que l'on détermine les coefficients de la matrice de manière que les courbes de sensibilité spectrale des dispositifs explorateurs soient rapprochés au mieux de courbes des valeurs spectrales correctes sur le plan des stimuli de couleur métriques pour des stimuli additifs de couleurs primaires.

13. Procédé selon l'une des revendications 10 ou 11, caractérisé en ce que l'optimisation des coefficients de la matrice est réalisée pour au moins trois couleurs de base soustractives, et de préférence de même luminosité, et pour trois couleurs mélangées de premier ordre formées à partir de ces dernières.

14. Procédé selon l'une des revendications 10, 11 ou 13, en vue d'obtenir trois signaux de couleurs primaires corrigés métriquement sur le plan des stimuli de couleur, caractérisé en ce que, lors de l'optimisation des coefficients de la matrice, on détermine et on optimise l'indice moyen de reproduction des couleurs et/ou en ce qu'on réalise l'optimisation au moyen d'une stratégie à évolution.

15. Dispositif pour la mise en oeuvre du procédé selon l'une quelconque des revendications 6 à 14 au moyen d'un dispositif explorateur à trois zones, caractérisé par un circuit correcteurγ (γ_{R}, γ_{G}, γ_{B}) dans chaque conducteur de sortie pour les signaux d'exploration (R, G, B) et par un circuit de matrice (M) qui est raccordé aux sorties de circuits de correction λ (λ_{R}, λ_{G}, λ_{B}) en vue d'obtenir des signaux de couleurs primaires corrigés métriquement sur le plan des stimuli de couleur.

16. Procédé selon l'une des revendications 6 à 14, destiné à réaliser des signaux correspondants à des concentrations de colorants d'un système de reproduction de couleurs utilisant essentiellement ou totalement un mélange soustractif de couleurs en partant de trois signaux de couleurs primaires, caractérisé par les opérations suivantes:
transformation des signaux de couleurs primaires (X, Y, Z) en signaux de valeur de couleurs (Rp, Gp, Bp) adaptés aux colorants de base du système de reproduction, par échange des répartitions de densité spectrale des colorants de base individuels du système de reproduction de couleurs par des colorants modèles du type à couleurs optimales et sans densité secondaire associés à trois plages de longueurs d'ondes différentes; transformation des signaux de valeurs de couleurs (Rp, Gp, Bp) ainsi obtenus en signaux de densité de couleurs correspondants (α_{Rp}, α_{Gp}, α_{Bp}) ainsi que la conversion des signaux de densité de couleurs en signaux de concentration de colorants modèles (C_{cM}, C_{MM}, C_{YM}) en remplaçant les densités de couleurs des colorants modèles du type à couleurs optimales sans densité secondaire dans les plages individuelles de longueurs d'ondes au moyen de colorants modèles du type à couleurs optimales comprenant chacun une densité principale et deux densités secondaires, qui sont constantes sur les plages de longueurs d'ondes partielles respectives et qui sont respectivement associées à la densité des trois colorants de base.

17. Procédé selon la revendication 16, caractérisé en ce que la transformation des signaux de couleurs primaires en signaux de valeurs de couleurs et la conversion des signaux de densité de couleurs en signaux de concentration de colorants modèles est réalisée au moyen de deux transformations linéaires de ces signaux, les coefficients de la matrice de la première transformation linéaire (Mᵢ) étant déterminés par le choix des limites des plages de longueurs d'ondes (λ₂, λ₃) et les coefficients de la matrice de la dernière transformation linéaire (M₂) étant déterminés par le rapport entre les densités principales et secondaires des colorants modèles dans les zones de longueurs d'ondes individuelles pour le système respectif de reproduction de couleurs.

18. Procédé selon l'une des revendications 16 ou 17, caractérisé en ce que chaque signal de concentration de colorants modèles (C_{cM}, C_{MM}, C_{YM}) est modifié en fonction d'une ligne caractéristique (K_{c}, K_{M}, K_{Y}) qui est déterminée de façon que les signaux de couleurs primaires correspondant aux valeurs de gris conduisent à des signaux de concentration de colorants qui produisent dans le système de reproduction de couleurs les mêmes valeurs de gris correspondantes.

19. Procédé selon l'une des revendications 16 à 19, caractérisé en ce que les signaux de concentration de colorants modèles ou les signaux de concentration de colorants sont convertis en signaux de densité de concentration de couleurs correspondants.

20. Procédé selon l'une des revendications 16 à 19, caractérisé par une transformation linéaire des signaux de concentration de colorants modèles ou des signaux de concentration de colorants ou des signaux de densité de séparation de couleurs au moyen d'une matrice de correction (M,) dont les coefficients sont déterminés de manière que les couleurs de base et/ou les couleurs mélangées de premier ordre déterminées par les colorants primaires du système de reproduction de couleurs soient reproduits fidèlement à partir de ceux-ci.

21. Procédé selon l'une des revendications 16 à 20, caractérisé en ce que les coefficients des matrices (M₁, M₂ et/ou M₃) pour les systèmes de reproduction de couleurs sont déterminés par une stratégie d'optimisation pour les couleurs prédéterminées.

22. Procédé selon la revendication 21, caractérisé en ce que pour l'optimisation des coefficients de la matrice, on a recours à une stratégie à évolution.

23. Procédé selon l'une des revendications 21 ou 22, caractérisé en ce que la stratégie d'optimisation est réalisée au moins pour trois couleurs primaires soustractives, de préférence de même luminosité visuelle, et pour trois couleurs mélangées de premier ordre obtenues de ces dernières.

24. Procédé selon l'une des revendications 16 à 23, caractérisé en ce que les signaux de densité de séparation de couleurs obtenus sont comparés à des densités de séparation de couleurs mélangées discrètes du système de reproduction de couleurs (couleurs de catalogue) mises en mémoire électroniquement.

25. Procédé selon la revendication 24, caractérisé par une interpolation linéaire entre les signaux de densité de séparation de couleurs obtenus (D_{cM}, D_{MM}, D_{YM}) et les densités de séparation voisines des couleurs du catalogue.

26. Dispositif pour obtenir des signaux correspondant à des concentrations de colorants et appartenant à un système de reproduction de couleurs utilisant essentiellement un mélange soustractif de couleurs à partir de trois signaux de couleurs primaires, en vue de la mise en oeuvre du procédé selon l'une des revendications 16 à 25, caractérisé par un premier circuit de matrice (Mᵢ) pour transformer les signaux de couleurs primaires (X, Y, Z) en signaux de valeurs de couleurs (Rp, Gp, Bp) adaptés aux colorants primaires du système de reproduction de couleurs, les coefficients du circuit de matrice (M,) étant déterminés du fait que les répartitions spectrales de la densité des colorants primaires individuels du système de reproduction de couleurs sont remplacées par trois colorants modèles du type à couleurs optimales et subordonnés à trois zones de longueurs d'ondes différentes, sans densité secondaire, par des circuits logarithmiques (-log(Rp_{R}), -log(Gp_{G}) et -log(Bp_{B})) raccordés aux sorties des signaux des valeurs de couleurs du premier circuit de matrice pour transformer les signaux de valeurs de couleurs en signaux de densité de couleurs correspondants (d_{R}p, d_{G}p, dₛp) ainsi que par un second circuit de matrice (M₂) pour transformer les signaux de densité de couleurs en signaux de concentration de colorants modèles (C_{cM}, C_{MM}, C_{YM}), les coefficients de matrice du second circuit de matrice (M₂) étant déterminés du fait que les densités de couleur des colorants modèles du type à couleurs optimales et sans densité secondaire des plages de longueurs d'ondes partielles individuelles sont remplacées par des colorants modèles du type à couleurs optimales, qui présentent une densité principale et deux densités secondaires, qui sont constantes sur la plage de longueurs d'ondes partielles respective, la densité principale et les densités auxiliaires étant subordonnées approximativement aux densités des trois colorants primaires dans la plage de longueurs d'ondes correspondante.

27. Dispositif selon la revendication 26, caractérisé en ce que les coefficients de la matrice du premier circuit de matrice (M,) sont déterminés par le choix des limites des plages de longueurs d'ondes partielles et en ce que les coefficients de la matrice du second circuit de matrice (M₂) sont déterminés par le rapport entre la densité principale et les densités secondaires des colorants modèles dans les plages de longueurs d'ondes partielles individuelles pour le système de reproduction de couleurs utilisé.

28. Dispositif selon l'une des revendications 26 et 27, caractérisé en ce que l'on prévoit un circuit (K_{c}, Kₘ, Ky) aux sorties pour chaque signal de concentration de colorants modèles du second circuit de matrice (M₂), qui modifie le signal arrivant selon une ligne caractéristique prédéterminée, la ligne caractéristique étant déterminée de manière que les valeurs de gris soient converties conformément à des signaux de couleurs primaires en signaux de colorants, qui sont produits dans les valeurs de gris du système de reproduction de couleurs utilisé.

29. Dispositif selon l'une des revendications 26 à 28, caractérisé par des circuits pour convertir les signaux de concentration de colorants modèles ou les signaux de concentration de colorants en signaux de densité de séparation de couleur correspondants.

30. Dispositif selon l'une des revendications 26 à 29, caractérisé par un troisième circuit de matrice (M₃) auquel peuvent être appliqués les signaux de séparation de couleurs, les coefficients de la matrice du troisième circuit de matrice étant déterminés de manière que les couleurs de base déterminées par chaque colorant de base du système de reproduction de couleurs soient reproduites aussi fidèlement que possible.

31. Dispositif selon la revendication 30, caractérisé en ce que, dans un système de reproduction de couleurs à mélange purement soustractif des couleurs, le second circuit de matrice (M₂) et le troisième circuit de matrice (M₃) sont rassemblés en un circuit de matrice commun.

32. Dispositif selon l'une des revendications 26 à 31, caractérisé par une mémoire (Sp) dans laquelle les densités des couleurs de catalogue sont stockées pour le système de reproduction de couleurs respectif au moyen d'un circuit comparateur qui compare les densités modèles déterminées (CM, MM, YM) avec les couleurs du catalogue, et par un circuit d'interpolation qui effectue une interpolation entre les couleurs de catalogue les plus proches et les densités d'extraction de couleur qui ont été déterminées.

33. Dispositif selon l'une des revendications 26 à 32, caractérisé par un moniteur travaillant selon le principe du mélange additif des couleurs, qui est raccordé par l'intermédiaire de réseaux d'adaptation correspondants aux entrées destinées aux signaux de couleurs primaires (X, Y, Z) du premier circuit de matrice (M,).
